# EUROPEAN PATENT APPLICATION

(11) **EP 4 600 868 A1**
(43) Date of publication of application: **13.08.2025**
(21) Application number: 25156103.1
(22) Date of filing: 05.02.2025
(51) Int. Cl.: G06N 3/0464, G06N 3/063

(54) **ELEMENTWISE OPERATIONS HARDWARE ACCELERATOR FOR A NEURAL NETWORK ACCELERATOR**

(30) Priority: 06.02.2024 GB 202401603
(71) Applicant: Imagination Technologies Limited, Kings Langley, Hertfordshire WD4 8LZ (GB)
(72) Inventor: Vines, Alan Edward, Kings Langley, WD4 8LZ (GB); Mills, James Frederick, Kings Langley, WD4 8LZ (GB); Hough, David, Kings Langley, WD4 8LZ (GB)
(74) Representative: Slingsby Partners LLP

(57) **Abstract**

An elementwise operations hardware accelerator for use in a neural network accelerator. The elementwise operations hardware accelerator comprises one or more processing pipelines and a control module. Each processing pipeline includes: an arithmetic logic unit module comprising a plurality of different arithmetic logic unit blocks, each arithmetic logic unit block of the plurality of arithmetic logic unit blocks configured to receive one or more inputs, selectively perform one or more elementwise operations on the one or more inputs, and output a result of the one or more elementwise operations; and an interconnection module configured to receive elements of one or more input tensors and selectively provide the elements of at least one of the one or more input tensors to an arithmetic logic unit block of the plurality of arithmetic logic unit blocks as an input; The control module is configured to receive a set of commands identifying an arithmetic logic unit block of the plurality of arithmetic logic unit blocks and one or more elementwise operations to be performed by the identified arithmetic logic unit block and control the operation of the one or more processing pipelines to cause the identified arithmetic logic unit block to perform the identified one or more elementwise operations.

## Description

### CROSS-REFERENCE TO RELATED APPLICATION

This application claims priority from UK patent application GB2401603.2, filed on 6 February 2024, which is herein incorporated by reference in its entirety.

### TECHNICAL FIELD

This application is directed to hardware accelerators for accelerating elementwise operations on a tensor of data, which may be referred to as elementwise operations hardware accelerators, and specifically elementwise operations hardware accelerators for use in neural network accelerators.

### BACKGROUND

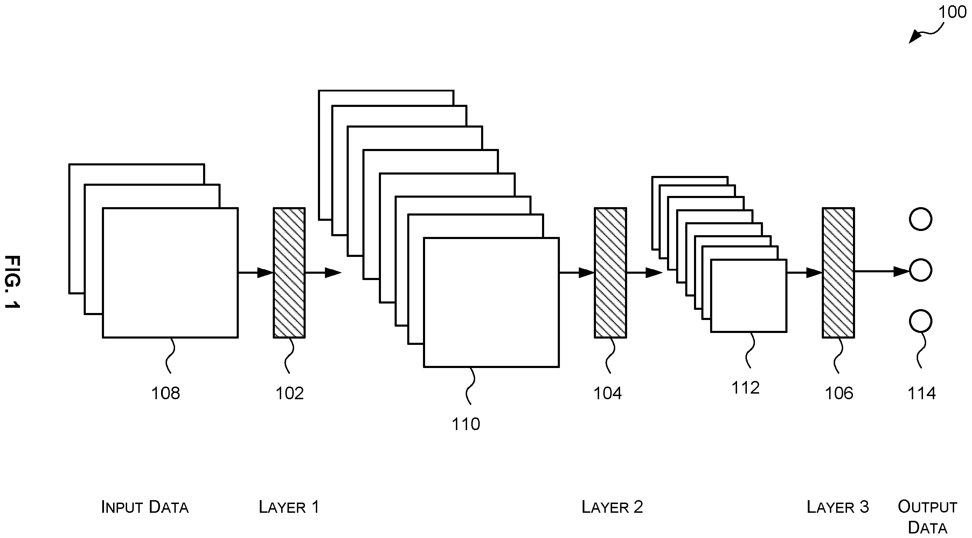

An artificial neural network (ANN), which will be referred to herein as a neural network, comprises one or more interconnected layers that can be used for machine learning applications. In particular, a neural network can be used in signal processing applications, including, but not limited to, image processing and computer vision applications. FIG. 1 illustrates an example neural network 100 that comprises a plurality of layers 102, 104, 106. Each layer 102, 104, 106 receives input data, and processes the input data in accordance with the layer to produce output data. The output data is either provided to another layer as the input data or is output as the final output data of the neural network. For example, in the neural network 100 of FIG. 1, the first layer 102 receives the original input data 108 to the neural network 100 and processes the input data in accordance with the first layer 102 to produce output data 110. The output data 110 of the first layer 102 becomes the input data to the second layer 104, and the second layer 104 processes the input data 110 in accordance with the second layer 104 to produce output data 112. The output data 112 of the second layer 104 becomes the input data to the third layer 106, and the third layer 106 processes the input data 112 in accordance with the third layer 106 to produce output data 114. The output data 114 of the third layer 106 is then output as the final output data of the neural network. Where the neural network is used for classification, the final output data may be a vector of length A, wherein A is the number of classes and each value in the vector represents the probability of a certain class.

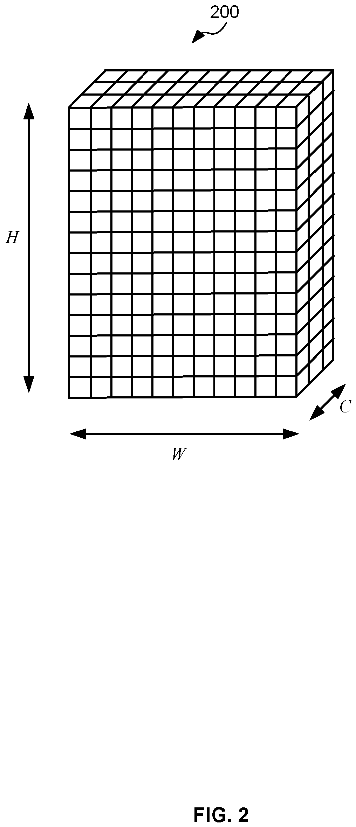

The data input to and output from a layer of a neural network can be described as a tensor. As is known to those of skill in the art, a tensor is a generalization of vectors and matrices and can be considered as an n-dimensional array. A vector is a one-dimensional tensor, and a matrix is a two-dimensional tensor. The tensors in a neural network are often, but are not necessarily, four-dimensional. Reference is made to FIG. 2 which illustrates an example four-dimensional (4D) tensor 200 in which one dimension (e.g. corresponding to the batch size) has been suppressed for visualisation purposes. The 4D tensor 200 may be described as comprising one or more 3D tensors, wherein each 3D tensor comprises C planes of data, where each plane has a dimension *W × H.* Each plane may be referred to as a channel of the tensor. The number of 3D tensors may be referred to as the batch size. Each 3D tensor may be, for example, an image. An element of a tensor may be referred to as a tensel, akin to how an element of a picture is referred to as a pixel.

The processing that is performed on the input tensor to a layer depends on the type of layer. For example, each layer of a neural network may be one of a plurality of different types. Example neural network layer types include, but are not limited to, a convolution layer, an activation layer, a normalisation layer, a pooling layer, a fully connected layer, and a batch normalisation layer. It will be evident to a person of skill in the art that these are example neural network layer types and that this is not an exhaustive list and there may be other neural network layer types.

A convolution layer convolves the input tensor with weights associated with the layer. Specifically, each convolution layer is associated with a plurality of weights *k*₁ ... *k_{g},* which may also be referred to as filter weights or coefficients. The weights are grouped to form one or more filters or kernels, and each filter may be associated with an offset bias *bias.* Each filter may have a dimension *K_{W}* x *K_{H}* x *Cᵢₙ* (i.e., each filter may comprise a set of *K_{W} x K_{H}* x *Cᵢₙ* weights *k*), where *Cᵢₙ* is the number of channels in the input tensor. Each filter may be applied to the input tensor according to a convolution operation across steps *s_{W}* and *s_{H}* in the *W* and *H* directions. The step sizes *s_{W}* and *s_{H}* may be referred to as the strides of the convolution. The number and dimensions of filters and/or the number of weights per filter may vary between convolution layers. A convolutional neural network (CNN), which is a specific type of neural network that is effective for image recognition and classification, generally comprises a plurality of convolution layers.

An activation layer, which often, but not necessarily, follows a convolution layer, applies one or more activation functions to the input tensor. An activation function receives an input tensor and performs a certain non-linear mathematical operation on each value or element in the input tensor. In other words, the activation function operates on each value or element in the input tensor separately. In some examples, an activation layer may act as rectified linear unit (ReLU) by implementing a ReLU function or a leaky rectified linear unit (LReLU) by implementing a LReLU function.

A normalisation layer is configured to perform a normalising function, such as a Local Response Normalisation (LRN) function on the input tensor.

A pooling layer performs a pooling function, such as a max, min or average function, to summarise subsets of the input tensor. The purpose of a pooling layer is thus to reduce the spatial size of the representation to reduce the number of parameters and computation in the network, and hence to also control overfitting.

A fully connected layer, which often, but not necessarily, follows a plurality of convolution and pooling layers, takes a two-dimensional tensor (e.g. a tensor with a batch size and a channel dimension) of input data values and outputs a two-dimensional tensor (e.g. a tensor with a batch size dimension and a channel dimension). Where the DNN is used for classification, the output may have A channels where A is the number of classes, and each value in the tensor may represent the probability of a certain class. The output tensor is generated through a matrix multiplication of a set of weights, optionally followed by a bias offset. A fully connected layer thus receives a set of weights and may receive a bias.

A batch normalisation (often referred to as "batch norm") layer, which often, but not necessarily, follows a convolution layer, applies a per channel affine transformation to an input tensor. Batch normalisation layers may be added to a neural network to make training of the neural network faster and more stable by normalisation of a subsequent layer's inputs by re-centring and re-scaling.

Neural networks are often expensive to implement in terms of computation, bandwidth and power. Accordingly, neural network accelerators (NNAs) have been developed that allow neural networks to be implemented in an efficient manner (e.g., in a manner that requires less silicon area or less processing power).

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Described herein are elementwise operations hardware accelerators for use in a neural network accelerator. The elementwise operations hardware accelerators comprise one or more processing pipelines and a control module. Each processing pipeline includes: an arithmetic logic unit module comprising a plurality of different arithmetic logic unit blocks, each arithmetic logic unit block of the plurality of arithmetic logic unit blocks configured to receive one or more inputs, selectively perform one or more elementwise operations on the one or more inputs, and output a result of the one or more elementwise operations; and an interconnection module configured to receive elements of one or more input tensors and selectively provide the elements of at least one of the one or more input tensors to an arithmetic logic unit block of the plurality of arithmetic logic unit blocks as an input. The control module is configured to receive a set of commands identifying an arithmetic logic unit block of the plurality of arithmetic logic unit blocks and one or more elementwise operations to be performed by the identified arithmetic logic unit block and control the operation of the one or more processing pipelines to cause the identified arithmetic logic unit block to perform the identified one or more elementwise operations.

A first aspect provides an elementwise operations hardware accelerator for use in a neural network accelerator, the elementwise operations hardware accelerator comprising: one or more processing pipelines, each processing pipeline comprising: an arithmetic logic unit module comprising a plurality of different arithmetic logic unit blocks, each arithmetic logic unit block of the plurality of arithmetic logic unit blocks configured to receive one or more inputs, selectively perform one or more elementwise operations on the one or more inputs, and output a result of the one or more elementwise operations; and an interconnection module configured to receive elements of one or more input tensors and selectively provide the elements of at least one of the one or more input tensors to an arithmetic logic unit block of the plurality of arithmetic logic unit blocks as an input; a control module configured to receive a set of commands identifying an arithmetic logic unit block of the plurality of arithmetic logic unit blocks and one or more elementwise operations to be performed by the identified arithmetic logic unit block and control the operation of the one or more processing pipelines to cause the identified arithmetic logic unit block to perform the identified one or more elementwise operations.

The plurality of arithmetic logic unit blocks may comprise a bitwise arithmetic logic unit block configured to receive a first input and a second input and selectively perform a bitwise operation of one or more bitwise operations on one of (i) the first input, and (ii) the first input and the second input.

The one or more bitwise operations may comprise one or more of: OR, NOT, AND, and XOR.

The plurality of arithmetic logic unit blocks may comprise a format conversion arithmetic logic unit block that is configured to receive an input in a first number format and convert that input to a second number format.

The first number format may be one of a fixed point number format and a floating point number format and the second number format is the other of the fixed point number format and the floating point number format.

The plurality of arithmetic logic unit blocks may comprise a division, square root, modulo arithmetic logic unit block that is configured to receive a first input and a second input and selectively determine a result of one of: the first input divided by the second input, a square root of the first input, and the first input modulo the second input.

The plurality of arithmetic logic unit blocks may comprise a floating point multiply arithmetic logic unit block that is configured to receive a first floating point input and a second floating point input and generate a product of the first floating point input and the second floating point input.

The plurality of arithmetic logic unit blocks may comprise a select-compare arithmetic logic unit block that is configured to receive a first input, a second input, a third input, and a fourth input and compare the first input and second input using one of one or more comparison operators, and output one of the third input and the fourth input based on the comparison.

The one or more comparison operators may comprise one or more of: equal to, greater than, greater than or equal to, less than, and less than or equal to.

The one or more comparison operators may comprise equal to and the select-compare arithmetic logic unit block may be configured to receive a fifth input and, prior to comparing the first input and the second input using the equal to comparison operator, perform (i) an AND operation between the first input and the fifth input and (ii) an AND operation between the second input and the fifth input.

The plurality of arithmetic logic unit blocks may comprise a floating point add arithmetic logic unit block that is configured to receive a first floating point input and a second floating point input and generate a sum of the first floating point input and the second floating point input.

The plurality of arithmetic logic unit blocks may comprise a fixed point multiply-add arithmetic logic unit block that is configured to receive a first input, a second input, and a third input and generate a sum of (i) a product of the first input and the second input, and (ii) the third input.

The interconnection module may be configured to dynamically connect an input source of a plurality of input sources to each input of a desired arithmetic logic unit block, the plurality of input sources comprising the one or more input tensors, one or more scalars, and one or more default values.

The one or more scalars may be identified in the set of commands.

The one or more input tensors may comprise at least three input tensors.

Each processing pipeline may further comprise an input module that includes an input pipeline for each of the one or more input tensors, and each input pipeline may be configured to selectively perform one or more pre-processing operations on the elements of the corresponding input tensor prior to providing the elements of the input tensor to the interconnection module.

The one or more pre-processing operations may comprise one or more of: conversion from a first fixed point number format to a second fixed point number format; negation; addition of a configurable offset; and broadcasting elements of the input tensor in one or more dimensions.

Each input pipeline may be configurable to perform at least one of the one or more pre-processing operations on elements of the input tensor in a fixed point number format and on elements of the input tensor in a floating point number format.

Each processing pipeline may further comprise an output module that includes an output pipeline configured to selectively perform one or more post-processing operations on the results output by the arithmetic logic unit module.

The one or more post-processing operations may comprise one or more of: conversion from a first fixed point number format to a second fixed point number format, negation, and clamping to a configurable bit depth.

A second aspect provides a neural network accelerator comprising the elementwise operations hardware accelerator of the first aspect.

The elementwise operations hardware accelerators and/or the neural network accelerators described herein may be embodied in hardware on an integrated circuit. There may be provided a method of manufacturing, at an integrated circuit manufacturing system, an elementwise operations hardware accelerator and/or a neural network accelerator described herein. There may be provided an integrated circuit definition dataset that, when processed in an integrated circuit manufacturing system, configures the system to manufacture an elementwise operations hardware accelerator and/or a neural network accelerator described herein. There may be provided a non-transitory computer readable storage medium having stored thereon a computer readable description of an elementwise operations hardware accelerator and/or a neural network accelerator described herein that, when processed in an integrated circuit manufacturing system, causes the integrated circuit manufacturing system to manufacture an integrated circuit embodying the elementwise operations hardware accelerator and/or the neural network accelerator.

There may be provided an integrated circuit manufacturing system comprising: a non-transitory computer readable storage medium having stored thereon a computer readable description of an elementwise operations hardware accelerator and/or a neural network accelerator described herein; a layout processing system configured to process the computer readable description so as to generate a circuit layout description of an integrated circuit embodying the elementwise operations hardware accelerator and/or the neural network accelerator; and an integrated circuit generation system configured to manufacture the elementwise operations hardware accelerator and/or the neural network accelerator according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
FIG. 1 is a schematic diagram of an example neural network;
FIG. 2 is a schematic diagram illustrating an example tensor;
FIG. 3 is a block diagram of a first example elementwise operations hardware accelerator;
FIG. 4 is a block diagram of an example input module;
FIG. 5 is a block diagram of an example ALU module for the elementwise operations hardware accelerator of FIG. 3;
FIG. 6 is a block diagram of an example output module;
FIG. 7 is a block diagram of an example interconnection module for the elementwise operations hardware accelerator of FIG. 3;
FIG. 8 is a block diagram of an example ALU block selection logic;
FIG. 9 is a block diagram of an example control module for the elementwise operations hardware accelerator of FIG. 3;
FIG. 10 is a block diagram of a second example elementwise operations hardware accelerator;
FIG. 11 is a block diagram of an example ALU module for the elementwise operations hardware accelerator of FIG. 10;
FIG. 12 is a block diagram of an example interconnection module for the elementwise operations hardware accelerator of FIG. 10;
FIG. 13 is a block diagram of an example tensor storage unit;
FIG. 14 is a block diagram of an example control module for the elementwise operations hardware accelerator of FIG.10;
FIG. 15 is a block diagram of an example neural network accelerator in which any of the elementwise operations hardware accelerators described herein may be implemented;
FIG. 16 is a block diagram of an example implementation of the convolution accelerator of FIG. 15;
FIG. 17 is a block diagram of an example convolution engine;
FIG. 18 is a block diagram of a computer system in which any of the elementwise operations hardware accelerators and/or the neural network accelerators described herein may be implemented; and
FIG. 19 is a schematic diagram of integrated circuit manufacturing system for generating an integrated circuit embodying any of the elementwise operations hardware accelerators and/or the neural network accelerators described herein.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

As described above, neural networks are often expensive to implement in terms of computation, bandwidth and power. Accordingly, neural network accelerators (NNAs) have been developed that allow neural networks to be implemented in an efficient manner (e.g., in a manner that requires less silicon area or less processing power).

An NNA is hardware that is designed to accelerate the processing of a neural network. As is known to those of skill in the art, a hardware accelerator is hardware designed to perform a specific set of one or more functions more efficiently than a general processing unit, such as a central processing unit (CPU). Accordingly, in contrast to a general CPU which can be configured to perform any number of functions or operations, an accelerator can only perform a limited set of one or more functions or operations. NNAs comprise one or more hardware accelerators designed to accelerate one or more neural network operations. Therefore a graphics processing unit (GPU) with one or more hardware accelerators designed to accelerate one or more neural network operations can be understood to be an NNA. A neural network operation is defined herein as an operation that is used to implement all or a part of a neural network layer. A neural network layer may be implemented by one or more neural network operations. Example neural network operations include, but are not limited to, convolution operations, non-linear activation operations, pooling operations and normalisation operations.

An NNA may therefore have, for example, a convolution accelerator which is configured to accelerate convolution operations, an activation accelerator which is configured to accelerate non-linear activation operations, a pooling accelerator which is configured to accelerate pooling operations, and/or a normalisation accelerator configured to accelerate normalisation operations. As neural networks become more complicated different layers or operations have been added thereto. Accordingly, neural network accelerators may have additional accelerators to accommodate these new layers and/or operations. For example, a neural network accelerator may also have an elementwise operations hardware accelerator that can perform elementwise operations on an input tensor. It will be evident to a person of skill in the art that this is just an example set of accelerators that an NNA may have, and NNAs may have additional accelerators, fewer accelerators or a different combination of accelerators.

An elementwise operations hardware accelerator (which may also be referred to herein as an elementwise operations accelerator) is hardware that is configured to accelerate elementwise operations on an input tensor. Performing an elementwise operation on a tensor means performing the same operation (e.g. multiply, add, subtract, minimum, maximum) on each element of tensor. For example, in a very simple case, an elementwise operation may add 5 to each element of the input tensor.

Described herein are new elementwise operations hardware accelerators for use in a neural network accelerator which have additional capabilities compared to the elementwise operations hardware accelerators known to the Applicant. Accordingly, described herein is new hardware.

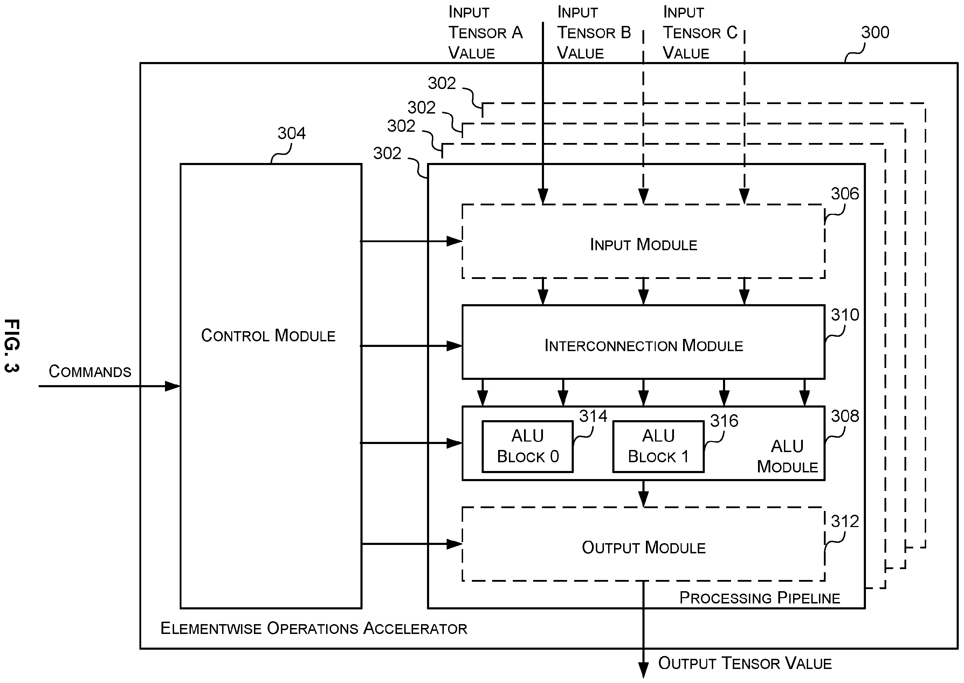

Reference is now made to FIG. 3 which illustrates a first example elementwise operations accelerator 300 which comprises a plurality of different arithmetic logic unit (ALU) blocks. Each ALU block is configured to receive one or more inputs, perform one or more elementwise operations (e.g. logical and/or mathematical operations) on the received input(s), and output the results of the one or more elementwise operations. Elements of an input tensor can be dynamically provided to one of the ALU blocks as an input so that a desired set of one or more elementwise operations can be performed thereon.

Each ALU block may be configured to accelerate a different group of elementwise operations and/or in a different format from the other ALU blocks. Elementwise operations accelerators known to the Applicant, which is not an admission that they are well-known, have only a single ALU block that can perform fixed point multiplication and/or addition. A neural network accelerator (NNA) with such an elementwise operations accelerator may be significantly restricted in the types of neural networks that can be executed completely on the NNA. Specifically, such a neural network accelerator would not be able to implement a neural network that comprises other elementwise operations or elementwise operations in other formats without assistance from an external unit, such as a CPU or other general purpose hardware. Specifically, when an elementwise operation that cannot be executed by the elementwise operations accelerator occurs in a neural network the execution of the neural network on the NNA may have to be halted until an external unit executes the required elementwise operation. Not only can it take some time for the external unit to execute the required elementwise operation, creating a delay in executing the neural network, but there can be a significant overhead in terms of bandwidth to send the data to be processed to the external unit and the send the results of the elementwise operation back to the NNA. This can make executing such neural networks on the NNA very inefficient. Having multiple ALU blocks that can perform different operations and/or operations in a different format expands the capability of the elementwise operations accelerator and allows a neural network accelerator with such an elementwise operations accelerator to be able to execute a more varied set of neural networks in an efficient manner without the assistance of an external unit, such as a CPU.

The example elementwise operations accelerator 300 of FIG. 3 comprises one or more processing pipelines 302; and a control module 304 which controls the operation of the processing pipeline(s) 302 in response to a set of commands. Each processing pipeline 302 receives elements of a main input tensor and performs a selected set of one or more elementwise operations on the received elements of the main tensor, optionally using one or more secondary input tensors. In some cases, the elementwise operations accelerator 300 has multiple processing pipelines to allow multiple elements of the main input tensor to be processed at the same time. Where an elementwise operations accelerator 300 has multiple processing pipelines 302, each processing pipeline 302 may be configured in the same manner - e.g. to perform the same set of one or more elementwise operations - such that the same control information can be sent to all of the processing pipelines 302. In this way the plurality of processing pipelines 302 can act as a single instruction multiple data (SIMD) processor. In some cases, each processing pipeline 302 may be able to receive data corresponding to one element of a tensor at time. In such cases, the number of processing pipelines 302 may be equal to the number of elements the elementwise operations accelerator 300 can receive data for at the same time. For example, if the elementwise operations accelerator 300 can receive data for up to eight elements of an input tensor at the same time, then the elementwise operations accelerator 300 may comprise eight processing pipelines 302.

In the example shown in FIG. 3, each processing pipeline 302 comprises an arithmetic logic unit (ALU) module 308 and an interconnection module 310. In some cases, each processing pipeline 302 may also comprise an input module 306 and/or an output module 312.

The ALU module 308 comprises a plurality of different ALU blocks 314, 316. Each ALU block 314, 316 comprises digital logic circuitry that is configured to accelerate one or more elementwise operations (e.g. mathematical and/or logical elementwise operations). Specifically, each ALU block 314, 316 is configured to receive one or more inputs, selectively perform one or more elementwise operations on the received input(s), and output the result of the one or more elementwise operations. One or more of the ALU blocks 314, 316 may be able to perform multiple elementwise operations, and/or one or more of the ALU blocks may be able to perform only one elementwise operation. Where an ALU block can perform multiple different elementwise operations the ALU block may be able to perform two or more of the elementwise operations sequentially on the same input (e.g. an ALU block may be able to perform a multiplication followed by an addition) or the ALU block may be able to perform only one of the supported elementwise operations on the same input (e.g. an ALU block may be able to perform one of an AND operation, and an OR operation). Where an ALU block can perform multiple different elementwise operations the ALU block may be configured to receive information indicating which of the different elementwise operations are to be performed.

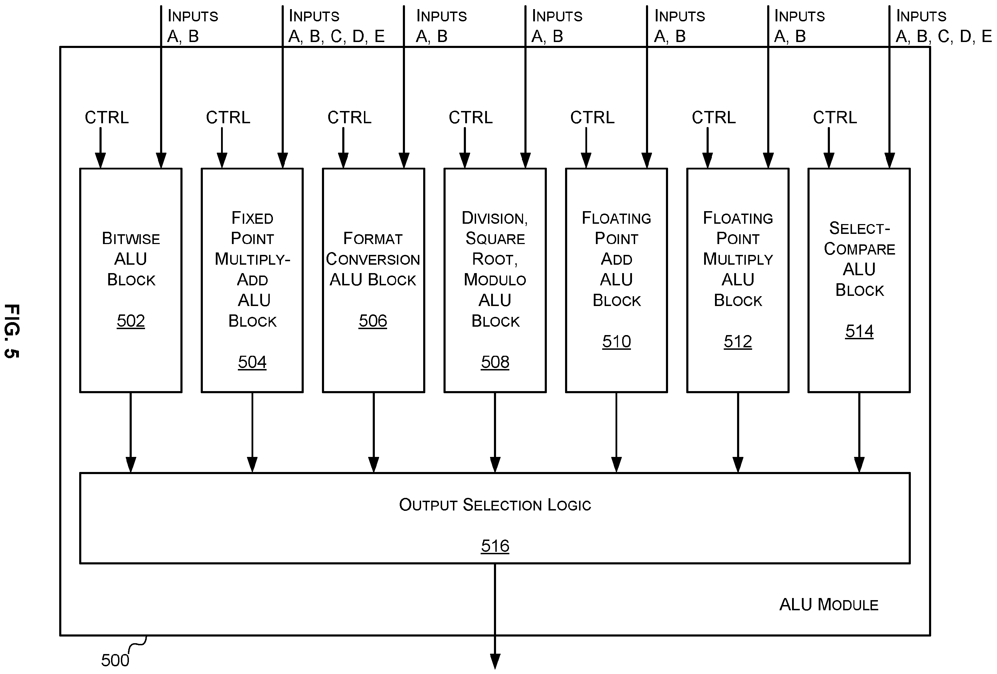

Each ALU block 314, 316 may be configured to accelerate different elementwise operations (e.g. a different group of logical and/or mathematical elementwise operations) and/or in a different number format (e.g. fixed point number format or floating point number format) from the other ALU blocks 314, 316. For example, one ALU block may be configured to accelerate floating point multiplication, whereas another ALU block may be configured to accelerate fixed point multiplication and/or addition. An example set of ALU blocks which may form part of the ALU module 308 is described below with respect to FIG. 5. In the example shown in FIG. 3, there are two ALU blocks 314, 316. However, it will be evident to a person of skill in the art that this is only an example, and that the ALU module 308 may comprise two ALU blocks or more than two ALU blocks. In some cases, the outputs generated by the ALU blocks 314, 316 may be directly output from the elementwise operations accelerator 300. However, in other cases, as shown in FIG. 3, the ALU module 308 may be configured to first provide the results of the set of one or more elementwise operations generated by the ALU blocks 314, 316 to an output module 312 which may selectively perform one or more post processing operations on the outputs of the ALU blocks 314, 316.

The interconnection module 310 comprises digital logic circuitry configured to receive elements of one or more input tensors and provide, in response to control information, the received elements as the input to one of the plurality of ALU blocks 314, 316. For example, in one case the control information may cause the interconnection module 310 to provide the elements of the input tensor(s) to a first ALU block 314 for processing, and in another case the control information may cause the interconnection module 310 to provide the elements of the input tensor(s) to a second, different ALU block 316 for processing.

The one or more input tensors may comprise a main input tensor on which a set of one or more elementwise operations is to be performed. In some cases, the one or more input tensors may also comprise one or more secondary input tensors which can be used to perform the elementwise operation on the main or primary input tensor. For example, the elements of the main or input tensor may be added to the corresponding element of a secondary input tensor; or the elements of the main input tensor may be compared bitwise to the corresponding element of a secondary input tensor. Elementwise operations accelerators known to the Applicant, which is not an admission that they are well known, can receive up to two input tensors (a main input tensor and a single secondary input tensor). In some examples, the elementwise operations accelerator 300 may be able to receive three input tensors (which may be referred to as input tensors A, B and C) which allows the elementwise operations accelerator 300 to receive a main input tensor and up to two secondary input tensors. In some cases, where the elementwise operations accelerator can receive multiple input tensors, any of the input tensors (e.g., any of input tensors A, B and C) may be identified as the main or primary input tensor. Increasing the number of secondary input tensors that can be received increases the number and type of elementwise operations that can be performed by the elementwise operations accelerator 300.

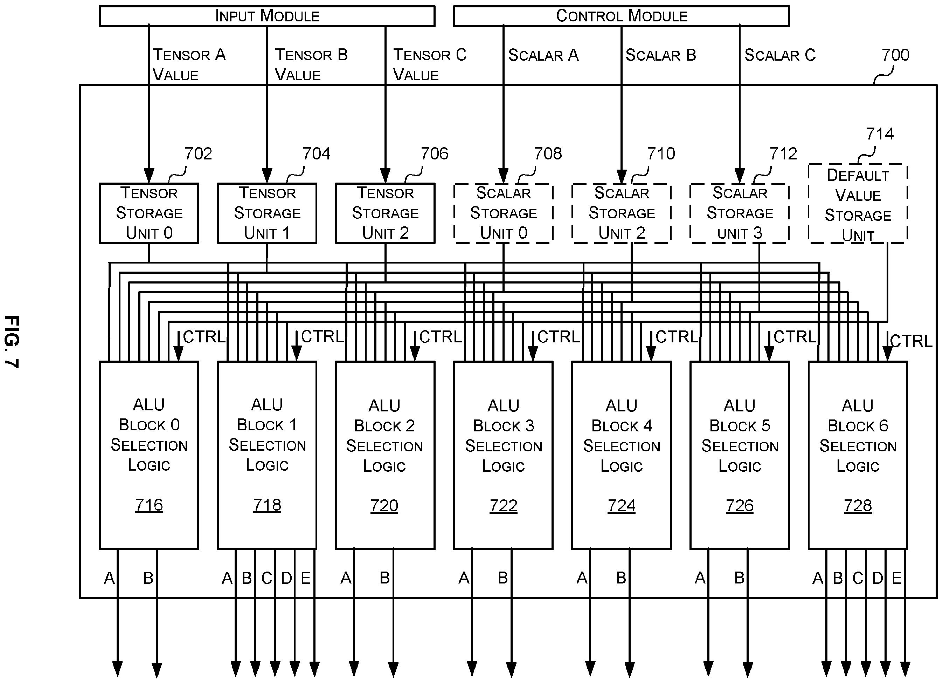

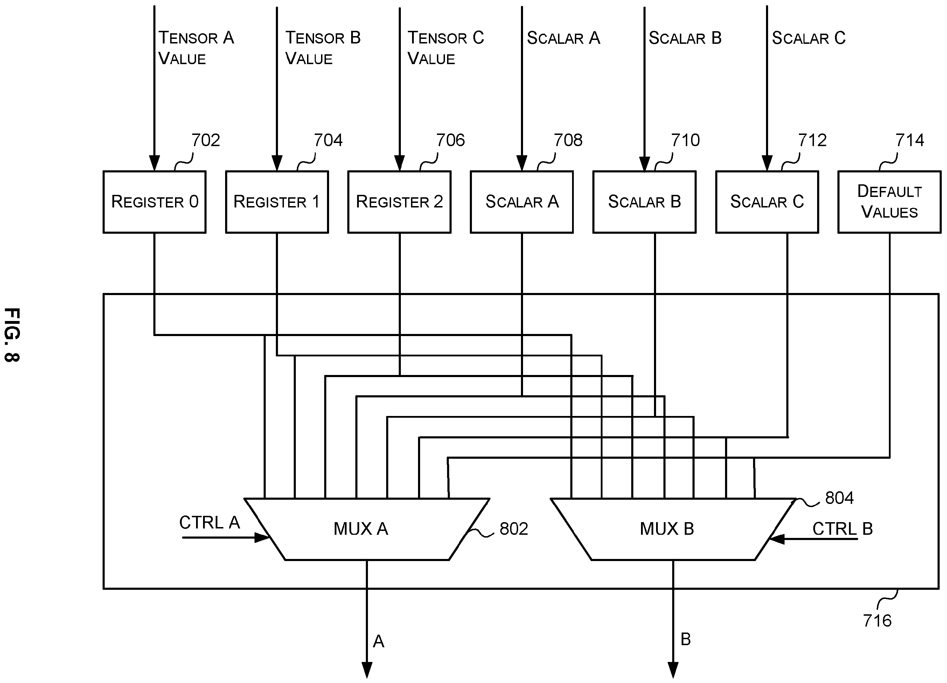

The interconnection module 310 may comprise switching logic (e.g. demultiplexers and/or multiplexers) that can dynamically provide the received elements of the input tensor(s) to a desired ALU block of the plurality of ALU blocks. In some cases, the interconnection module 310 may also comprise one or more storage units for temporarily storing the elements of the input tensor(s) prior to providing them to an ALU block 314, 316 for processing. An example interconnection module which may be used to implement the interconnection module 310 of FIG. 3 is described below with respect to FIGS. 7 and 8.

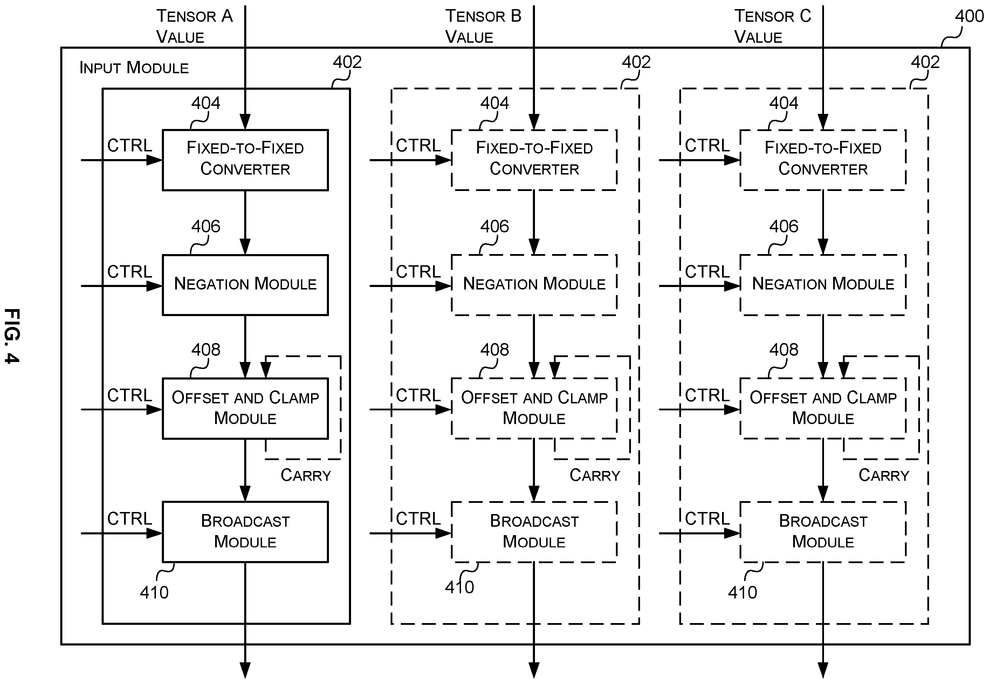

In some cases, each processing pipeline 302 may also comprise an input module 306 that comprises digital logic circuitry that can optionally or selectively perform one or more pre-processing operations on the elements of the main input tensor prior to providing the elements of the main input tensor to the interconnection module 310. The one or more pre-processing operations may include, but are not limited to, fixed-point to fixed-point conversion (e.g. scaling), negation, addition of a fixed offset (e.g. scalar) and clamping, and/or broadcasting (e.g. expanding the tensor in one or more dimensions). Where one or more secondary input tensors can be received at the elementwise operations accelerator 300, the input module 306 may be able to optionally, or selectively, perform pre-processing on each of the secondary input tensors. An example input module that may be used to implement the input module 306 of FIG. 3 is described with respect to FIG. 4.

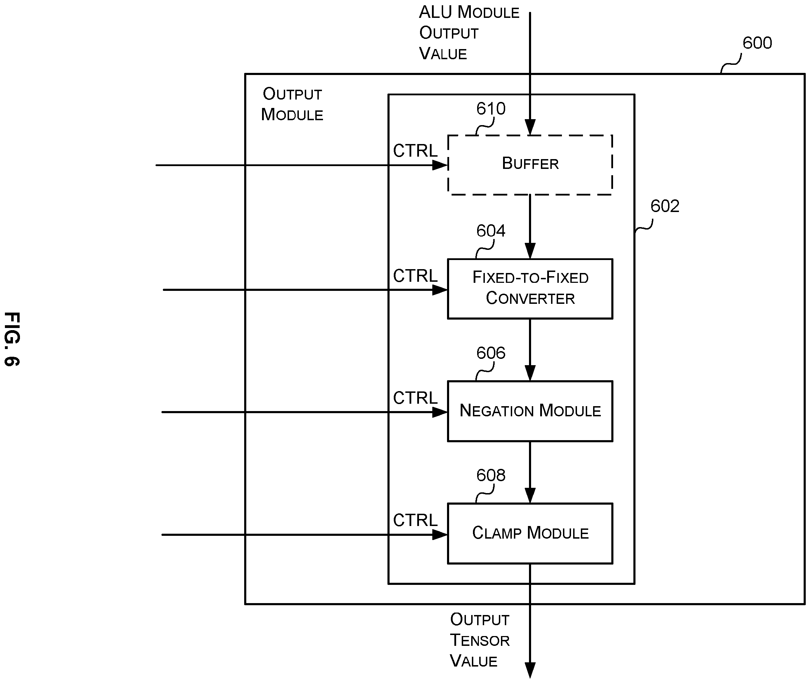

In some cases, each processing pipeline 302 may further comprise an output module 312 that is configured to receive results output from the ALU module 308 and selectively perform one or more post-processing operations on the results prior to outputting the results from the elementwise operations accelerator 300. The post-processing operations may include, but are not limited to, one or more of fixed-to-fixed conversion (e.g. scaling), negation and clamping to a desired bit width. An example output module which may be used to implement the output module 312 of FIG. 3 is described below with respect to FIG. 6.

The control module 304 is configured to receive a set of commands and control the operation of the one or more processing pipelines 302 (e.g. ALU modules 308, interconnection modules 310 and, optionally the input modules 306 and output modules 312 thereof) in accordance with the set of commands. The set of commands comprise information indicating an ALU block of the plurality of ALU blocks and information indicating the set of one or more operations that the identified ALU block is to perform. In response to receiving a set of commands, the control module 304 is configured to cause the interconnection module 310 to provide elements of at least one of the inputs tensors to the identified ALU block and cause the identified ALU block to perform the identified set of one or more elementwise operations on the received elements. For example, if the ALU module 308 comprises an ALU block that can perform floating point addition, and the set of commands indicate that the elements of the main input tensor, input tensor A, are to be added (via floating point addition) to the corresponding elements of a secondary input tensor, input tensor B, then the control module 304 may be configured to cause the interconnection module 310 to provide the received elements of input tensors A and B to the floating point addition ALU block and cause the floating point addition ALU block to add the two elements together.

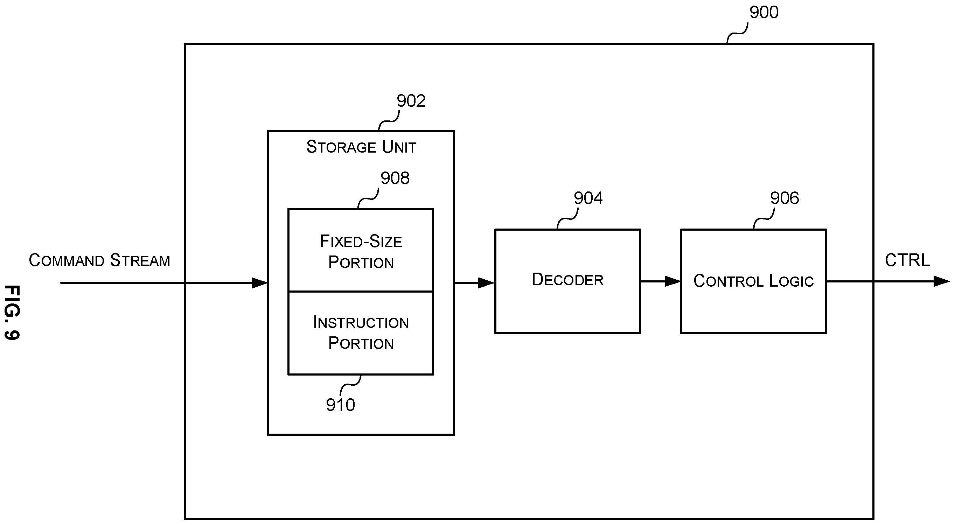

The set of commands may also comprise information indicating the settings for any configurable options. For example, the set of commands may identify one or more of: the number of input tensors being received; which pre-processing operations are to be performed on each input tensor (if there is an input module); and which post-processing operations are to be performed on the results generated by the ALU module (if there is an output module). An example control module and an example set of commands are described below with respect to FIG. 9.

Reference is now made to FIG. 4 which illustrates an example input module 400 which may be used to implement the input module 306 of FIG. 3. The input module 400 of FIG. 4 comprises an input pipeline 402 for each input tensor that can be input to the elementwise operations accelerator. For example, if the elementwise operations accelerator can only receive elements of a single input tensor (e.g. the main input tensor) then the input module 400 may comprise a single input pipeline 402 for processing elements of that input tensor. In contrast, if the input module 400 can receive elements from three different input tensors (e.g. input tensors A, B and C) then the input module 400 may comprise three input pipelines 402.

In some cases, each input pipeline 402 may only be able to receive elements in a specific number format (e.g. a fixed point number format or a floating point number format). However, in other cases, each input pipeline 402 may be able to receive elements of a corresponding input tensor in one of a plurality of different number formats. For example, in some cases, each input pipeline 402 may be able to receive elements of an input tensor in a fixed point number format or a floating point number format. In such cases, the set of commands received at the control module 304 may indicate the number format of the elements of the input tensor and the control module 304 may be configured to notify the input module 400 of the number format of the elements of each input tensor.

In some cases, each input pipeline 402 may only be able to receive a predetermined number of bits, J, of an input tensor element at the same time, wherein J is an integer greater than or equal to one. For example, each input pipeline 402 may only be able to receive 32 bits of an element at the same time. In some cases, each input pipeline 402 may only be able to receive elements with a maximum of J-bits (e.g. 32 bits). However, in other cases, each input pipeline 402 may be able to receive J-bit elements or K-bit elements, wherein K is an integer that is double J (i.e. K=2*J). For example, each input pipeline 402 may be able to receive 32-bit elements or 64-bit elements of an input tensor. Since each input pipeline 402 can only receive J bits of an element at the same time, when the input tensor elements are K-bits, the least significant J bits may be received in a first cycle, and the most significant J bits may be received in a subsequent cycle (e.g. the next cycle).

Each input pipeline 402 comprises one or more pre-processing modules 404, 406, 408, 410 for performing pre-processing on the elements received for the corresponding input tensor. In the example shown in FIG. 4 each input pipeline 402 comprises a fixed-to-fixed converter 404, a negation module 406, an offset and clamp module 408 and a broadcast module 410. However, this is only an example set of pre-processing modules and other input pipelines may comprise a different combination of pre-processing modules. For example, an input pipeline may only comprise one of the pre-processing modules shown in FIG. 4, only two of the pre-processing modules shown in FIG. 4, or only three of the pre-processing modules shown in FIG. 4. Each pre-processing module 404, 406, 408, 410 may be selectively enabled or disabled on a per tensor basis. For example, for input tensor A, the fixed-to-fixed converter 404 may be enabled and the other pre-processing modules may be disabled. However, for input tensor B the fixed-to-fixed converter 404 may be disabled and the negation module 406 and the broadcast module 410 may be enabled. Where the pre-processing modules 404, 406, 408, 410 may be selectively enabled and disabled, the set of commands received at the control module 304 may comprise information indicating which pre-processing modules are to be enabled for each input tensor and the control module 304 is configured to provide information to the input pipelines indicating which of the pre-processing modules are to be enabled. FIG. 4 shows an example ordering of the pre-processing modules within an input pipeline 402, however, it will be evident to a person of skill in the art that the pre-processing modules can be in any order within the input pipeline 402.

The fixed-to-fixed converter 404 comprises digital logic circuitry configured to receive an element in a first fixed point number format and represent that element in a second fixed point number format. In some cases, the fixed-to-fixed converter 404 may be configured to receive elements in a first fixed point number format defined by a first exponent (*EXPx*) and a first integer bit-width and convert the received elements to a second fixed point number format with the same integer bit-width (the first integer bit-width) and a second, different exponent (*EXPy*) by scaling the received values by 2*^{EXPx-EXPy}.* In such cases, the fixed-to-fixed converter 404 may be configured to perform the scaling by shifting the received element left by *EXPx* - *EXPy* and clamping the output to the first integer bit-width.

The fixed-to-fixed converter 404 may receive control information (CTRL) indicating whether the fixed-to-fixed converter 404 is enabled and if so, indicating the conversion that is to be performed. For example, in some cases the control information (CTRL) may comprise information identifying the first and second fixed point number formats (e.g. *EXPx* and *EXPy*)*.* In other cases, the control information (CTRL) may comprise information identifying a difference between the first and second fixed point number formats (e.g. *EXPx* and *EXPy*)*.* For example, the control information (CTRL) may comprise information identifying *ΔEXP* wherein Δ*EXP* = *EXPx* - *EXPy.*

Since the fixed-to-fixed converter 404 performs a conversion between fixed-point number formats, where the input pipeline 402 can receive elements of a tensor in a fixed-point format or a floating point format, the fixed-to-fixed converter 404 may only be enabled if the received elements are in a fixed-point number format. In some cases, where the input pipeline can support both J-bit and K-bit elements, to simplify the fixed-to-fixed converter, the fixed-to-fixed converter 404 may only be able to perform the conversion for J-bit elements (e.g. 32-bit elements).

The negation module 406 comprises digital logic circuitry configured to receive an element and output an element with the same magnitude, but the opposite sign (i.e., perform a negation operation on the received element). In other words, the negation module 406 is configured to multiply a received element by -1 and output the result of the multiplication. The negation module 406 may be able to implement the negation (multiplication by -1) in any suitable manner. Where the negation module 406 can receive an element in fixed point number format or floating point number format, the negation module 406 may be configured to perform the negation differently depending on whether the received element is in a fixed point number format or a floating point number format. For example, if the received element is in a fixed point number format that uses a two's complement format for the integer component thereof, the negation module 406 may be configured to perform the negation by inverting all of the bits of the received element and adding 1; and if the received element is in a floating point format the negation module 406 may be configured to perform the negation by flipping or reversing the sign bit.

The negation module 406 may receive control information (CTRL) that comprises information indicating whether the negation module 406 is enabled and if so, may comprise information indicating how the negation module 406 is to perform the negation. For example, in some cases, the control information (CTRL) may comprise information indicating whether the received elements are in a fixed-point number format or a floating point number format.

Where the received elements can be J-bits or K-bits then, to simplify the negation module 406, the negation module 406 may only be able to perform a negation on a J-bit fixed point element, a J-bit floating point element or a K-bit floating point element. In other words, the negation module 406 may not be able to perform negation on a K-bit fixed point element.

The offset and clamp module 408 comprises digital logic circuitry configured to add a configurable offset (e.g. scalar) to a received element and optionally clamp the output of the addition to a specific bit depth. The offset and clamp module 408 may receive control information (CTRL) that comprises information indicating whether the offset and clamp module 408 is enabled and if enabled, information indicating the offset that is to be applied to the received elements and whether the output of the addition is to be clamped. As is known to those of skill in the art, floating point computations can be complex to implement in hardware thus, in some cases, to simplify the complexity of the offset and clamp module 408, the offset and clamp module 408 may only be able to apply an offset to elements in a fixed point number format (i.e. the offset and clamp module 408 may only be able to perform fixed point addition). In such cases, where the elements of a tensor may be received in either a fixed point number format or a floating point number format, it may only be possible to enable the offset and clamp module 408 if the values of the tensor are received in a fixed point number format.

In some cases, the offset and clamp module 408 can receive J-bit or K-bit elements and offsets, and K-bit elements are received over two cycles. In these cases, the offset and clamp module 408 may comprise a carry feedback path that allows any carry resulting from adding the least significant J-bits of the input element with the least significant J-bits of the offset to be combined with the most significant J-bits of the input element and the most significant J-bits of the offset.

The broadcast module 410 comprises digital logic circuitry configured to expand the corresponding tensor in one or more dimensions. For example, if a tensor comprises only a single plane or channel, the elements in that plane or channel may be duplicated one or more times to generate a tensor with multiple channels. For example a tensor with dimensions [N, H, W, C] = [1, 10, 10, 1] may be expanded to a tensor with dimensions [N, H, W, C] = [1, 10, 10, 3] by generating two additional copies of each element in the single HxW plane. In some cases, the broadcast module 410 may be configured to expand a tensor in a dimension by outputting each received element multiple times. For example, to convert a tensor with only one plane to a tensor with three identical planes, the broadcast module 410 may be configured to output a received element three times before outputting the next received element. This causes the same element to be processed by the ALU block multiple times. However, different processing may be performed on the element each time.

In some cases, the elementwise operations hardware accelerator may be able to signal to the upstream component (i.e., the component providing the elements of the input tensor(s)) when it is ready to receive the next element (or next set of elements) of each of the input tensors. For example, the elementwise operations hardware accelerator may receive the elements of the input tensor(s) over a valid enable interface where the upstream component signals that it has data ready to send by raising a valid signal (e.g. by setting the valid signal to "1" where it is "0" otherwise), and the elementwise operations hardware accelerator signals it is ready to receive data by raising an enable signal (e.g. by setting the enable signal to "1" where it is "0" otherwise). When both the valid signal and an enable signal have been raised (e.g. are high/set to "1"), then the upstream component sends the next set of elements of the input tensor to the elementwise operations hardware accelerator. In such cases, when a broadcast module 410 for a specific input tensor is operating in broadcast mode, the elementwise operations hardware accelerator may be configured to only signal to the upstream component that it is ready to receive the next set of elements of the specific input tensor after the broadcast module has output a received element the desired number of times.

The broadcast module 410 is mostly likely to be used when the input tensors have different dimensions. For example, if one input tensor has dimensions [N, H, W, C] = [1, 10, 10, 1] and another input tensor has dimensions [N, H, W, C] = [1, 10, 10, 3] then the broadcast module 410 may be used to expand the first tensor in the C dimension so that an elementwise operation can be performed between the two tensors. If, however, the output tensor is ultimately to have different dimensions than the input tensors (which all have the same dimensions), to save performing the exact same elementwise operation multiple times, the elementwise operation may be performed on the input tensors with their original dimensions and then a broadcast operation may be used to expand the output tensor to its desired dimensions.

The broadcast module 410 may receive control information (CTRL) that comprises information indicating whether the broadcast module 410 is enabled and if so, comprises information indicating how the broadcast module 410 is to configure itself. For example, in some cases, the control information (CTRL) may comprise information indicating how many times each received element is to be output before outputting the next received element.

Where the broadcast module 410 can receive J-bit elements or K-bit elements, and the broadcast module 410 can only output J-bits at a time, the broadcast module 410 may be configured to output the same K-bit element multiple times by alternating between the LSBs of the element and the MSBs of the element multiple times. For example, if each element is to be output three times, then the broadcast module 410 may be configured to output the LSBs, the MSBs, the LSBs, the MSBs, the LSBs and the MSBs. To enable the broadcast module 410 to be able to alternate between the LSBs and the MSBs the broadcast module 410 may have a storage unit for storing the LSBs and the MSBs.

Reference is now made to FIG. 5 which illustrates an example ALU module 500 which may be used to implement the ALU module 308 of FIG. 3. The ALU module 500 comprises a plurality of different ALU blocks 502, 504, 506, 508, 510, 512, 514. Each ALU block 502, 504, 506, 508, 510, 512, 514 comprises digital logic circuitry that is configured to accelerate one or more elementwise operations in one or more number formats. Specifically, each ALU block 1102, 1104, 1106 is configured to receive one or more inputs (e.g. from the interconnection module), perform one or more supported elementwise operations (e.g. logical and/or mathematical operations) on the received input(s), and output the result of the one or more elementwise operations. In some cases, each ALU block 502, 504, 506, 508, 510, 512, 514 differs from each other ALU block 502, 504, 506, 508, 510, 512, 514 in the elementwise operations supported thereby or in the number formats supports thereby. For example, one ALU block may be configured to accelerate fixed point addition operations, another ALU block may be configured to accelerate floating point addition operations, and yet another ALU block may be configured to accelerate bitwise operations in both fixed point and floating point.

In one embodiment, in each processing cycle only one ALU block 502, 504, 506, 508, 510, 512, 514 is provided with new input(s) to be processed. Accordingly, each ALU may be configured to receive control information (CTRL) each processing cycle that comprises information indicating whether that ALU block is to receive new input(s) in that processing cycle.

In some cases, each ALU block 502, 504, 506, 508, 510, 512, 514 may be able to receive a maximum of J-bits per input at a time. In some cases, each ALU block 502, 504, 506, 508, 510, 512, 514 may only be able to receive and process J-bit elements. However, in other cases, each ALU block 502, 504, 506, 508, 510, 512, 514 may be able to receive and process J-bit elements or K-bit elements, where K is double J (i.e., K= 2*J). For example, J may be 32-bits and K may be 64-bits. However, this is just an example pair of J and K values and J and K may be other suitable integers such as 16-bits and 32-bits respectively. Since only J-bits of an input can be received at the same time, a K-bit input may be received over multiple cycles. For example, the J-LSBs of the input may be received in a first cycle and the J-MSBs of the input may be received in a second, subsequent cycle.

Similarly, in some cases, each ALU block 502, 504, 506, 508, 510, 512, 514 may be able to output J-bits at a time. In some cases, each ALU block 502, 504, 506, 508, 510, 512, 514 may only be able to output J-bit elements. However, in other cases, each ALU block 502, 504, 506, 508, 510, 512, 514 may be able to output J-bit or K-bit elements, where K is double J. Since only J-bits can be output at the same time, a K-bit element may be output over multiple cycles. For example, in a first cycle the J-LSBs of the element may be output and in a second, subsequent cycle, the J-MSBs of the element may be output.

In the example shown in FIG. 5 the plurality of ALU blocks comprise a bitwise ALU block 502, a fixed point multiply-add ALU block 504, a format conversion ALU block 506, a division, square root, modulo ALU block 508, a floating point add ALU block 510, a floating point multiply ALU block 512 and a select-compare ALU block 514. It will be evident to a person of skill in the art that this is an example set of ALU blocks and that other example ALU modules may have only a subset of the ALU blocks of FIG. 5, none of the ALU blocks shown in FIG. 5, and/or additional ALU blocks that are not shown in FIG. 5. Elementwise operations accelerators known to the Applicant, which is not an admission that they are well-known, have only a single ALU block that can perform fixed point multiplication and/or addition. Having multiple ALU blocks that can perform different operations and/or operations in a different format expands the capability of the elementwise operations accelerator and allows a neural network accelerator with such an elementwise operations accelerator to be able to execute a more varied set of neural networks without the assistance of an external unit, such as a CPU.

The bitwise ALU block 502 comprises digital logic circuitry configured to perform a bitwise logical operation (e.g. NOT, AND, OR, XOR) on a received input (input A), optionally with another input (input B) and output the result of the operation. In some cases, the bitwise ALU block 502 may be able to selectively perform one of a plurality of bitwise logical operations. An example set of bitwise logical operations that the bitwise ALU block 502 may perform include NOT, AND, OR, and XOR. It will be evident to a person of skill in the art that the NOT operation is performed on a received input without another input (e.g. NOT (A)) whereas the AND, OR and XOR operations are performed on a received input and another input (e.g. A AND B, A OR B, A XOR B). Where the bitwise ALU block 502 supports multiple bitwise operations, the control information (CTRL) received by the bitwise ALU block 502 may comprise information indicating which of the supported bitwise operations is to be performed on the received input. Since the bitwise ALU block 502 operates at a bit level, independent of the format of the value represented by the bits thereof, the bitwise ALU block 502 can operate on values in a fixed-point number format or a floating point number format. Where the bitwise ALU block 502 supports both J-bit (e.g. 32 bit) and K-bit (e.g. 64-bit) inputs the bitwise ALU block 502 may be configured to perform the desired bitwise logic operation on the J-LSBs of the main input (input A), optionally with the J-LSBs of the secondary input (input B) first and subsequently perform the desired bitwise logical operation on the J-MSBs of the main input (input A), optionally with the J-MSBs of the secondary input (input B). The bitwise ALU block 502 allows selection and detection of specific bits being set, this allows masking operations to select the mantissa or exponent of a floating point number etc. Accordingly, having a bitwise ALU block 502 can greatly increase the flexibility of the elementwise operations hardware accelerator.

The fixed point multiply-add ALU block 504 comprises digital logic circuitry configured to receive a first input (input A) in a fixed point number format and (i) multiply that input (input A) with a second input (input B) in a fixed point number format and/or (ii) add that input (input A) to another input (input C) in a fixed point number format thereto. In other words the fixed point multiply-add ALU block 504 can perform fixed point multiplication between two values and fixed point addition between two values, and optionally chain the operations together such that both a fixed-point multiplication and a fixed-point addition can be performed. For example, the fixed point multiply-add ALU block 504 may be able to perform (A*B)+C where A, B and C are fixed point inputs. In some cases, the fixed point multiply-add ALU block 504 may be able to selectively perform additional operations. For example, in one example, the fixed point multiply add ALU block may be configured to implement (((A*B)>>C)+ ((D+E)<<variable_shift_b)) wherein "«" is a left shift, "»" is a right shift and A, B, C, D, E and variable_shift_b are inputs. A fixed point multiply-add ALU block 504 can enable the elementwise operations hardware accelerator to implement operations such as, but not limited to, affine addition and multiplication used to implement common quantisation formats such as those used in the Android Neural Networks API (NNAPI).

The format conversion ALU block 506 comprises digital logic circuitry configured to receive an input (input A) in one number format and convert the input (input A) to a second, different number format. For example, the format conversion ALU block 506 may be able to convert an input in a fixed point number format to a floating point number format, or convert an input in a floating point number format to a fixed point number format. In some cases, the format conversion ALU block 506 may be able to perform a selected one of a plurality of different format conversions and the control information (CTRL) received at the format conversion ALU block 506 may comprise information identifying which format conversion of the plurality of format conversions the format conversion ALU block 506 is to be perform on the received input (input A). An example set of format conversions which may be supported by the format conversion ALU block 506 is shown in Table 1. In some cases, where the format conversion ALU bock 506 is converting from or to a fixed point number format the format conversion block may also receive a second input (input B) identifying the exponent of the fixed point number format (which may be the input format or the output format). The conversion between a fixed point number format and floating point number format performed by the format conversion ALU block 506 allows a neural network which has been converted from floating point to fixed point, to be implemented efficiently even where one or more elementwise operations cannot be easily implemented in fixed point by allowing such elementwise operations to be implemented in floating point. In other words, the format conversion ALU block 506 allows most of a neural network to be implemented in fixed point (which is more hardware efficient) but one or more elementwise operations to be implemented in floating point. Such a format conversion ALU block 506 also allows a floating point input even when the elementwise operations are to be performed in fixed point, and/or a floating point output even when the input and/or operations are in fixed point.

**Table 1**

| **Input Format** | **Output Format** |
|---|---|
| IEEE Floating Point - 32 bits | Fixed Point - 32 bits |
| IEEE Floating Point - 32 bits | Fixed Point - 64 bits |
| Brain Floating Point (BFloat) - 16 bits | Fixed Point - 32 bits |
| Brain Floating Point (BFloat) - 16 bits | Fixed Point - 64 bits |
| Fixed-Point - 32 bits | IEEE Floating Point - 32 bits |
| Fixed-Point - 32 bits | Brain Floating Point (BFloat) - 16 bits |
| Fixed-Point - 64 bits | IEEE Floating Point - 32 bits |
| Fixed-Point - 64 bits | Brain Floating Point (BFloat) - 16 bits |

The division, square root, modulo ALU block 508 comprises digital logic circuitry configured to receive an input (input A) and perform one of a division, square root and modulo operation on the received input, optionally using a second input (input B). In other words, the division, square root, modulo ALU block 508 is configured to receive an input (input A) and divide that input (input A) by another input (input B), determine the square root of the received input (input A), or determine the output of the received input (input A) modulo another input (input B). Accordingly, the control information (CTRL) received at the division, square root, modulo ALU block 508 may comprise information indicating which of the supported operations (division, square root, modulo) is to be performed on the received input (input A).

In some cases, the division, square root, modulo ALU block 508 be able to perform one or more of the operations (division, square root, module) in a plurality of different number of formats and/or at a plurality of different bit depths. For example, the division, square root, modulo ALU block 508 may be able to perform a division in floating point or fixed point, and/or the division, square root, modulo ALU block 508 may be able to perform a modulo operation with 8-bit inputs, 16-bit inputs, 32 bit inputs or 64 bit inputs. In such cases, the control information (CTRL) received at the division, square root, modulo ALU block 508 may comprise information indicating the number format and/or the bit depth at which the identified operation is to be performed. An example set of operations which may be supported by the division, square root, modulo ALU block 508 is shown in Table 2. It has been determined that this set of operations can be efficiently performed on similar hardware that can perform division or division-like operations. In particular, even though square root is not a division operation per se, it can be implemented in a manner similar as long division. The inventors have determined that floating point modulo is a difficult operation to implement in hardware, thus floating point modulo is not included in the example set of supported operations to simplify the division, square root, modulo ALU block 508. Since the division, square root, modulo ALU block 508 allows dynamic division it allows the elementwise operations hardware accelerator to implement operations, such as SoftMax, which require at least a reciprocal to be calculated.

**Table 2**

| **Operation** | **Input Format** | **Output Format** |
|---|---|---|
| Division (A/B) | Fixed Point - 8 bits | Fixed Point - 8 bits |
| | Fixed Point - 16 bits | Fixed Point - 16 bits |
| | Fixed Point - 32 bits | Fixed Point - 32 bits |
| | Fixed Point - 64 bits | Fixed Point - 64 bits |
| | Floating Point - 32 bits | Floating Point - 32 bits |
| | BFloat - 16 bits | BFloat - 16 bits |
| Modulo (A%B) | Fixed Point - 8 bits | Fixed Point - 8 bits |
| | Fixed Point - 16 bits | Fixed Point - 16 bits |
| | Fixed Point - 32 bits | Fixed Point - 32 bits |
| | Fixed Point - 64 bits | Fixed Point - 64 bits |
| Square Root (√A) | Fixed Point - 8 bits | Fixed Point - 8 bits |
| | Fixed Point - 16 bits | Fixed Point - 16 bits |
| | Fixed Point - 32 bits | Fixed Point - 32 bits |
| | Fixed Point - 64 bits | Fixed Point - 64 bits |
| | Floating Point - 32 bits | Floating Point - 32 bits |
| | BFloat - 16 bits | BFloat - 16 bits |

The floating point add ALU block 510 comprises digital logic circuitry configured to receive an input (input A) in a floating point number format and add the received input (input A) to another input (input B) in a floating point number format and output the result of the addition. In other words the floating point add ALU block 510 is configured to perform floating point addition (i.e. compute and output the sum of two floating point inputs). In some cases, the floating point add ALU block 510 may be able to perform the floating point addition in a plurality of bit depths (e.g. 64, 32 and 16). In such cases, the control information (CTRL) received at the floating point add ALU block 510 may comprise information indicating the bit-depth of the operation. The floating point add ALU block 510 allows addition to be performed in floating point which may be beneficial where the range of the input or output is not sufficiently known to allow fixed point addition.

The floating point multiply ALU block 512 comprises digital logic circuitry configured to receive an input (input A) in a floating point number format and multiply that input (input A) with another input (input B) in a floating point number format and output the result of the multiplication. In other words, the floating point multiply ALU block 512 is configured to perform floating point multiplication (i.e. compute and output the product of a first floating point input and a second floating point input). In some cases, the floating point multiply ALU block 512 may be able to perform the floating point multiplication at a plurality of bit depths (e.g. 64, 32 and 16). In such cases, the control information (CTRL) received at the floating point multiply ALU block 512 may comprise information indicating the bit-depth of the floating point multiplication operation. The floating point multiply ALU block 512 allows multiplication to be performed in floating point which may be beneficial where the range of the input or output is not sufficiently known to allow fixed point multiplication.

The select-compare ALU block 514 comprises digital logic circuitry configured to perform a comparison between a first input (input A) and a second input (input B) in accordance with a comparison operator, and select either a third input (input C) or a fourth input (input D) based on the comparison. In some cases, the select-compare ALU block 514 may compare input A and B according to a comparison operator, and, if the comparison operator statement is true, output input C, and output input D otherwise. For example, if the comparison operator is "equal to" then if A=B then C is output, otherwise D is output. In some cases, the select-compare ALU block 514 may support a plurality of different comparison operators. For example, the select-compare ALU block 514 may support one or more of the following comparison operators: equal to (A=B), with or without a mask (with a mask only certain bits of the first and second values must be equal - e.g., (A&E)=(B&E) where E is the mask); less than (A < B); less than or equal to (A ≤ B); greater than (A > B); greater than or equal to (A ≥B). Where the select-compare ALU block 514 supports a plurality of different comparison operators the control information (CTRL) received at the select-compare ALU block 514 may comprise information identifying the comparison operator that the select-compare ALU block 514 is to use.

In some cases, the select-compare ALU block 514 may be able to perform a comparison using one or more of the comparison operators in a plurality of different number of formats and/or at a plurality of different bit depths. For example, the select-compare ALU block 514 may be able to perform an "equal to" comparison in floating point or fixed point, and/or a "less than" comparison with 8-bit inputs, 16-bit inputs, 32 bit inputs or 64 bit inputs. In such cases, the control information (CTRL) received at the select-compare ALU block 514 may also comprise information indicating the number format and/or the bit depth at which the identified comparison is to be performed. An example set of comparisons (operator, format and bit depth) which may be supported by the select-compare ALU block 514 is shown in Table 3.

**Table 3**

| **Comparison Operator** | **Input Format** | **Output Format** |
|---|---|---|
| Equal to, with a mask (A&E)=(B&E) | Fixed Point - 32bits | Fixed Point - 32 bits |
| | Fixed Point - 64 bits | Fixed Point - 64 bits |
| | Floating Point - 32 bits | Fixed Point - 32 bits |
| | BFloat - 16 bits | Fixed Point - 32 bits |
| Less Than (A < B) | Fixed Point - 32bits | Fixed Point - 32 bits |
| | Fixed Point - 64 bits | Fixed Point - 64 bits |
| | Floating Point - 32 bits | Fixed Point - 32 bits |
| | BFloat - 16 bits | Fixed Point - 32 bits |
| Less Than or Equal to (A ≤ B) | Fixed Point - 32bits | Fixed Point - 32 bits |
| | Fixed Point - 64 bits | Fixed Point - 64 bits |
| | Floating Point - 32 bits | Fixed Point - 32 bits |
| | BFloat - 16 bits | Fixed Point - 32 bits |
| Greater Than (A > B) | Fixed Point - 32bits | Fixed Point - 32 bits |
| | Fixed Point - 64 bits | Fixed Point - 64 bits |
| | Floating Point - 32 bits | Fixed Point - 32 bits |
| | BFloat - 16 bits | Fixed Point - 32 bits |
| Greater Than or Equal to (A ≥ B) | Fixed Point - 32bits | Fixed Point - 32 bits |
| | Fixed Point - 64 bits | Fixed Point - 64 bits |
| | Floating Point - 32 bits | Fixed Point - 32 bits |
| | BFloat - 16 bits | Fixed Point - 32 bits |

In some cases, the select-compare ALU block 514 may also be able to selectively perform additional operations. For example, in some cases the select-compare ALU block 514 may also be able to perform a maximum function (e.g., the select-compare ALU block 514 may be able to output the maximum of A and B) and/or a minimum function (e.g. the select-compare ALU block 514 may be able to output the minimum of A and B). This may be implemented by causing the select-compare ALU block 514 to (i) perform one of the less than or greater than comparisons and (ii) output A or B based on the result of the comparison by, for example, setting inputs C and D to the same input source as inputs A and B respectively. The select-compare ALU block 514 may also be configured to deal with certain corner cases such as one or more inputs that are equal to 0, infinity or NaN (Not a Number) in a predetermined way, which may be different based on the comparison performed. Since the select-compare ALU block 514 allows comparison between values, the select-compare ALU block 514 can be used to implement floating point activation functions. The select-compare ALU block 514 also allows the selection of the maximum or minimum of two tensors which is an operation that is frequently used in neural networks.

In some cases, the ALU module 500 may also comprise a selection block 516 which is configured to receive the outputs of the ALU blocks and cause one of the outputs to be output from the ALU module 500. The selection block 516 may be implemented using any suitable manner. For example, the selection block 516 may comprise one or more demultiplexers and/or multiplexers which are controlled by control information received from the control module 304.

Reference is now made to FIG. 6 which illustrates an example output module 600 which may be used to implement the output module 312 of FIG. 3. The example output module 600 comprises an output pipeline 602 that comprises one or more post-processing modules 604, 606, 608. In the example shown in FIG. 6 the output pipeline 602 comprises a fixed-to-fixed converter 604, a negation module 606 and a clamp module 608. However, this is only an example set of post-processing modules that an output pipeline may have and other output pipelines may comprise a different combination of the post-processing modules shown in FIG. 6, none of the post-processing modules of FIG. 6, and/or additional post-processing modules. For example, an output pipeline may only comprise one of the post-processing modules shown in FIG. 6, or only two of the post-processing modules shown in FIG. 6. Each post-processing module 604, 606, 608 may be selectively enabled or disabled per set of one or more elementwise operations. Accordingly, each post-processing module 604, 606, 608 may be configured to receive control information (CTRL) that comprises information indicating whether that post-processing module 604, 606, 608 is to be enabled. FIG. 6 provides an example of the order of the post-processing modules 604, 606, 608 in the output pipeline, however it will be evident to a person of skill in the art that the post-processing modules 604, 606, 608 could be in another order although preferably the clamp module 608 is the last post-processing module in the output pipeline so that the clamp module 608 can put the output in the desired output format.

The fixed-to-fixed converter 604 comprises digital logic circuitry configured to receive a value and convert that value from a first fixed point number format to a second fixed point number format. In some cases, the fixed-to-fixed converter 604 may be configured to receive values in a first fixed point number format defined by a first exponent (*EXPx*) and a first integer bit-width and convert the received values to a second fixed point number format with the same integer bit-width (the first integer bit-width) and a second, different exponent (*EXPy*) by scaling the received values by 2*^{EXPx-EXPy}.* In such cases, the fixed-to-fixed converter 604 may be configured to perform the scaling by shifting the received value left by *EXPx* - *EXPy* and clamping the output to a predetermined integer bit-width.

In some cases, the format conversion performed by the fixed-to-fixed converter 604 may be configurable (e.g. one or more of *EXPx, EXPy* and *EXPx* - *EXPy* may be configurable). In such cases, the control information (CTRL) received at the fixed-to-fixed converter may comprise information indicating the conversion that is to be performed. For example, in some cases the control information (CTRL) may comprise information identifying the first and second fixed point number formats (e.g. *EXPx* and *EXPy*)*.* In other cases, the control information (CTRL) may comprise information identifying a difference between the first and second fixed point number formats (e.g. *EXPx* and *EXPy*)*.* For example, the control information (CTRL) may comprise information identifying *ΔEXP* wherein Δ*EXP* = *EXPx* - *EXPy.*

Since the fixed-to-fixed converter 604 performs a conversion between fixed-point number formats, where the output pipeline 602 can receive elements of the output tensor in a fixed-point format or a floating point format, the fixed-to-fixed converter 604 may only be enabled if the received elements are in a fixed-point number format.

The negation module 606 comprises digital logic circuitry configured to receive a value and output a value with the same magnitude, but the opposite sign (i.e., perform a negation operation on the received value). In other words, the negation module 606 is configured to multiply a received value by -1 and output the result of the multiplication. In some cases, the negation module 606 may be able to implement the negation (multiplication by -1) in any suitable manner. Where the negation module 606 can receive a value in fixed point number format or floating point number format, the negation module 606 may be configured to perform the negation differently depending on whether the received value is in a fixed point number format or a floating point number format. For example, where the received value is in a fixed point number format that uses a two's complement format for the integer component thereof, the negation module 606 may be configured to perform the negation by inverting all of the bits of the received value and adding 1; and if the received value is in a floating point format the negation module 606 may be configured to perform the negation by flipping or reversing the sign bit.

The clamp module 608 comprises digital logic circuitry configured to, when enabled, receive an integer value with a first bit width and selectively convert that to an integer value with a second, lower, bit width, B. For example, the clamp module 608 may receive a 32-bit integer value and output a 16-bit integer value. The conversion may be performed by clamping the received integer to the second bit width, B, or outputting the B least significant bits of the received value. Specifically, the control information (CTRL) received at the clamp module 608 may comprise information indicating whether clamping is enabled, and if clamping is enabled, the clamp module 608 is configured to clamp the received value to a B-bit integer, and if clamping is not enabled the clamp module 608 may be configured to output the B least significant bits of the received value. As is known to those of skill in the art, clamping an integer to a specific bit width, B, comprises, if the received integer is larger than the largest integer representable by the specific bit width, outputting the largest integer representable by the specific bit width; if the received integer is less than the smallest integer representable by the specific bit width, outputting the smallest integer representable by the specific bit width; and outputting the B least significant bits of the received value otherwise. In some cases, the second integer bit width, B, may be configurable. In such cases, the control information (CTRL) that is received at the clamp module 608 may also comprise information indicating the second bit width, B.

In some cases, the link or bus between the ALU module and the output module 600 may have a first bit width, J, (e.g. 32 bits) such that the output module 600 can receive J bits from the ALU module at a time. As described above, in some cases, the ALU module may be able to generate values with the first bit width, J, or values with a second bit width, K, that is twice the first bit width (e.g. 64 bits). Where the ALU module is configured to generate J-bit values then all the bits of the output value can be sent to the output module at the same time. However, where the ALU module is configured to generate K-bit values, the bits of each value are sent to the output module over two cycles. For example, in a first cycle the least significant J bits are sent to the output module and in a second cycle the most significant J bits are sent to the output module.

Where the ALU module can output either J-bit or K-bit values the links or buses between the post-processing modules 604, 606, 608 of the output pipeline 602 may be K-bits (e.g. 64 bits) and the output pipeline may comprise a buffer 610. The buffer 610 is configured to, (i) when the ALU module is configured to output K-bit values, buffer or store the LSBs received in the first cycle and combine them with the MSBs received in the second cycle to generate a K-bit value which is provided to the post-processing modules 604, 606, 608; and, (ii) when the ALU module is operating in J-bit mode, convert each J-bit value to a K-bit value. Where the J-bit value is a two's complement value, converting a J-bit value to a K-bit value may comprise performing sign extension - e.g. the sign bit of the J-bit value is replicated in the J MSBs of the K-bit value. This expanded bit width between the post-processing modules allows the post-processing performed by any of the post-processing modules 604, 606, 608 to be correctly performed on J-bit or K-bit values.

In some cases, the output pipeline may only be able to output J-bits at a time. In such cases the output pipeline, and specifically the clamp module 608 thereof, may only be able to output J-bit values. However, in some cases, the output pipeline, and specifically, the clamp module 608 thereof may be able to output J-bit or K-bit values and when the clamp module 608 is configured to output K-bit values it may output the J LSBs of the K-bit value in a first cycle and the J MSBs of the K-bit value in a second, subsequent cycle.

Reference is now made to FIG. 7 which illustrates an example interconnection module 700 for an elementwise operations accelerator which may be used to implement the interconnection module 310 of FIG. 3.

As described above, each ALU block of the ALU module can receive one or more inputs and perform one or more operations on the one or more inputs to generate a result or output. For example, the bitwise ALU block 502 of FIG. 5 may be configured to receive a first input (A) and an optional second input (B) and perform a bitwise operation (e.g. NOT) on A, or a bitwise operation (e.g. OR, AND, XOR) on A and B; and the select-compare ALU block 514 may be configured to receive a first input (A), a second input (B), a third input (C), a fourth input (D) and a fifth input (E) and perform a comparison between A and B (optionally using E) and output C or D based on the comparison. In examples described herein, each input to an ALU block may be provided by one of a plurality of input sources. The plurality of input sources comprises: (i) the input tensors (e.g. input tensors A, B, C); and may also include (ii) one or more scalars (wherein a scalar is value that is static for the elementwise operation and may be provided in the set of commands); and/or (iii) default values.

The interconnection module 700 is configured to dynamically connect one input source to each input of a particular ALU block so that the ALU block can perform a desired elementwise operation on a desired input. For example, if the particular ALU block is the bitwise ALU block 502 of FIG. 5 that can receive two inputs (inputs A and B) then the interconnection module 700 is configured to connect (i) an input source to input A of the bitwise ALU block 502, and (ii) an input source to input B of the bitwise ALU block 502 - e.g., the interconnection module 700 may connect the first input (e.g. input A) to the input tensor A elements output by the input module and connect the second input (e.g. input B) to a scalar.

In the example shown in FIG. 7 the interconnection module 700 comprises one or more input source storage units 702, 704, 706, 708, 710, 712, 714 which are used to store one or more values of the input sources; and selection logic 716, 718, 720, 722, 724, 726, 728 for each ALU block of the ALU module which is configured to dynamically connect one of the input sources to each input of the corresponding ALU block.

The input source storage units 702, 704, 706, 708, 710, 712, 714 may comprise at least X tensor storage units (e.g. one or more registers) 702, 704, 706 wherein X is the number of input tensors the elementwise operations accelerator can receive. Each tensor storage unit 702, 704, 706 can receive, store, and output elements of an input tensor. Accordingly, the contents of a tensor storage unit 702, 704, 706 may change as new elements of an input tensor associated with that tensor storage unit 702, 704, 706 are received. In the example shown in FIG. 7 up to three input tensors (input tensors A, B and C) can be received at the elementwise operations accelerator (e.g. via the input module) thus there are three tensor storage units 702, 704, 706. However, as described above, this is an example only and an elementwise operations accelerator may be able to receive any number of input tensors (e.g. one, two, or more than two). In the example shown in FIG. 7 the association between the input tensors and the tensor storage units is fixed (e.g. the values of input tensor A can only be stored in the first tensor storage unit 702), however, in other examples each input tensor may be dynamically associated with one of the tensor storage units so that in some cases the values of input tensor A are stored in the first tensor storage unit 702 and in other cases the values of input tensor A are stored in the second tensor storage unit 704. In these examples, the interconnection module may comprise additional logic (not shown) that allows the values of an input tensor to be dynamically directed to one of the tensor storage units 702, 704, 706.

The input source storage units 702, 704, 706, 708, 710, 712, 714 may, in some cases, also comprise one or more scalar storage units 708, 710, 712 which are used to store scalars to be used in the set of elementwise operations. The scalars for a set of one or more elementwise operations may be specified in the set of commands and provided to the interconnection module 700 by the control module. In some cases, there may be a scalar storage unit for each scalar value that can be specified. For example, in the example shown in FIG. 7 up to three different scalar values may be specified (scalars A, B and C), thus there are three scalar storage units 708, 710, 712. However, it will be evident to those of skill in the art that this is an example only and that any number of scalars may be specified. Where, for an elementwise operation, the same value is to be combined with each element of an input tensor (e.g. if 5 is to be added to each element of an input tensor) it may be more efficient to provide the value as a single scalar then inputting a secondary input tensor with every element set to 5.

Since the scalars are common to all of the processing pipelines 302, in some cases the scalar storage units 708, 710, 712 may form part of the control module 304 so that only one copy of the scalars is stored. In such cases, the control module 304 may, each processing cycle, provide each interconnection module 310 (or each ALU module 308) with the appropriate scalars.

The input source storage units 702, 704, 706, 708, 710, 712, 714 may, in some cases, also comprise one or more default value storage unit 714 configured to store one or more default values. In some cases, there may be a default value for each input of each ALU block. For example, there may be a default value for input A of an ALU block and a different default value for input B of the same ALU block. In some cases, the default value for an input is set so that a particular operation is not performed when the input is set to the corresponding default value. Accordingly, the default values may be based on the operation that is performed using that input. For example, if an input is an input to a multiplication operation then the default value may be set to 1 so that the other input to the multiplication is just output when the default value is used as the input. Similarly, if an input is an input to an addition operation then the default value may be set to 0 so that the other input to the addition is just output when the default value is used.

The interconnection module 700 comprises selection logic 716, 718, 720, 722, 724, 726, 728 for each ALU block of the ALU module. The example interconnection module 700 of FIG. 7 is designed for a system with seven ALU blocks so there are seven selection logics 716, 718, 720, 722, 724, 726, 728. However, it will be evident to a person of skill in the art that this is an example only. The seven ALU blocks may be the same seven ALU blocks described with respect to FIG. 5 or different ALU blocks.

Each selection logic 716, 718, 720, 722, 724, 726, 728 is configured to dynamically couple one input source (e.g. via an input source storage unit) to each input of the corresponding ALU block in response to control information (CTRL) so that the values output from that input source are provided as the desired input to the ALU block. For example, if there is an ALU block that receives a first input (A) and a second input (B), then the selection logic for that ALU block may be configured to selectively couple one of the input sources (via its input source storage unit) to the first input (A) and selectively couple a different one of the input sources (via its input source storage unit) to the second input (B). Each selection logic 716, 718, 720, 722, 724, 726, 728 may comprise switching logic (e.g. a multiplexer) or the like for each input of the corresponding ALU block that comprises a set of input ports each of which is coupled to one of the input sources, and an output port that is coupled to the input of the corresponding ALU block and can selectively connect one of the inputs to the output. For example, as shown in FIG. 8, selection logic 716 for an ALU block with two inputs (A and B) may comprise first switching logic (e.g. a multiplexer 802) for the first input (A) which is coupled to each of the input sources (via their input source storage unit) and selects, in response to a first control signal (CTRL A), one of the inputs to output; and second switching logic (e.g. a multiplexer 804) for the second input (B) which is coupled to each of the input source storage units and selects, in response to a second control signal (CTRL B), one of the inputs to output.

While in the example shown in FIG. 7, there is a single default value storage unit which is coupled to each selection logic, in other cases each selection logic may have its own set of one or more default value storage units which comprises the default values for the inputs to the corresponding ALU block. For example, the selection logic for an ALU block with two inputs (A and B) may comprise a default value storage unit that stores the default value for input A and another default value storage unit that stores the default value for input B. The values of these default storage units may be set based on the operation that is to be performed by the input and/or the format of the input.

Reference is now made to FIG. 9 which illustrates an example control module 900 for an elementwise operations accelerator which may be used to implement the control module 304 of FIG. 3. The control module 900 is configured to receive a set of commands that indicates how an input tensor is to be processed by the elementwise operations accelerator which causes the control module 900 to issue commands and/or control information to the other modules of the elementwise operations accelerator so that the received tensor is processed in the desired manner. In the example shown in FIG. 9 the control module 900 comprises a storage unit 902 for storing the received set of commands, a decoder 904 for decoding the set of commands, and control logic 906 for controlling the other modules in accordance with the decoded set of commands.

The set of commands received by the control module 900 may comprise a stream or sequence of bits which are divided into a plurality of fields, wherein each field provides specific information to the control module 900 on how the other modules of the elementwise operations accelerator are to be configured to perform a set of one or more elementwise operations on an input tensor. In some cases, the set of commands may be divided into a fixed-sized or static portion 908 and an instruction portion 910.

The fixed-sized portion 908 of the set of commands may comprise information (e.g. a set of fields) that is always provided in the set of commands regardless of the set of one or more elementwise operations to be performed. Since the fields in the fixed-size portion are predetermined the fixed-sized portion has a fixed or predetermined number of bits. In some cases, the fixed-size portion of the set of commands may comprise information (e.g. a set of fields) that indicates one or more of the following: how many input tensors are to be received (if multiple input tensors can be received), the format of each of the input tensors (e.g. floating point or fixed point, J-bit or K bit), the size of the instruction portion 910 of the set of commands, the size of the input tensors (e.g. W, H, C dimensions as shown in FIG. 2), what pre-processing operations are to be performed on each tensor input to the elementwise operations accelerator (e.g. fixed-to-fixed conversion, negation, offset, broadcast), what post-processing operations are to be performed on the elements of the tensor output from the ALU module (e.g. fixed-fixed conversion, negation, clamping), and/or the format of the output tensor (e.g. fixed point or floating point).

Table 4 illustrates an example set of fields which may form the fixed-sized or static portion 908 of a set of commands for an elementwise operations accelerator comprising the input module 400 of FIG. 4, the ALU module 500 of FIG. 5, output module 600 of FIG. 6, and the interconnection module 700 of FIG. 7 where "Dint" means an unsigned integer and "Int" means a signed integer. It will be evident to a person of skill in the art that this is an example only and the specific fields that form the fixed-sized or static portion of the set of commands are dependent on the configuration of the different modules of the elementwise operations accelerator and the options supported thereby.

**Table 4**

| **Field** | **Number of Bits** | **Format** | **Description** |
|---|---|---|---|
| Tensor A Enable | 1 | Boolean | Tensor A to be input to the elementwise operations accelerator |
| Tensor B Enable | 1 | Boolean | Tensor B to be input to the elementwise operations accelerator |
| Tensor C Enable | 1 | Boolean | Tensor C to be input to the elementwise operations accelerator |
| Command Set Size | 8 | Uint | Size of the instruction portion of the set of commands |
| Input channels | 12 | Uint | The number of channels of the input tensor |
| w/h dimensions | 11 & 13 | Uint | The W and H dimensions (as per FIG. 2) of the input tensor |
| EXP delta Tensor A Input | 7 | Int | Δ*Exp* to be used by fixed-to-fixed converter for Tensor A |
| EXP delta Tensor B Input | 7 | Int | Δ*Exp* to be used by fixed-to-fixed converter for Tensor B |
| EXP delta Tensor C Input | 7 | Int | Δ*Exp* to be used by fixed-to-fixed converter for Tensor C |
| EXP delta Out | 7 | Int | Δ*Exp* to be used by fixed-to-fixed converter in output module |
| Tensor A float | 1 | Bool | Tensor A is in floating point format |
| Tensor A negate | 1 | Bool | Tensor A is to be negated |
| Tensor A offset enable | 1 | Bool | Enable the addition of an offset to Tensor A |
| Tensor B float | 1 | Bool | Tensor B is in floating point format |
| Tensor B negate | 1 | Bool | Tensor B is to be negated |
| Tensor B offset enable | 1 | Bool | Enable the addition of an offset to Tensor B |
| Tensor C float | 1 | Bool | Tensor C is in floating point format |
| Tensor C negate | 1 | Bool | Tensor C is to be negated |
| Tensor C offset enable | 1 | Bool | Enable the addition of an offset to Tensor C |
| Tensor A Broadcast P | 1 | Bool | Tensor A is to be broadcast in the channel dimension |
| Tensor B Broadcast P | 1 | Bool | Tensor B is to be broadcast in the channel dimension |
| Tensor C Broadcast P | 1 | Bool | Tensor C is to be broadcast in the channel dimension |
| 64-bit mode | 1 | Bool | The elementwise operations accelerator is to operate in 64-bit mode |
| Tensor A 64-bit | 1 | Bool | Tensor A has 64-bit values |
| Tensor B 64-bit | 1 | Bool | Tensor B has 64-bit values |
| Tensor C 64-bit | 1 | Bool | Tensor C has 64-bit values |
| Tensor A input offset | 64 | Int | Input offset for Tensor A |
| Tensor B input offset | 64 | Int | Input offset for Tensor B |
| Tensor C input offset | 64 | Int | Input offset for Tensor C |
| Output Bit Depth | 3 | Uint | Bitdepth for the output of the elementwise operations accelerator |
| | | | 0:8 bit |
| | | | 1:16 bit |
| | | | 2:32 bit |
| | | | 3: 64 bit |
| Output Float | 1 | Bool | The output is in floating point |
| Output Negate | 1 | Bool | The output is to be negated |

The instruction portion 910 of the set of commands comprises information (e.g. a set of fields) that indicates the set of one or more elementwise operations is to be performed on the main input tensor. The instruction portion 910 may comprise a field (which may be referred to as the command field) that identifies the ALU block of the plurality of ALU blocks that is to perform the desired set of one or more elementwise operations on the input tensor and a field that identifies the length of the instruction portion 910. In some cases, each ALU block may be assigned a unique identifier number and an ALU block may be identified by setting the command field to that number. However, in other cases, multiple ALU blocks may share the same identifier number and the other fields in the instruction portion 910 may be used to identify which of the ALU blocks that are associated with the same identifier is to be used. Table 5 illustrates an example set of identifiers which may be used to identify the ALU blocks of FIG. 5.

**Table 5**

| Identifier | ALU Block |
|---|---|
| 0 | Fixed Point Multiply-Add ALU Block |
| 1 | Division, Square Root, Modulo ALU Block |
| 2 | Floating Point Add ALU Block/ Floating Point Multiply ALU Block |
| 3 | Bitwise ALU Block |
| 4 | Select-Compare ALU Block |
| 5 | Format Conversion ALU Block |

The instruction portion 910 may also comprise a set of fields that describe how the identified ALU block is to be configured to perform a desired set of one or more elementwise operations. Accordingly, the set of fields in the instruction portion 910 may vary based on which ALU block is to perform the desired set of one or more elementwise operations. The instruction portion 910 may comprise a set of fields that indicate or identify one or more of the following: which input source is to be used for each input of the identified ALU block (e.g. if the ALU block is to receive an input A and an input B, the variable length section may specify which input source (input tensor, scalar, default value) is to be used for each of inputs A and B; if the ALU block can perform a plurality of different operations, the operation(s) the ALU block is to perform; the scalars to be used in the set of one or more operations; whether the set of one or more operations should be performed in J-bits (e.g. 32 bits) or K-bits (64-bits); whether the set of one or more operations is to be performed in fixed point number format or floating point number format; the bit depth of the elementwise operation etc.

Example instruction portions 910 will now be described for the example ALU blocks described above with respect to FIG. 5

Table 6 illustrates an example set of fields for an instruction portion for a fixed point multiply-add ALU block (such as fixed point multiply-add ALU block 504 of FIG. 5) which can perform the operation (((A*B)>>C)+ ((D+E)<<variable_shift_b)) wherein A, B, C, D and E are inputs which can be provided by an input source. It will be evident to a person of skill in the art that this is an example set of fields and that additional fields may be used and/or different fields may be used.

**Table 6**

| Field | Width | Format | Description |
|---|---|---|---|
| **Fields that may always appear** | | | |
| Command | 3 | Uint/Enum | Identifies the ALU block to be used (for the Fixed Point Multiply-Add ALU Block this may be set to 0) |
| Instruction Length | 3 | Uint | Length of the instruction portion (this may be specified in 32 bit words, minus 1) |
| Select A | 3 | Uint/Enum | The input source for input A (first multiplication input) |
| Select B | 3 | Uint/Enum | The input source for input B (second multiplication input) |
| Select C | 3 | Uint/Enum | The input source for input C (right shift amount) |
| Select D | 3 | Uint/Enum | The input source for input D (first addition input) |
| Select E | 3 | Uint/Enum | The input source for input E (second addition input) |
| Negate A | 1 | Bool | Input A is to be negated |
| Negate E | 1 | Bool | Input E is to be negated |
| Clamps Enable | 1 | Bool | Clamping is enabled |
| Scalar 64bit Flag | 1 | Bool | The scalars are 64-bit (vs 32-bit) |
| Extended Setup Section | 1 | Bool | There is an extended setup section |

| **Optional Fields** | | | |
|---|---|---|---|
| Scalar A | 32/64 | Int | Scalar A value |
| Scalar B | 32/64 | Int | Scalar B value |
| Scalar C | 32/64 | Int | Scalar C value |

| **Optional Extended Setup Section** | | | |
|---|---|---|---|
| Double Round | 1 | Bool | Enable double rounding (Default value is 0) |
| Double Round Shift | 6 | Uint | Quantity for first stage of rounding (Default value is 0) |
| Variable b-shift | 6 | Uint | Quantity for the left shift |
| 64-bit calculation | 1 | Bool | The calculation should be performed in 64-bits |
| Input A 64-bit | 1 | Bool | Input A is 64-bits |
| Input B 64-bit | 1 | Bool | Input B is 64-bits |
| Negate B | 1 | Bool | Negate Input B (Default value is 0) |
| Negate D | 1 | Bool | Negate Input D (Default value is 0) |
| Shift Rounding Mode | 4 | Uint/Enum | Rounding mode to use in the shift |

In some cases, a "0" may indicate that the input source is the tensor stored in the first tensor storage unit, a "1" may indicate that the input source is the tensor stored in the second tensor storage unit, a "2" may indicate that the input source is the tensor stored in the third tensor storage unit, a "3" may indicate that the input source is the tensor stored in the fourth tensor storage unit, a "4" may indicate that the input source is Scalar A, a "5" may indicate that the input source is Scalar B, a "6" may indicate that the input source is Scalar C, and a "7" may indicate that the input source is the default value for that input. In this example, if Scalar A is to be used as Input A then the "Select A" field would be set to "4".

Table 7 illustrates an example set of fields of an instruction portion for a division, square root, modulo ALU block (such as the division, square root, modulo ALU block 508 of FIG. 5) that can perform one of a division, square root or modulo operation on an input (input A), optionally with a second input (input B). It will be evident to a person of skill in the art that this is an example set of fields and that additional fields may be used and/or different fields may be used.

**Table 7**

| Field | Width | Format | Description |
|---|---|---|---|
| **Fields that may always appear** | | | |
| Command | 3 | Uint/Enum | Identifies the ALU block to be used (for the division, square root, modulo ALU block this field may be set to 1) |
| Instruction Length | 3 | Uint | Length of the instruction portion (this may be specified in 32 bit words, minus 1) |
| Select A | 3 | Uint/Enum | The input source for input A (first input - the numerator for division or modulo operations, or the input for a square root operation) |
| Select B | 3 | Uint/Enum | The input source for input B (optional second input - the denominator for division or modulo operations) |
| Scalar B | 8 | Int | Scalar B value |
| Bitdepth | 3 | Uint/Enum | Bit depth for the operation (0: 8; 1:16; 2:32; 3:64) |
| Format | 1 | Bool | Format for the operation (fixed or float) - (0: fixed point; 1: floating point) |
| Sub Command | 3 | Uint/Enum | Sub command for the operation (0: division; 1: modulo; 2: square root) |
| Scalar 64bit Flag | 1 | Bool | The scalars are 64-bit (vs 32-bit) |
| Extended Setup Section | 1 | Bool | There is an extended setup section |

| Optional Fields | | | |
|---|---|---|---|
| Scalar A | 32/64 | Int | Scalar A value |
| Scalar C | 32/64 | Int | Scalar C value |

Table 8 illustrates an example set of fields of an instruction portion for a floating point multiply ALU block (such as the floating point multiply ALU block 512 of FIG. 5) that can multiply two floating point inputs, or for a floating point add ALU block (such as the floating point add ALU block 510 of FIG. 5) that can add two floating point inputs. Since these two ALU blocks perform similar functions and may have similar configurable options, the same set of fields may be used for both ALU blocks. It will be evident to a person of skill in the art that this is an example set of fields and that additional fields may be used and/or different fields may be used.

**Table 8**

| Field | Width | Format | Description |
|---|---|---|---|
| **Fields that may always appear** | | | |
| Command | 3 | Uint/Enum | Identifies the ALU block to be used (for the Floating Point Multiply ALU block or the Floating Point ALU block this field may be set to 2) |
| Instruction Length | 3 | Uint | Length of the instruction portion (this may be specified in 32 bit words, minus 1) |
| Select A | 3 | Uint/Enum | The input source for input A (first multiplication input or first addition input) |
| Select B | 3 | Uint/Enum | The input source for input B (second multiplication input or second addition input) |
| Bitdepth | 3 | Uint/Enum | Bit depth for the operations (0: 8; 1:16; 2:32; 3:64) |
| Format | 1 | Bool | Format for the operation (fixed or float) - (0: fixed point; 1: floating point) should always be set to float |
| Sub Command | 3 | Uint/Enum | Sub command for the operation (0: Add; 1: Subtract; 2= Multiply) |
| Scalar 64bit Flag | 1 | Bool | The scalars are 64-bit (vs 32-bit) |
| Extended Setup Section | 1 | Bool | There is an extended setup section |

| **Optional Fields** | | | |
|---|---|---|---|
| Scalar A | 32/64 | Int | Scalar A value |

Table 9 illustrates an example set of fields of an instruction portion for a bitwise ALU block (such as the bitwise ALU block 502 of FIG. 5) that can perform one of one or more bitwise operations on an input, optionally with another input. It will be evident to a person of skill in the art that this is an example set of fields and that additional fields may be used and/or different fields may be used.

**Table 9**

| Field | Width | Format | Description |
|---|---|---|---|
| **Fields that may always appear** | | | |
| Command | 3 | Uint/Enum | Identifies the ALU block to be used (for the Bitwise ALU block this field may be set to 3) |
| Instruction Length | 3 | Uint | Length of the instruction portion (this may be specified in 32 bit words, minus 1) |
| Select A | 3 | Uint/Enum | The input source for input A |
| Select B | 3 | Uint/Enum | The input source for input B |
| Scalar B | 8 | Int | Scalar B value |
| Bitdepth | 3 | Uint/Enum | Bit depth for the operation (0: 8; 1:16; 2:32; 3:64) |
| Format | 1 | Bool | Format for the operation (fixed or float) - (0: fixed point; 1: floating pint) - since the format is irrelevant to a bitwise operation, this field is ignored |
| Sub Command | 3 | Uint/Enum | Sub command for the operation (0:AND; TOR; 2:XOR; 3:NOT) |
| Scalar 64bit Flag | 1 | Bool | The scalars are 64-bit (vs 32-bit) |
| Extended Setup Section | 1 | Bool | There is an extended setup section |

| **Optional Fields** | | | |
|---|---|---|---|
| Scalar A | 32/64 | Int | Scalar A value |
| Scalar C | 32/64 | Int | Scalar C value |

Table 10 illustrates an example set of fields of an instruction portion for a select-compare ALU block (such as the select-compare ALU block 514 of FIG. 5) that can perform a comparison between two inputs and output one of two other inputs based on the result of the comparison. It will be evident to a person of skill in the art that this is an example set of fields and that additional fields may be used and/or different fields may be used.

**Table 10**

| Field | Width | Format | Description |
|---|---|---|---|
| **Fields that may always appear** | | | |
| Command | 3 | Uint/Enum | Identifies the ALU block to be used (for the select-compare ALU block this field may be set to 4) |
| Instruction Length | 3 | Uint | Length of the instruction portion (this may be specified in 32 bit words, minus 1) |
| Select A | 3 | Uint/Enum | The input source for input A (first comparison input) |
| Select B | 3 | Uint/Enum | The input source for input B (second comparison input) |
| Select C | 3 | Uint/Enum | The input source for input C (first selection input) |
| Select D | 3 | Uint/Enum | The input source for input D (second selection input) |
| Select E | 3 | Uint/Enum | The input source for input E (mask for comparison) |
| 64 bit calculation | 3 | Uint/Enum | Bit depth for the operation (0:32; 1:64) |
| Format | 1 | Bool | Format for the operation (fixed or float) - (0: fixed point; 1: floating point) |
| Sub Command | 3 | Uint/Enum | Sub command for the operation (0:A==B; 1 :A<B; 2: A<=B; 3: A>B; 4: A>=B; 5:minimum; 6: maximum) |
| Scalar 64bit Flag | 1 | Bool | The scalars are 64-bit (vs 32-bit) |
| Extended Setup Section | 1 | Bool | There is an extended setup section |

| **Optional Fields** | | | |
|---|---|---|---|
| Scalar A | 32/64 | Int | Scalar A value |
| Scalar B | 32/64 | Int | Scalar B value |
| Scalar C | 32/64 | Int | Scalar C value |

Table 11 illustrates an example set of fields of an instruction portion for a format conversion ALU block (such as the format conversion ALU block 506 of FIG. 5) that can perform a conversion from floating point to fixed point, or from fixed point to floating point. It will be evident to a person of skill in the art that this is an example set of fields and that additional fields may be used and/or different fields may be used.

**Table 11**

| Field | Width | Format | Description |
|---|---|---|---|
| **Fields that may always appear** | | | |
| Command | 3 | Uint/Enum | Identifies the ALU block to be used (for the format conversion ALU block this field may be set to 5) |
| Instruction Length | 3 | Uint | Length of the instruction portion (this may be specified in 32 bit words, minus 1) |
| Select A | 3 | Uint/Enum | The input source for input A (the input to be converted) |
| Select B | 3 | Uint/Enum | The input source for input B (the exponent for the input or the output) |
| Scalar B | 8 | Uint/Enum | Scalar B value |
| Bit depth | 3 | Uint/Enum | Bit depth for the operation (0:8; 1:16; 2:32; 3:64) |
| Format | 1 | Bool | Format for the input to the operation, fixed or float (0: fixed point; 1: float) |
| Sub Command | 3 | Uint/Enum | Sub command for the operation (0:conversion) |
| Scalar 64bit Flag | 1 | Bool | The scalars are 64-bit (vs 32-bit) |
| Extended Setup Section | 1 | Bool | There is an extended setup section |

| **Optional Extended Setup Section** | | | |
|---|---|---|---|
| ALU 64 bits | 1 | Bool | Flag to indicate that the computation is performed in 64 bits (vs 32 bits) |
| Inp Bitdepth | 3 | Uint/Enum | Bit depth of the operation(0:8; 1:16; 2:32; 3:64) |
| Rounding Mode | 4 | Uint/Enum | Rounding mode to be performed |

| **Optional Fields** | | | |
|---|---|---|---|
| Scalar A | 32/64 | Int | Scalar A value (only present when identified as the input source for an input) |
| Scalar C | 32/64 | Int | Scalar C value (only present when identified as the input source for an input) |

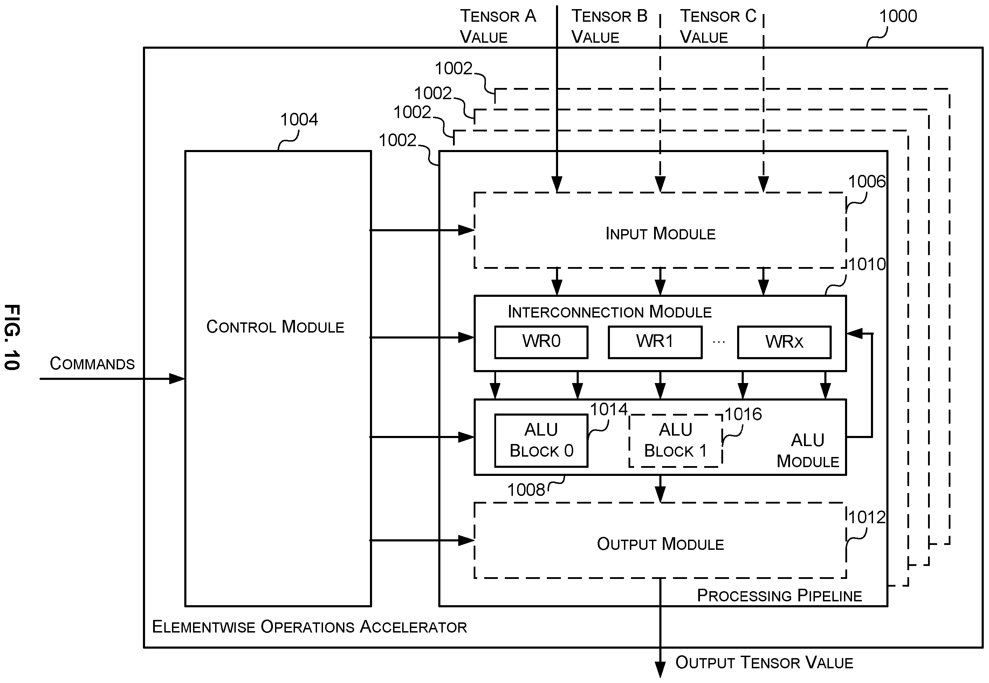

Reference is now made to FIG. 10 which illustrates a second example elementwise operations accelerator 1000 that is able to chain sets of one or more elementwise operations together, wherein a set of one or more elementwise operations is a set of one or more elementwise operations that can be performed by a single ALU block in a single pass of that ALU block (e.g. the set of one or more elementwise operations can be performed sequentially by the same ALU block on the same input). Specifically, instead of only being able to receive an input tensor, perform a single set of one or more elementwise operations on the elements of that tensor using an ALU block, and output the result of the set of one or more elementwise operations, the elementwise operations accelerator 1000 of FIG. 10 can perform a first set of one or more elementwise operations on the input tensor using an ALU block and then subsequently perform a second set of one or more elementwise operations on the result of the first set of one or more elementwise operations using an ALU block (which may the same ALU block that performed the first set of one or more elementwise operations or a different ALU block than the ALU block that performed the first set of one or more elementwise operations).

The elementwise operations accelerator 1000 of FIG. 10 comprises one or more processing pipelines 1002 and a control module 1004. Each processing pipeline 1002 receives elements of a main input tensor and can sequentially perform one or more sets of one or more elementwise operations on the received elements, optionally using one or more secondary input tensors. The control module 1004 receives a set of commands that identifies the sets of elementwise operations that are to be performed on the main input tensor and causes the processing pipeline(s) 1002 to perform the identified sets of one or more elementwise operations on the main input tensor. Having multiple processing pipelines 1002 allows multiple elements of the main input tensor to be processed at the same time or in parallel. In some cases, each processing pipeline 1002 may be able to receive data relating to one element of a tensor at time. In such cases, the number of processing pipelines may be equal to the number of elements the elementwise operations accelerator 1000 can receive data for at the same time. For example, if the elementwise operations accelerator 1000 can receive data for up to eight elements at the same time, then the elementwise operations accelerator 1000 may comprise eight processing pipelines 1002.

In the example shown in FIG. 10, each processing pipeline 1002 comprises an arithmetic logic unit (ALU) module 1008 and an interconnection module 1010. In some cases, each processing pipeline 1002 may also comprise an input module 1006 and/or an output module 1012.

The ALU module 1008 comprises at least one ALU block 1014, 1016. Each ALU block 1014, 1016 is configured to accelerate a set of one or more elementwise operations (e.g. logical and/or mathematical operations) in one or more number formats. Specifically, each ALU bock 1014, 1016 is configured to receive one or more inputs, perform one or more elementwise operations on the received input(s), and output the results of the one or more elementwise operations. The ALU module 1008 may comprise one or more of the ALU blocks described above with respect to FIG. 5. For example, the ALU module 1008 may comprises a fixed point multiply add ALU block such as that described above.

One or more of the ALU blocks 1014, 1016 may be able to perform multiple different elementwise operations, and/or one or more of the ALU blocks may only be able to perform a single elementwise operation. Where an ALU block can perform multiple different elementwise operations the ALU block may be able to perform two or more of the supported elementwise operations sequentially on the same input (e.g. an ALU block may be able to perform a multiplication followed by an addition) or the ALU block may be able to perform only one of the supported elementwise operations on the same input (e.g. an ALU block may be able to perform one of an AND operation and an OR operation). Where an ALU block can perform multiple different elementwise operations, the ALU block may be configured to receive information indicating which of the different elementwise operations are to be performed.

The outputs of a ALU block may be (i) output from the elementwise operations accelerator or provided to the output module 1012 (where there is an output module) where they are then output from the elementwise operations accelerator 1000, or (ii) provided to the interconnection module 1010 where they can be provided to the ALU module as inputs. Allowing the outputs of an ALU block to be provided back to the ALU module as inputs allows the output of an ALU block be the input to an ALU block (the same ALU block or a different ALU block, if there is more than one ALU block) so that multiple sets of one or more elementwise operations can be performed sequentially.

The interconnection module 1010 comprises digital logic circuitry configured to receive values or elements of one or more input tensors, and elements output from the ALU module 1008 and provide each of the received elements to one of the one or more ALU blocks so that a desired set of one or more elementwise operations is performed thereon. For example, the values or elements of an input tensor may be provided, by the interconnection module 1010, to an ALU block which performs a first set of one or more elementwise operations thereon to generate a set of output elements which are provided to the interconnection module. The interconnection module 1010 may then provide those output elements to an ALU block which performs the same or a different set of one or more elementwise operations on the received elements to generate a second set of output elements.

The one or more input tensors may comprise a main input tensor on which one or more sets of one or more elementwise operations is to be performed. In some cases, the one or more input tensors may also comprise one or more secondary input tensors which can be used to perform the sets of one or more operations on the main or primary input tensor. For example, the elements of the main input tensor may be added to the corresponding element of a first secondary input tensor; and then the elements of the addition may be compared bitwise to the corresponding element of a second secondary input tensor. Elementwise operations accelerators known to the Applicant, which is not an admission that they are well known, can receive two input tensors (a main input tensor and a single secondary input tensor). In some examples, the elementwise operations accelerator 1000 may be able to receive three input tensors (which may be referred to as input tensors A, B and C) which allows the elementwise operations accelerator 1000 to receive a main input tensor and up to two secondary input tensors. In some cases, where the elementwise operations accelerator can receive multiple input tensors, any of input tensors (e.g., any of input tensors A, B and C) may be identified as the main or primary input tensor. Increasing the number of secondary input tensors that can be received increases the number and type of elementwise operations that can be performed by the elementwise operations accelerator 1000.

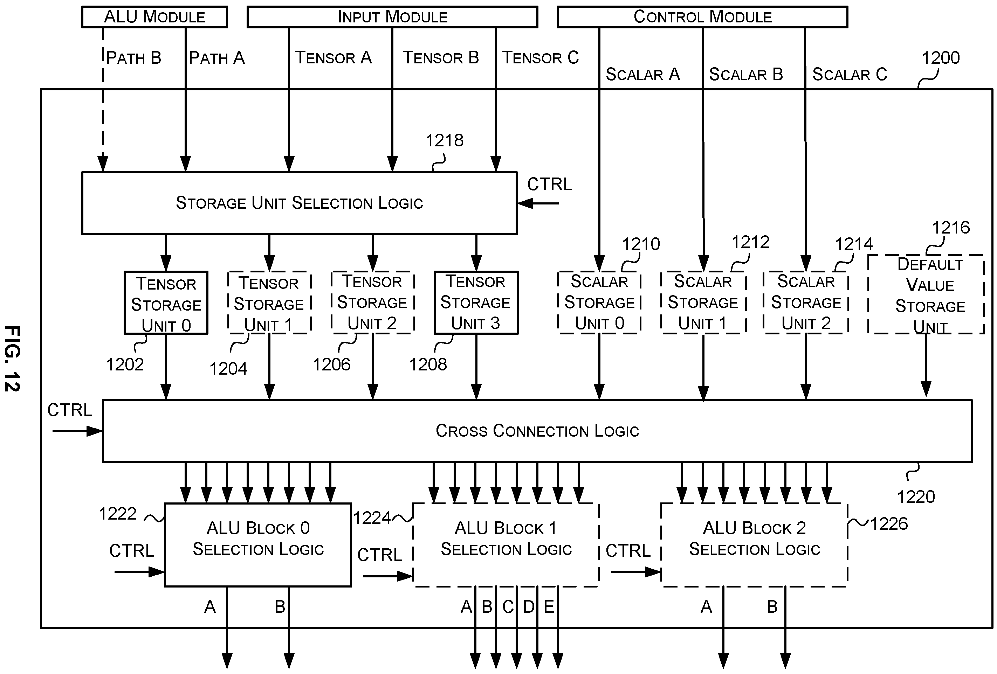

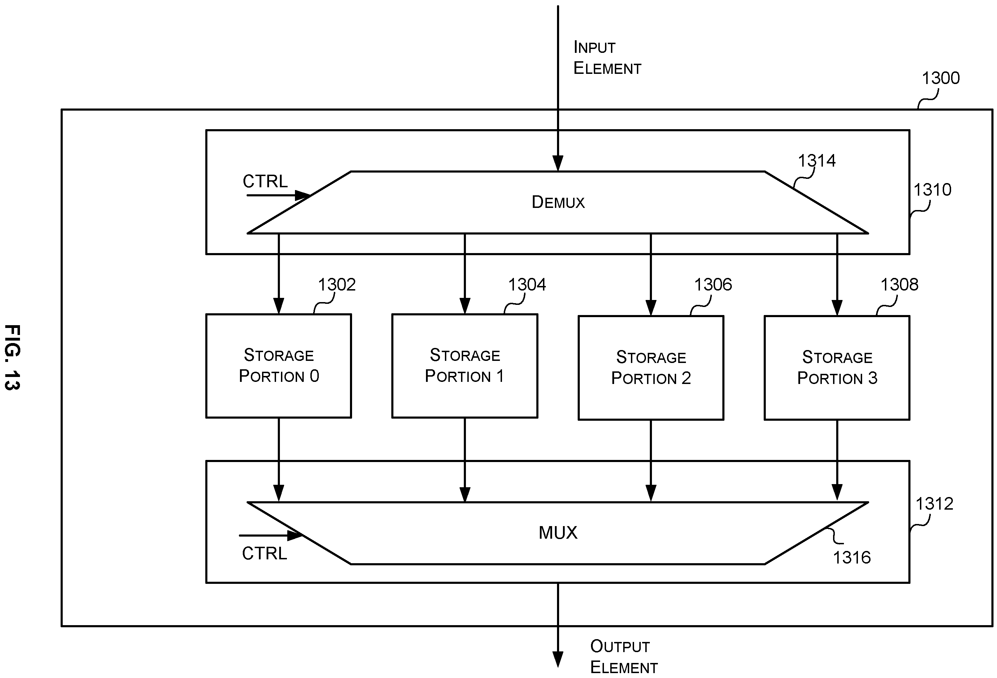

The interconnection module 1010 may comprises switching logic (e.g. a set of one or more multiplexers and/or demultiplexers) that can direct the received elements to the appropriate ALU block at the appropriate time. In some cases, the interconnection module 1010 may also comprise one or more storage units for temporarily storing the input tensor elements and the ALU block output elements. For example, in some cases the interconnection module 1010 may comprise at least X+1 sets of storage units (e.g. registers), wherein X is the number of input tensors that can be received at the elementwise operations accelerator. This allows the interconnection module 1010 to store new values or elements of each input tensor as they are received at the interconnection module 1010 and outputs generated by the ALU module 1008. An example interconnection module which may be used to implement the interconnection module 1010 of FIG. 10 is described below with respect to FIGS. 12 and 13.

In some cases, each processing pipeline 1002 may also comprise an input module 1006. The input module 1006 comprises digital logic circuitry that can optionally or selectively perform one or more pre-processing operations on the elements of the main input tensor prior to providing the elements of the main input tensor to the interconnection module 1010. The one or more pre-processing operations may include, but are not limited to, fixed-point to fixed-point conversion (e.g. scaling), negation, addition of a fixed offset (e.g. scalar) and clamping, and/or broadcasting (e.g. expanding the tensor in one or more dimensions). Where one or more secondary input tensors can be received at the elementwise operations accelerator 1000, the input module 1006 may be able to optionally, or selectively, perform pre-processing on each of the secondary input tensors. In some cases, the input module 1006 may comprise one or more of the features and/or components of the input module 400 of FIG. 4.

Each processing pipeline 1002 may, in some cases, also comprise an output module 1012. The output module 1012 comprises digital logic circuitry configured to receive values output from the ALU module 1008 and output the received values from the elementwise operations accelerator 1000. The output module 1012 may be able to optionally perform post-processing on the received values prior to outputting them from the elementwise operations accelerator 1000. The post-processing may include, but is not limited to, one or more of fixed-to-fixed conversion (e.g. scaling), negation and clamping to a desired bit width. In some cases, the output module 1012 may comprise one or more features of the output module 600 of FIG. 6.

The control module 1004 comprises digital logic circuitry configured to receive a set of commands and control the operation of the one or more processing pipelines 1002 (e.g. the ALU modules 1008 and interconnection modules 1010 (and optionally input modules and/or output modules) thereof) in accordance with the set of commands to cause one or more sets of one or more elementwise operations to be sequentially performed on a main input tensor. As described above, the phrase "a set of one or more elementwise operations" is used herein to mean a set of one or more elementwise operations that can be performed on an input in a single pass of an ALU block (i.e., without having to input data to the ALU block multiple times). For example, if an ALU block can perform multiplication and/or addition (e.g. the ALU block can perform A*B + C) then a set of elementwise operations may be (i) multiplication, (ii) addition, or (iii) multiplication and addition since each of (i), (ii) and (iii) can be performed in a single pass of such an ALU block. In contrast, if an ALU block can perform a bitwise AND (e.g. A AND B) or a bitwise OR (e.g. A OR B) then a set of elementwise operations may be (i) bitwise AND, or (ii) bitwise OR, but not both a bitwise AND operation and a bitwise OR operation since the ALU block cannot perform both an AND operation and an OR operation in the same pass of the ALU block.

The set of commands may comprise, for example, an instruction per set of elementwise operations which comprises information identifying the set of elementwise operations that are to be performed. Where there are multiple ALU blocks each instruction may also identify the ALU block that is to perform the set of one or more elementwise operations. Where the identified ALU block has one or more configurable options (e.g. the elementwise operations(s) that are to be performed, the format of the input(s), and/or the format of the output may be configurable) each instruction may also comprise information indicating the setting for any configurable options.

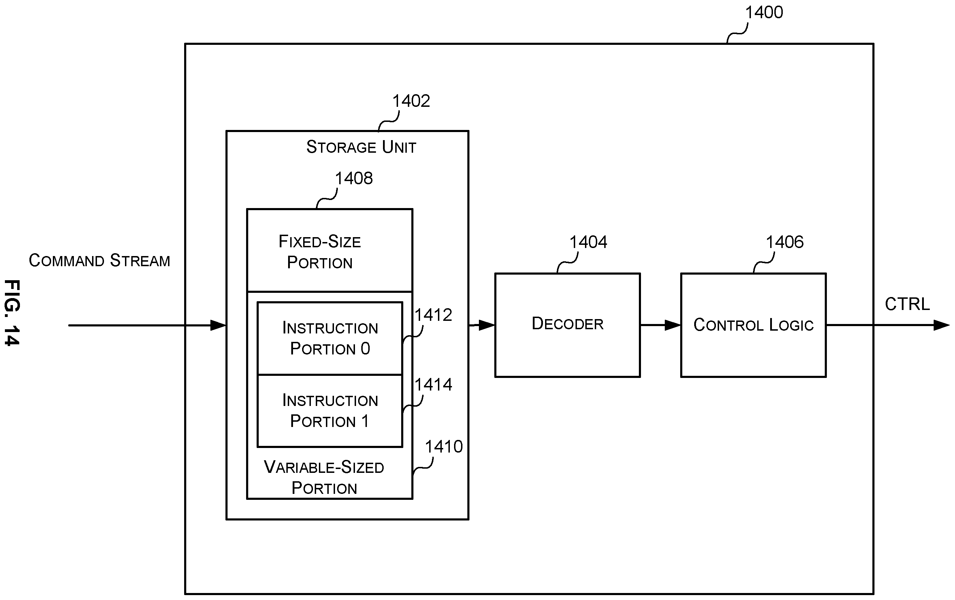

The set of commands may also comprise information indicating the settings for any other configurable options of the processing pipeline(s) 1002. For example, when the processing pipelines 1002 comprise an input module 1006, the set of commands may comprise information identifying one or more of: the number of input tensors being received at the input module 1006 and which pre-processing operations are to be performed by the input module 1006 on each input tensor; and, when the processing pipelines comprise an output module 1012, the set of commands may comprise information identifying which post-processing operations are to be performed by the output module 1012. An example control module which may be used to implement the control module 1004 of FIG. 10 is described below with respect to FIG. 14.

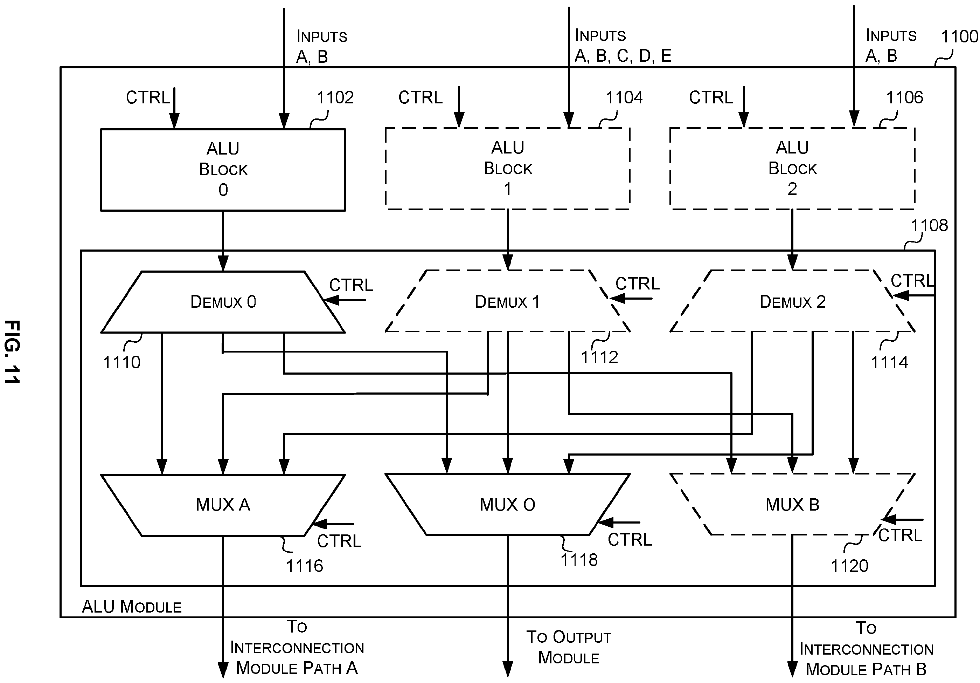

Reference is now made to FIG. 11 which illustrates an example ALU module 1100 for an elementwise operations accelerator which may be used to implement the ALU module 1008 of FIG. 10. The example ALU module 1100 comprises one or more ALU blocks 1102, 1104, 1106 and output selection logic 1108.

Each ALU block 1102, 1104, 1106 comprises digital logic circuitry that is configured to accelerate one or more elementwise operations. Specifically, each ALU block 1102, 1104, 1106 is configured to receive one or more inputs, perform one or more supported elementwise operations (e.g. logical and/or mathematical operations) on the received input(s), and output the result of the one or more elementwise operations. One or more of the ALU blocks may have one or more configurable options (e.g. the ALU block may support multiple elementwise operations and which operation or set of operations that are performed is configurable, the format of the inputs and/or outputs may be configurable, the number of bits of the inputs or outputs may be configurable etc.,). Where an ALU block has one or more configurable options, the ALU block may be configured to receive control information (CTRL) (e.g. from the control module) indicating which configurable options are to be implemented by the ALU block. The number of inputs received at an ALU block and the particular configurable options may vary between ALU blocks. For example, one ALU block may be able to receive two inputs (A, B) whereas another ALU block may be able to receive five inputs (A, B, C, D, E).

In some cases, the ALU module 1100 may comprise one or more of the ALU blocks described above with respect to FIG. 5. For example, the ALU module 1100 may comprise one or more of the bitwise ALU block 502, the fixed point multiply-add ALU block 504, the format conversion ALU block 506, the division, square root, modulo ALU block 508, the floating point add ALU block 510, the floating point multiply ALU block 512 and the select-compare ALU block 514 of FIG. 5. However, it will be evident to a person of skill in the art that this is an example set of ALU blocks and that other example ALU modules may have different ALU blocks.

The ALU module 1100 has at least two output ports or paths wherein results output on one output port/path are output from the elementwise operations accelerator (which may be via the output module, if each processing pipeline has an output module) and results output on at least one other output port are provided to the interconnection module. The output selection logic 1108 is configured to selectively output the results generated by an ALU block on one of the plurality of output ports/paths of the ALU module 1100 in response to control information (which may be received from the control module). Accordingly, the output selection logic 1108 can send the result generated by an ALU block 1102, 1104, 1106 to either to the output (e.g. via the output module) or the interconnection module. A result generated by an ALU block may be sent to the interconnection module if it is not the result of the last set of one or more elementwise operations in the sequence of sets of one or more elementwise operations the elementwise operations accelerator is to perform; and a result generated by an ALU block may be sent to the output (e.g. via the output module) if it is the result of the last set of one or more elementwise operations in the sequence of sets of one or more elementwise operations the elementwise operations accelerator is to perform. For example, if the elementwise operations accelerator is to perform a first set of one or more elementwise operations and then perform a second set of one or more elementwise operations, the result of the first set of one or more elementwise operations generated by an ALU block may be provided to the interconnection module so that it can subsequently be provided as an input to an ALU block to perform the second set of one or more elementwise operations. The result of the second set of one or more elementwise operations generated by an ALU block may then be output from the elementwise operations accelerator (e.g. via the output module).

As described in more detail below, where an ALU module has multiple ALU blocks, it may be possible for two ALU blocks 1102, 1104, 1106 to be operating on different data at the same time. As a result, it may be possible for two ALU blocks 1102, 1104, 1106 to output data at the same time. Only one of the ALU blocks can be generating the results of the final set of one or more elementwise operations. Therefor output of only one of the ALU blocks will be output from the elementwise operations module (e.g. via the output module). However both of the ALU blocks could be generating intermediate results that are to be provided to the interconnection module. With only one output port linked to the interconnection module, both ALU blocks will be contending for the same output port. This may mean that the output of one of the ALU blocks is buffered or the operation of that ALU block is stalled until the output can be output on the output port coupled to the interconnection module. To avoid such an issue, the ALU module 1100 may comprise at least two output ports or paths (path A and path B) that are coupled to the interconnection module so that the outputs of two ALU blocks can be provided to the interconnection module at the same time. In such cases, the control module may be configured to cause the results of consecutive sets of one or more elementwise operations to be sent on different interconnection module output ports or paths. In other words the results of sets of one or more elementwise operations may ping-pong between path A and path B. For example, the results of a first set of one or more elementwise operations generated by an ALU block may be sent to the interconnection module on path A, the results of a second set of one or more elementwise operations generated by an ALU block may be sent to the interconnection module on path B, the results of a third set of one or more elementwise operations generated by an ALU block may be sent to the interconnection module on path A and so on until the results of the last set of one or more elementwise operations generated by an ALU block are output from the elementwise operations accelerator (e.g. via the output module).

The output selection logic 1108 may be implemented in any suitable manner. In one example the output selection logic 1108 may comprises switching logic (e.g. one or more demultiplexers and/or multiplexers) to be able to direct the outputs to the desired output port. For example, as shown in FIG. 11, the output selection logic 1108 may comprise a demultiplexer 1110, 1112, 1114 for each ALU block and a multiplexer 1116, 1118, 1120 for each output port of the ALU module 1100. For example, if there are three ALU blocks then there may be three demultiplexers and if there are three output ports there may be three multiplexers. Each demultiplexer 1110, 1112, 1114 is configured to receive the output of one ALU block and, in response to control information (CTRL), provide that output to one of the multiplexers 1116, 1118, 1120. Each multiplexer 1116, 1118, 1120 is configured to receive the output of one or more demultiplexers 1110, 1112, 1114 and output, in response to control information (CTRL), one of the demultiplexer outputs on the corresponding output port. For example, if the output of the first ALU block 1102 (ALU block 0) is to be provided to the interconnection module on path A, then the demultiplexer 1110 associated with ALU block 0 receives control information (CTRL) which causes the demultiplexer 1110 to output the ALU block 0 output on a first port which is coupled to the multiplexer 1116 (Mux A) associated with interconnection module path A; and the multiplexer 1116 associated with the interconnection module path A receives control information (CTRL) which causes the multiplexer 1116 to output the first input (the input corresponding to the first demultiplexer 1110 (Demux 0)) on the output port associated with interconnection module path A.

In some cases, each ALU block 1102, 1104, 1106 may be able to receive a maximum number of J-bits per input at a time (e.g. each cycle). In some cases, each ALU block 1102, 1104, 1106 may only be able to receive and process J-bit values. However, in other cases, each ALU block 1102, 1104, 1106 may be able to receive and process J-bit values or K-bit values, where K is double J (i.e., K= 2*J). For example, J may be 32-bits and K may be 64-bits. However, this is just an example pair of J and K values and J and K may be other suitable values such as 16-bits and 32-bits respectively. Since only J-bits can be received at the same time, a K-bit value may be received over multiple cycles. For example, the J-LSBs of the value may be received in a first cycle and the J-MSBs are received in a second, subsequent cycle.

Similarly, in some cases, each ALU block 1102, 1104, 1106 may be able to output a maximum of J-bits at a time. In some cases, each ALU block 1102, 1104, 1106 may only be able to output J-bit values. However, in other cases, each ALU block 1102, 1104, 1106 may be able to output J-bit or K-bit values, where K is double J. Since only J-bits can be output at the same time, a K-bit element may be output over multiple cycles. For example, in a first cycle the J-LSBs of the element may be output and in a second cycle the J-MSBs may be output.

Reference is now made to FIG. 12 which illustrates an example implementation of an interconnection module 1200 for an elementwise operations accelerator which may be used to implement the interconnection module 1010 of FIG. 10. The interconnection module 1200 is configured to receive the elements of the input tensor(s) and elements of the intermediate tensor(s) generated by the ALU module and provide them to the appropriate ALU block at the appropriate time to allow the ALU module to perform a desired sequence of sets of one or more elementwise operations on the elements of a main input tensor.

As described above, each ALU block of the ALU module can receive one or more inputs and perform one or more elementwise operations on the one or more inputs to generate an output. For example, the bitwise ALU block 502 of FIG. 5 may be configured to receive a first input (A) and an optional second input (B) and perform a bitwise operation (e.g. NOT) on A, or a bitwise operation (e.g. OR, AND, XOR) on A and B; and the select-compare ALU block 514 of FIG. 5 may be configured to receive a first input (A), a second input (B), a third input (C), a fourth input (D) and a fifth input (E) and perform a comparison between A and B (optionally using E) and output C or D based on the comparison.

In examples described herein, each input to an ALU block may be provided by one of a plurality of input sources. The plurality of input sources comprises: (i) the input tensors (e.g. input tensors A, B, C); (ii) the intermediate tensors generated by the ALU module; and optionally (iii) one or more scalars (wherein a scalar is value that is static for the elementwise operation and may be provided in the set of commands); and/or (iv) default values.

The interconnection module 1200 is configured to, each processing cycle, dynamically connect one input source to each input of a particular ALU block so that the ALU block can perform a desired set of one or more elementwise operations on a desired input. For example, if the particular ALU block is the bitwise ALU block 502 of FIG. 5 that can receive two inputs (inputs A and B) then the interconnection module 1200 is configured to connect (i) an input source to input A of the bitwise ALU block 502, and (ii) another input source to input B of the bitwise ALU block 502 - e.g., the interconnection module 700 may connect the first input (e.g. input A) to the input tensor A elements output by the input module and connect the second input (e.g. input B) to a scalar.

In the example shown in FIG. 12 the interconnection module 1200 comprises a plurality of input source storage units 1202, 1204, 1206, 1208, 1210, 1212, 1214, 1216 which are used to store elements of the input sources; and logic 1218, 1220, 1222, 1224, 1226 for (i) routing elements of the input sources to an appropriate storage unit and/or (ii) routing elements output from the storage units to the input(s) of the ALU blocks.

The input source storage units 1202, 1204, 1206, 1208, 1210, 1212, 1214, 1216 may comprise at least X tensor storage units (e.g. register or set of registers) 1202, 1204, 1206, 1208 wherein X is the number of input tensors that can be input to the elementwise operations accelerator. This allows element(s) of all input tensors to be stored at the same time. However, having only X tensor storage units may limit the sets of elementwise operations that can be performed by the elementwise operations hardware accelerator. Specifically, the sets of elementwise operations that can be performed by the elementwise operations hardware accelerator may be limited to a set of operations where an input tensor is used once in the set of elementwise operations such that once an element of that input tensor has been used to perform an operation its storage unit can be used to store the resulting element of an intermediate tensor Accordingly, in some cases, the input source storage units 1202, 1204, 1206, 1208, 1210, 1212, 1214, 1216 may comprise at least X+1 tensor storage units. For example, in the example shown in FIG. 12 up to three input tensors (input tensors A, B and C) can be received at the elementwise operations accelerator, thus there are four tensor storage units 1202, 1204, 1206, 1208. However, as described above, this is an example only and an elementwise operations accelerator may be able to receive any number of tensors (e.g. one, two, or more than two). Having at least X+1 storage units increases the sets of elementwise operations that can be performed by the elementwise operations accelerator. Specifically, it allows elements of all the input tensors to be maintained in the storage units while still being able to store elements of an intermediate tensor. This allows one or more of the input tensors to be used more than once in a set of elementwise operations.

Each tensor storage unit 1202, 1204, 1206, 1208 can receive (e.g. from the input module), store, and output elements of an input tensor or an intermediate tensor. A tensor storage unit 1202, 1204, 1206, 1208 is not necessarily large enough to store a whole tensor, thus the contents of a tensor storage unit 1202, 1204, 1206, 1208 may change as new elements of a tensor are received at the interconnection module 1200.

In some cases, one or more of the tensors (input tensor or intermediate tensor) that are received at the interconnection module 1200 may be dynamically associated with one of the tensor storage units and any elements of the tensor are stored in the associated tensor storage unit. For example, tensor A may be dynamically associated with the first tensor storage unit 1202 and tensor C may be dynamically associated with the fourth tensor storage unit 1208. In such cases, the interconnection module may have storage unit selection logic 1218 which directs the elements of the received tensor(s) to the associated tensor storage unit 1202, 1204, 1206, 1208 in response to control information (CTRL) (which may be generated by the control module). For example, in the above example, the storage unit selection logic 1218 may cause, in response to control information (e.g. received from the control module), the elements of tensor A to be stored in the first tensor storage unit 1202 and cause the elements of tensor C to be stored in the fourth tensor storage unit 1208. The storage unit selection logic 1218 may comprise, for example, switching logic (e.g. one or more multiplexers or demultiplexers). In some cases, each input tensor may have a default tensor storage unit which is used to store elements of that tensor, when it is present, and each intermediate tensor may be dynamically associated with a tensor storage unit and the tensor storage unit that is associated with an intermediate tensor may be specified in the set of commands. For example, the first tensor storage unit 1202 may be the default storage unit for Tensor A, the second tensor storage unit 1204 may be the default storage unit for Tensor B and the third tensor storage unit 1206 may be the default storage unit for Tensor C.

In some cases, the input source storage units 1202, 1204, 1206, 1208, 1210, 1212, 1214, 1216 may also comprise one or more scalar storage units 1210, 1212, 1214 for storing scalars that can be specified for a set of one or more elementwise operations. In some cases, as shown in FIG. 12 there may be a scalar storage unit for each scalar that can be specified for an instruction. In the examples discussed herein each instruction can specify up to three scalars - scalar A, scalar B and scalar C, thus there are three scalar storage units 1210, 1212, 1214 in the example shown in FIG. 12. However, it will be evident to those of skill in the art that this is an example only and that any number of scalars may be specified. Where, for an elementwise operation, the same value is to be applied to each element of an input tensor (e.g. if 5 is to be added to each element of an input tensor) it may be more efficient to provide the value as a single scalar then inputting a second input tensor with every value set to 5. Each scalar storage unit 1210, 1212, 1214 may be configured to receive and store one scalar value - the scalar value for the current instruction that is being executed. The scalars for each instruction may be specified in the set of commands and provided to the interconnection module 1200 by the control module.

Since the scalars are common to all of the processing pipelines 1002, in some cases the scalar storage units 1210, 1212, 1214 may form part of the control module 1004 so that only one copy of the scalars is stored. In such cases, the control module 1004 may, each processing cycle, provide each interconnection module 1010 (or each ALU module 1008) with the scalars for the current instruction. For example, if instruction 0 is being initiated in a processing cycle then the control module 1004 may be configured to provide each interconnection module 1010 (or each ALU module 1008) with the scalars (e.g. scalars A, B and C) for instruction 0 in that processing cycle. Similarly, if instruction 4 is being initiated in a processing cycle then the control module 1004 may be configured to provide each interconnection module 1010 (or each ALU module 1008) with the scalars (e.g. scalars A, B and C) for instruction 4 in that processing cycle.

The input source storage units 1202, 1204, 1206, 1208, 1210, 1212, 1214, 1216 may also comprise a default value storage unit 1216 that is configured to store one or more default values. In some cases, there may be a default value for each input of each ALU block. For example, there may be a default value for input A of an ALU block and a different default value for input B of the same ALU block. In some cases, the default value for an input is set so that the operation performed using that input is not performed when the input is set to the default value. Accordingly, the default value for an input to an ALU block may vary be based on the operation that is performed using that input. For example, if an input is an input to a multiplication operation then the default value for that input may be set to 1 so that the other input to the multiplication is just output when the default value is used as the input. Similarly, if an input is an input to an addition operation then the default value for that input may be set to 0 so that the other input to the addition is just output when the default value is used. The default value for an input to an ALU block may also vary based on the format of the input and/or operation.

The interconnection module 1200 comprises ALU block selection logic 1222, 1224, 1226 for each ALU block of the ALU module and cross connection logic 1220 that is configured to connect the output of each input source storage unit to each ALU block selection logic 1222, 1224, 1226. For example, if there are three ALU blocks in the ALU module then there may be three ALU block selection logic each of which are connected, via the cross connection logic 1220, to the output of each input source storage unit 1202, 1204, 1206, 1208, 1210, 1212, 1214, 1216. However, it will be evident to a person of skill in the art that this is an example only.

Each ALU block selection logic 1222, 1224, 1226 is configured to dynamically couple the output of one input source storage unit to each input of the corresponding ALU block in response to control information (CTRL) so that the values output from that input source storage unit are provided as the desired input to the ALU block. For example, if there is an ALU block that receives a first input (A) and a second input (B), then the ALU block selection logic for that ALU block may be configured to selectively couple one of the input source storage units to the first input (A) and selectively couple a different one of the input source storage units to the second input (B). Each ALU block selection logic 1222, 1224, 1226 may comprise switching logic (e.g. one or more multiplexers) or the like for each input of the corresponding ALU block that comprises a set of input ports each of which is coupled to one of the input source storage units, and an output port that is coupled to the input of the corresponding ALU block and can selectively connect one of the inputs to the output. For example, as shown in FIG. 8, selection logic 716 for an ALU block with two inputs (A and B) may comprise first switching logic (e.g. a multiplexer 802 - "MUX A") for the first input (A) which is coupled to each of the input source storage units and selects, in response to control information (CTRL A), one of the inputs to output; and second switching logic (e.g. a multiplexer 804 - "MUX B") for the second input (B) which is coupled to each of the input source storage units and selects, in response to control information (CTRL B), one of the inputs to output.

While in the example shown in FIG. 12, there is a single default value storage unit 1216 which is coupled (e.g. via the cross connection logic 1220) to each ALU block selection logic 1222, 1224, 1226, in other cases each ALU block selection logic 1222, 1224, 1226 may have its own set of one or more default value storage units which comprises the default values for the inputs to the corresponding ALU block. For example, the selection logic for an ALU block with two inputs (A and B) may comprise a default value storage unit that stores the default value for input A and another default value storage unit that stores the default value for input B. The values of these storage units may be set based on the operation that is to be performed by the ALU block and/or the format (floating point vs fixed point) the ALU block is to perform the operation in.

In some cases, when a set of commands comprises multiple instructions (e.g. multiple sets of one or more elementwise operations) the control module may be configured to cause the ALU module to sequentially perform each set of one or more elementwise operations on an element of a main tensor prior to performing any operations on the next element of the main input tensor. For example, if the set of commands identify a first set of one or more elementwise operations (i.e., a first instruction), a second set of one or more elementwise operations (i.e., a second instruction) and a third set of one or more elementwise operations (i.e., a third instruction), then the control module may cause the ALU module to perform the first set of one or more elementwise operations on a first element of the main input tensor to generate a first element of a first intermediate tensor, cause the ALU module to perform the second set of one or more elementwise operations on the first element of the first intermediate tensor to generate a first element of a second intermediate tensor, cause the ALU module to perform the third set of one or more elementwise operations on the first element of the second intermediate tensor to generate a first element of the final tensor, then repeat the process for the next element of the main input tensor.

However, since it may take multiple cycles for an ALU block to generate the result of a set of one or more elementwise operations, there may be a delay from when the first set of one or more elementwise operations for an element are initiated at an ALU block to when a result of that first set of one or more elementwise operations is output by that ALU block. Accordingly, in some cases, to mask this delay the control module may be configured to cause the ALU module to process Y elements of the main input tensor at a time, wherein Y is an integer greater than or equal to 2. Specifically, the control module may be configured to cause the ALU module to perform each identified set of one or more elementwise operations on a set of Y elements of the main input tensor prior to performing any elementwise operations on the next set of Y elements of the main input tensor.

In some cases, the control module may be configured to perform a plurality of instructions (e.g. a plurality of sets of one or more elementwise operations) on a set of Y elements of the main input tensor by causing the ALU module to (i) perform the first set of operations on each of the Y elements; (ii) perform the second set of one or more elementwise operations on each of the results generated in (i); (iii) perform the third set of one or more elementwise operations on each of the results generated in (ii) and so on until all sets of one or more elementwise operations have been performed on each element in the set of Y elements of the main input tensor. In other words, the same instruction (set of one or more elementwise operations) is performed on different elements while the elements for the next instruction (set of one or more elementwise operations) are still outstanding.

For example, if the set of commands identify three instructions (e.g. three sets of one or more elementwise operations), numbered 0 to 2, and Y is equal to 4 (i.e. the elements of the input tensor are processed 4 elements at a time) the control module may be configured to cause the ALU module to perform the elementwise operations set out in Table 12.

**Table 12**

| **Cycle** | **Instruction/Set of one or more elementwise operations** | **Input** | **Output** |
|---|---|---|---|
| 0 | 0 | Element 0 of input tensor | Element 0 of intermediate tensor 0 |
| 1 | 0 | Element 1 of input tensor | Element 1 of intermediate tensor 0 |
| 2 | 0 | Element 2 of input tensor | Element 2 of intermediate tensor 0 |
| 3 | 0 | Element 3 of input tensor | Element 3 of intermediate tensor 0 |
| 4 | 1 | Element 0 of intermediate tensor 0 | Element 0 of intermediate tensor 1 |
| 5 | 1 | Element 1 of intermediate tensor 0 | Element 1 of intermediate tensor 1 |
| 6 | 1 | Element 2 of intermediate tensor 0 | Element 2 of intermediate tensor 1 |
| 7 | 1 | Element 3 of intermediate tensor 0 | Element 3 of intermediate tensor 1 |
| 8 | 2 | Element 0 of intermediate tensor 1 | Element 0 of final/output tensor |
| 9 | 2 | Element 1 of intermediate tensor 1 | Element 1 of final/output tensor |
| 10 | 2 | Element 2 of intermediate tensor 1 | Element 2 of final/output tensor |
| 11 | 2 | Element 3 of intermediate tensor 1 | Element 3 of final/output tensor |
| The above is then repeated for received elements 4 to 7 of the input tensor and so on. | | | |

Performing the sets of elementwise operations in this manner means that even if it takes four cycles to perform the first set of one or more elementwise operations on an element the result of the first set of one or more elementwise operations for the first element (element 0) will be available by cycle 4 so the control module can cause the ALU module to perform the second set of one or more elementwise operations thereon right away. If, however, the input for an instruction has not yet been generated when it is time to perform that instruction the control module may be configured to stall the execution of that instruction. For example, if in cycle 4, element 0 of intermediate tensor 0 has not been generated (e.g. if it takes more than 4 cycles to perform instruction 0), then the control module may stall issuing instruction 1 to the ALU module until element 0 of intermediate tensor 0 has been generated.

In some cases, to enable a processing pipeline to process Y elements of the main input tensor at a time, each tensor storage unit 1202, 1204, 1206, 1208 may be able to store at least Y elements of a tensor at the same time. For example, each tensor storage unit may comprise: a plurality of portions each of which can store a predetermined number of bits (e.g. J bits) of an element; input logic; and output logic. The input logic is configured to cause J-bits of an element of a tensor be stored in one of the portions, and the output logic is configured to output the J-bits of an element stored in one of the portions. Where each element is J bits then each tensor storage unit may comprise Y portions, and where each element is K-bits (wherein K=2*J) then each tensor storage unit may comprise 2*Y portions.

For example, reference is now made to FIG. 13 which illustrates an example tensor storage unit 1300 which may be used to implement any of the tensor storage units 1202, 1204, 1206, 1208 of FIG. 12. The tensor storage unit 1300 comprises a plurality of storage portions 1302, 1304, 1306, 1308 each of which can store a predetermined number of bits (e.g. J-bits) of an element of a tensor; input logic 1310; and output logic 1312. The input logic 1310 is configured to receive J-bits of element of a tensor that is to be stored in the tensor storage unit and cause the received J-bits to be stored in one of the storage portions 1302, 1304, 1306, 1308. The input logic 1310 may be implemented in any suitable manner. For example, as shown in FIG. 13, the input logic 1310 may comprise a demultiplexer 1314 that is configured to receive the J-bits of an element of a tensor and selectively provide the J-bits of the element to one of the storage portions in response to control information (CTRL). The output logic 1312 is configured to receive the J-bits stored in each storage portion 1302, 1304, 1306, 1308 and output one set of J-bits. The output logic 1312 may be implemented in any suitable manner. For example, as shown in FIG. 13 the output logic 1312 may comprise a multiplexer 1316 that is configured to receive the J-bits stored in each storage portion 1302, 1304, 1306, 1308 and selectively output one of the sets of J-bits in response to control information (CTRL). In some cases, each storage portion may be a register or a set of registers.

In some cases, the control module may be configured to cause the elements of a tensor to be stored in the portions of a tensor storage unit in a round robin manner. For example, for the example tensor storage unit of FIG. 13, the control module may cause the first J-bits of an element of a tensor to be stored in storage portion 0, the second J-bits of an element to be stored in storage portion 1, the third J-bits of an element to be stored in storage portion 2, the fourth J-bits of an element to be stored in storage portion 3, the fifth J-bits of an element to be stored in storage portion 0 and so on. Where the elements are J-bits this means that elements 0, 1, 2 and 3 of a tensor are stored in portions 0, 1, 2 and 3 respectively, and where the elements are K-bits this means that the LSBs of element 0 are stored in portion 0, the MSBs of element 0 are stored in portion 1, the LSBs of element 1 are stored in portion 2 and the MSBs of element 1 are stored in portion 3.

Reference is now made to FIG. 14 which illustrates an example control module 1400 for an elementwise operations accelerator which may be used to implement the control module 1004 of FIG. 10. The control module 1400 is configured to receive a set of commands that indicates how an input tensor is to be processed by the elementwise operations accelerator which causes the control module to issue commands and/or control signals to the other modules of the elementwise operations accelerator so that the input tensor is processed in the desired manner. In the example shown in FIG. 14 the control module 1400 comprises a storage unit 1402 for storing the received set of commands, a decoder 1404 for decoding the set of commands, and control logic 1406 for controlling the other modules of the elementwise operations accelerator in accordance with the decoded set of commands.

The set of commands received by the control module 1400 may comprise a stream or sequence of bits which are divided into a plurality of fields, wherein each field provides specific information to the control module 1400 on how the other modules of the elementwise operations accelerator are to be configured to perform a sequence of one or more sets of elementwise operations on an input tensor. In some cases, the set of commands may be divided into a fixed-sized or static portion 1408 and a variable-sized portion 1410.

The fixed-sized portion 1408 of the set of commands may comprise information (e.g. a set of fields) that is always provided in the set of commands regardless of the elementwise operations to be performed. Since the fields in the fixed-size portion are predetermined the fixed-sized portion has a fixed or predetermined number of bits. In some cases, the fixed-size portion of the set of commands may comprise information (e.g. a set of fields) that indicates one or more of the following: how many input tensors are to be received (if multiple input tensors can be received), the format of each of the input tensors (e.g. floating point or fixed point, J-bit or K bit), the size of the variable length portion of the set of commands, the size of the input tensors (e.g. W, H, C dimensions as shown in FIG. 2), what pre-processing operations are to be performed on each tensor input to the elementwise operations accelerator (e.g. fixed-to-fixed conversion, negation, offset, broadcast), what post-processing operations are to be performed on the elements of the final tensor output from the ALU module (e.g. fixed-fixed conversion, negation, clamping), and/or the format of the output tensor (e.g. fixed point or floating point).

In some cases, the fixed-sized portion 1408 may comprise one or more of the fields shown in Table 4. In some cases, the fixed-sized portion 1408 may, in addition, to the fields shown in Table 4 comprise a field (e.g. an Ops field) that indicates the number of instructions in the variable-sized portion 1410. In some cases, the Ops field may be an 8-bit Ulnt field.

The variable-sized portion 1410 comprises one or more instruction portions 1412, 1414. Each instruction portion 1412, 1414 comprises information (e.g. a set of fields) that identifies a set of one or more elementwise operations to be performed. Where the ALU module comprises a plurality of ALU blocks, each instruction portion 1412, 1414 may comprise a field (which may be referred to as the command field) that identifies the ALU block of the plurality of ALU blocks that is to perform the set of elementwise operations and a field that identifies the length of the instruction portion. In some cases, each ALU block may be assigned a unique identifier number and an ALU block may be identified by setting the command field to that number. However, in other cases, multiple ALU blocks may share the same identifier number and the other fields in the instruction portion 1412, 1414 may be used to identify which of the ALU blocks that are associated with the same identifier is to be used. Table 5 illustrates an example set of identifiers which may be used to identify the ALU blocks of FIG. 5.

Each instruction portion 1412, 1414 may also comprise a set of fields that describe how the identified ALU block is to be configured to perform the desired set of one or more elementwise operations. Accordingly, the set of fields in an instruction portion 1412, 1414 may vary based on which ALU block is to perform the desired set of one or more elementwise operations. Each instruction portion 1412, 1414 may comprise one or more fields that indicate or identify one or more of the following: which input source is to be used for each input of the identified ALU block (e.g. if the ALU block is to receive an input A and an input B, the variable length section may specify which input source (input tensor, intermediate tensor, scalar, default value) is to be used for each of inputs A and B); if the ALU block can perform a plurality of different operations, the operation(s) the ALU block is to perform; the scalars to be used in the operation; whether the set of one or more elementwise operations should be performed in J-bits (e.g. 32 bits) or K-bits (64-bits); whether the set of one or more elementwise operations is to be performed in fixed point number format or floating point format; the bit depth of the elementwise operation etc.

Tables 6 to 11 describe example instruction portions 1412, 1414 for the example ALU blocks described above with respect to FIG. 5.

In some cases, each instruction portion 1412, 1414 may also comprise information indicating (a) whether the instruction is the last instruction in the variable-sized portion; (b) if the instruction is not the last instruction in the variable-sized portion, information indicating which tensor storage unit of the interconnection module is to be used to store the intermediate tensor generated by the set of one or more elementwise operations. For example, each instruction portion 1412, 1414 may comprise an "Update regs" field that identifies the tensor storage unit that is to be used to store the results of the associated set of one or more elementwise operations (in some cases this may be a 3-bit Ulnt field which identifies a tensor storage unit by an index associated therewith) and/or an "Output" field that indicates whether this is the last instruction (in some cases this may be a 1-bit Boolean field).

In some cases, the maximum number instructions that can be chained together in a set of commands may be based on the size of the storage unit 1402. For example, if each instruction comprises a minimum set of fields that have a minimum number of bits, M, (e.g. 32 bits) then the storage unit may be sized to store a variable-sized portion of at least N*M bits so that it can store the commands for up to N instructions. In other words, a set of commands may identify up to N sets of one or more elementwise operations. In some cases, N may be 64. However, it will be evident to a person of skill in the art that this is just an example, and that N may be any suitable number. However, as described above with respect to Tables 6 to 11, in some cases, an instruction may have one or more optional fields that require additional bits. For example, if scalars are provided as part of the instruction the scalars may be provided in an optional field. So, the maximum number of instructions that a set of commands may comprise may be reduced where the optional fields for an instruction are used. The inventors anticipate that in most cases a set of commands may comprise four or fewer instructions (e.g. four or fewer sets of one or more elementwise operations will be chained together).

The decoder 1404 is configured to decode the command stream and cause the control logic 1406 to issue control information to the other modules of the elementwise operations accelerator that cause the identified sets of one or more elementwise operations to be performed on elements of an input tensor. In some cases, the decoder 1404 may be configured to initialise the system by sending control information to the input module and the output module based on the decoded fixed-sized portion 1408, and then send, each processing cycle, control information to the interconnection module and the ALU module that causes the ALU module to perform an instruction (a set of one or more elementwise operations) on a set of one or more inputs. Where each instruction can be performed by a single ALU block this means that in each cycle only one ALU block receives new input(s) to be processed.

As described above, in some cases, where a set of commands comprises multiple instructions, the control module 1400 may be configured to process the elements of the main input tensor in batches of Y elements, wherein Y may be referred to as the SUPPORTED_LATENCY. For example, in some cases, the control module may load the tensor storage units with the first Y elements of the input tensor(s) then, (i) cause the ALU module to perform the first instruction (first set of one or more elementwise operations) on each of the Y elements of the input tensor, (ii) cause the ALU module to perform the next instruction (second set of one or more elementwise operations) on each of the Y outputs of step (i); and so on until the control module has caused the ALU module to perform the last instruction (last set of one or more elementwise operations) on each of the Y outputs of the previous instruction. The control module may then be configured to repeat this process for the next Y elements. In some cases, the control module may wait until the final output elements are generated for the first Y elements before loading the tensor storage units with the next Y elements of the input tensor(s). However, in some cases, to improve performance the control module may be configured to, as soon as the last instruction has been initiated, cause the next Y elements of the input tensor(s) to be loaded into the tensor storage units.

Where a set of Y elements of a tensor to be used as an input to an instruction are stored in different portions of a tensor storage unit, the control module may be configured to cause the ALU module to perform an instruction on each of a set of Y elements of a tensor by issuing the same control information to the ALU module each of Y cycles, and issuing control information to the interconnection module that causes the interconnection module to provide the contents of a different portion as input to the relevant ALU block in each cycle (e.g. by incrementing through the tensor storage unit portions, advancing one each cycle).

For example, if Y=4, in a first processing cycle the control module 1400 may issue control information to the interconnection module which causes the interconnection module to provide the element in portion 0 of tensor storage unit 0 to input A of an ALU block, and control information to the ALU module which causes the ALU module to perform instruction 0 on input A; in a second cycle the control module 1400 may be configured to issue control information to the interconnection module which causes the interconnection module to provide the element in portion 1 of tensor storage unit 0 to input A of an ALU block, and control information to the ALU module which cause the ALU module to perform instruction 0 on input A; in a third cycle the control module 1400 may be configured to issue control information to the interconnection module which causes the interconnection module to provide the element in portion 2 of tensor storage unit 0 to input A of an ALU block, and control information to the ALU module which cause the ALU module to perform instruction 0 on input A; and in a fourth cycle the control module 1400 may be configured to issue control information to the interconnection module which causes the interconnection module to provide the element in portion 3 of tensor storage unit 0 to input A of an ALU block, and control information to the ALU module which cause the ALU module to perform instruction 0 on input A.

Since in these examples, the control module only issues control information for a new instruction every Y cycles (or, as described in more detail below, 2*Y cycles where the inputs are in K-bit format), the decoder 1404 may have Y (or 2*Y) cycles to decode each instruction portion 1412, 1414. In some cases, the control module may be configured to decode each instruction for each set of Y input elements. For example, where there are three instructions then the control module may be configured to decode the first instruction and then issue control information to the interconnection module and the ALU module which cause the ALU module to perform the first instruction on each element of the set of Y elements; the control module may then decode the second instruction and then issue control information to the interconnection module and the ALU module which cause the ALU module to perform the second instruction on each first instruction output; and the control module may then decode the third instruction and then issue control information to the interconnection module and the ALU module which cause the ALU module to perform the third instruction on each second instruction output. The control module then repeats this for the next set of Y input elements including decoding each instruction again and so on. To save time and resources the control module may be configured to, when there is only one instruction, decode the single instruction only once instead of decoding it for each set of Y elements.

In some cases, the control module may be configured to cause each tensor storage unit to output the contents of the same position in the same cycle regardless of whether the elements from all of the tensor storage units will be used to implement the current instruction. For example, where Y=4 the control module may be configured to cause each tensor storage unit to output the contents of position 0 thereof in a first cycle, position 1 in a second cycle, position 2 in a third cycle, position 3 in a fourth cycle and position 0 in a fifth cycle and so on. This means that the control module just has to cause each tensor storage unit to cycle through the positions and can send the same control information to each tensor storage unit (e.g. Mux 1316 thereof). Since the last set of elements that are processed by the ALU module may comprise less than Y elements, the control module may not cycle through all Y positions for that last set. In other words, the control module may be able to cause the ALU module to perform the instructions on sets smaller than Y for the last set.

The control module may cause the other selection logic (e.g. cross connection logic 1220 and/or ALU block selection logic 1222, 1224, 1226) to direct the appropriate elements output from the tensor storage units to the appropriate inputs of an ALU block. This can simplify the other selection logic as the other selection logic (cross connection logic 1220 and/or ALU block selection logic 1222, 1224, 1226) just has to select a particular tensor storage unit (which is akin to selecting a particular tensor) and the tensor storage unit will output the appropriate element thereof at the appropriate time.

What may be stored in the tensor storage units and what the control module may cause to be output therefrom will now be described for several example scenarios. In these examples the elementwise operations accelerator can receive up to three input tensors (tensors A, B and C); the interconnection module comprises four tensor storage units, with a plurality of portions each; tensor A is stored in the first tensor storage unit by default, tensor B is stored in the second tensor storage unit by default, and tensor C is stored in the third tensor storage unit by default; and the elementwise operations accelerator comprises CALC_BLOCKS processing pipelines such that CALC_BLOCKS elements of a tensor are processed in parallel.

Table 13 shows what the control module may cause to be output from each tensor storage unit of a single processing pipeline in each cycle for a first example set of commands that comprise three instructions (instructions 0, 1, 2), there are input tensors A, B and C, the elements of the first intermediate tensor (the results of instruction 0) are stored in the fourth tensor storage unit (tensor storage unit 3); the elements of the second intermediate tensor (the results of instruction 1) are stored in the second tensor storage unit (tensor storage unit 1); the input tensors have a size of W=16, H=16, C=5; CALC_BLOCKS=8 (meaning that there are 8 processing pipelines that operate in parallel); and SUPPORTED_LATENCY=4 (meaning that the input elements are processed in blocks of 4 (i.e., Y=4))). In the table below WR*i*[*j*] indicates the jth position of tensor storage unit *i;* IT*i*[*a*][*b*][*c*] means the element at H=*a*, W=*b* and C=*c* of input tensor *i* (e.g. ITA[0][0][0] means the element at (0,0,0) of input tensor A); IO*i*[*a*] means the 0^{th} output for instruction *i* (e.g. IO0[0] means the 0^{th} output for instruction 0); and "x" means do not care or undefined.

**Table 13**

| Cycle | Active Position No. | Instr. No. | Tensor Storage Unit for Result | Final Output? | Tensor Storage Unit 0 Output | Tensor Storage Unit 1 Output | Tensor Storage Unit 2 Output | Tensor Storage Unit 3 Output | ALU Out. Port | End of Set |
|---|---|---|---|---|---|---|---|---|---|---|
| 0 | 0 | 0 | 3 | 0 | WR0[0] =ITA [0][0][0] | WR1 [0] =ITB [0][0][0] | WR2[0] =ITC [0][0][0] | WR3[0] = X | 0 | 0 |
| 1 | 1 | 0 | 3 | 0 | WR0[1] =ITA [0][0][1] | WR1[1] =ITB [0][0][1] | WR2[1] =ITC [0][0][1] | WR3[1] = X | 0 | 0 |
| 2 | 2 | 0 | 3 | 0 | WR0[2] =ITA [0][0][2] | WR1 [2] =ITB [0][0][2] | WR2[2] =ITC [0][0][2] | WR3[2] = X | 0 | 0 |
| 3 | 3 | 0 | 3 | 0 | WR0[3] =ITA [0][0][3] | WR1 [3] =ITB [0][0][3] | WR2[3] =ITC [0][0][3] | WR3[3] = X | 0 | 1 |
| 4 | 0 | 1 | 1 | 0 | WR0[0] =ITA [0][0][0] | WR1 [0] =ITB [0][0][0] | WR2[0] =ITC [0][0][0] | WR3[0] = IO0[0] | 1 | 0 |
| 5 | 1 | 1 | 1 | 0 | WR0[1] =ITA [0][0][1] | WR1[1] =ITB [0][0][1] | WR2[1] =ITC [0][0][1] | WR3[1] = IO0[1] | 1 | 0 |
| 6 | 2 | 1 | 1 | 0 | WR0[2] =ITA [0][0][2] | WR1 [2] =ITB [0][0][2] | WR2[2] =ITC [0][0][2] | WR3[2] = IO0[2] | 1 | 0 |
| 7 | 3 | 1 | 1 | 0 | WR0[3] =ITA [0][0][3] | WR1[3] =ITB [0][0][3] | WR2[3] =ITC [0][0][3] | WR3[3] = IO0[3] | 1 | 1 |
| 8 | 0 | 2 | x | 1 | WR0[0] =ITA [0][0][0] | WR1[0] IO1[0] | WR2[0] =ITC [0][0][0] | WR3[0] = IO0[0] | x | 0 |
| 9 | 1 | 2 | x | 1 | WR0[1] =ITA [0][0][1] | WR1[1] = IO1[1] | WR2[1] =ITC [0][0][1] | WR3[1] = IO0[1] | x | 0 |
| 10 | 2 | 2 | x | 1 | WR0[2] =ITA [0][0][2] | WR1[2] = IO1[2] | WR2[2] =ITC [0][0][2] | WR3[2] = IO0[2] | X | 0 |
| 11 | 3 | 2 | x | 1 | WR0[3] =ITA [0][0][3] | WR1[3] IO1[3] | WR2[3] =ITC [0][0][3] | WR3[3] = IO0[3] | X | 1 |
| 12 | 4 | 0 | 3 | 0 | WR0[0] =ITA [0][0][4] | WR1[0] =ITB [0][0][4] | WR2[0] =ITC [0][0][4] | WR3[0] = X | 0 | 0 |
| 13 | 5 | 0 | 3 | 0 | WR0[1] =ITA [0][8][0] | WR1[1] =ITB [0][8][0] | WR2[1] =ITC [0][8][0] | WR3[1] = X | 0 | 0 |
| 14 | 6 | 0 | 3 | 0 | WR0[2] =ITA [0][8][1] | WR1[2] =ITB [0][8][1] | WR2[2] =ITC [0][8][1] | WR3[2] = X | 0 | 0 |

In this example, tensor storage units 0, 1 and 2 are initially loaded with the first four elements received for input tensors A, B and C respectively. In some cases, any tensor storage unit (e.g. tensor storage unit 3 in this example) which is not loaded with elements of an input tensor, may be initialised to zero. In this example, the elements of the input tensors are received at the elementwise operations hardware accelerator in blocks of 8, wherein each block is at the same H and C position, and after a block is received, the same elements at the next C position are received until there are no more C positions, then the set of elements at the next W positions are received, and then after going through all the W positions, the set of elements at the next H position are received. In this example the elements of each block are sent to/processed by different processing pipelines. For example, elements [0][0][0]-[0][7][0] of the input tensors may be received in a first cycle and then provided to different processing pipelines where they are stored in position 0 of the corresponding tensor storage unit; elements [0][0][1]-[0][7][1] of the input tensors may be received in a second cycle and then provided to different processing pipelines where they are stored in position 1 of the corresponding tensor storage unit; elements [0][0][2]-[0][7][2] of the input tensors may be received in a third cycle and then provided to different processing pipelines where they are stored in position 2 of the corresponding tensor storage unit; and elements [0][0][3]-[0][7][3] of the input tensors may be received in a fourth cycle and then provided to different processing pipelines where they are stored in position 3 of the corresponding tensor storage unit. Accordingly, positions 0, 1, 3 of storage units 0, 1 and 2 of the first processing pipeline are initially loaded with elements [0][0][0] to [0][0][3] of the corresponding input tensor.

The control module then initiates instruction 0 for the first four elements. Specifically, in processing cycle 0 the control module causes each tensor storage unit to output the elements in position 0 and causes the ALU module to perform instruction 0 thereon and store the results in position 0 of the tensor storage unit 3; in processing cycle 1 the control module causes each tensor storage unit to output the elements in position 1 and causes the ALU module to perform instruction 0 thereon and store the result in position 1 of tensor storage unit 3; in processing cycle 2 the control module causes each tensor storage unit to output the elements in position 2 and causes the ALU module to perform instruction 0 thereon and store the result in position 2 of tensor storage unit 3; in processing cycle 3 the control module causes each tensor storage unit to output the elements in position 3 and causes the ALU module to perform instruction 0 thereon and store the result in position 3 of tensor storage unit 3. Instruction 0 has now been initiated for each of the first four elements.

The control module then initiates instruction 1 for the outputs of instruction 0. If the latency of instruction 0 is less than or equal to 4 then at this point the output of the first instruction for the first element has been stored in position 0 of tensor storage unit 3. Thus in processing cycle 4 the control module causes each tensor storage unit to output the elements in position 0 and causes the ALU module to perform instruction 1 thereon and store the result in position 0 of tensor storage unit 1. In processing cycle 5 the control module causes each tensor storage unit to output the elements in position 1 and causes the ALU module to perform instruction 1 thereon and store the result in position 1 of tensor storage unit 1; in processing cycle 6 the control module causes each tensor storage unit to output the elements in position 2 and causes the ALU module to perform instruction 1 thereon and store the result in position 2 of tensor storage unit 1; in processing cycle 7 the control module causes each tensor storage unit to output the elements in position 3 and causes the ALU module to perform instruction 1 thereon and store the result in position 3 of tensor storage unit 1. Instruction 1 has now been initiated for each of the first four elements.

The control module then initiates instruction 2 for the outputs of instruction 1 which will generate elements of the final output tensor. If the latency of instruction 1 is less than or equal to 4 then at this point the output of the first instruction for the first element has been stored in position 0 of tensor storage unit 1. Then in processing cycles 8 to 11 the control module causes each tensor storage unit to output the elements in positions 0, 1, 2 and 3 respectively and causes the ALU module to perform instruction 2 thereon and output the result.

When the control module initiates instruction 2, the control module may also cause the next four elements of the input tensors to be stored in the corresponding tensor storage units. The next set of 8 elements of the input tensors that will be received at the elementwise operations hardware accelerator will be elements [0][0][4]-[0][7][4] of the input tensors. Since the input tensors only have five channels (0-4) and the last channel has been reached, the next set of 8 elements of the input tensors that will be received at the elementwise operations accelerator will be from the next 8 W positions of the first H position and the first channel C (i.e. elements [0][8][0]-[0][15][0] of the input tensors); the next set of elements of the input tensor will then be elements [0][8][1]-[0][15][1]; and the next set of element of the input tensors will be elements [0][8][1]-[0][15][1]. This will mean that the tensor storage units of the first processing pipeline will comprise elements [0][0][4], [0][8][0], [0][8][1] and [0][8][2] of the input tensors in positions 0, 1, 2 and 3 respectively.

The control module then initiates instruction 0 for each of the next four elements by causing each tensor storage unit to output positions 0,1, 2 and 3 in respective cycles while causing the ALU module to perform instruction 0 in each cycle. The control module then initiates instruction 1 for each output of instruction 0 in the same manner and so on.

Table 14 shows what the control module may cause to be output from each tensor storage unit of a single processing pipeline in each cycle for a second example set of commands that comprise three instructions (instructions 0, 1, 2), there are input tensors A, B and C, the elements of the first intermediate tensor (the results of instruction 0) are stored in the fourth tensor storage unit (tensor storage unit 3); the elements of the second intermediate tensor (the results of instruction 1) are stored in the second tensor storage unit (tensor storage unit 1); the input tensors have a size of H=10, W=16, C=9; CALC_BLOCKS=8 (meaning that there are 8 processing pipelines that operate in parallel); and SUPPORTED_LATENCY=8 (meaning that the input elements are processed in blocks of 8 (i.e., Y=8))). In the table below WR*i*[*j*] indicates the *j*th position of tensor storage unit *i;* IT*i*[*a*][*b*][*c*] means the element at H=*a*, W=*b* and C=*c* of input tensor *i* (e.g. ITA[0][0][0] means the element at (0,0,0) of input tensor A); IO*i*[*a*] means the 0^{th} output for instruction *i* (e.g. IO0[0] means the 0^{th} output for instruction 0); and "x" means do not care or undefined.

**Table 14**

| Cycle | Active Position No. | Instr. No. | Tensor Storage Unit for Result | Final Output? | Tensor Storage Unit 0 Output | Tensor Storage Unit 1 Output | Tensor Storage Unit 2 Output | Tensor Storage Unit 3 Output | ALU Out. Port | End of Set |
|---|---|---|---|---|---|---|---|---|---|---|
| 0 | 0 | 0 | 3 | 0 | WR0[0] =ITA [0][0][0] | WR1 [0] =ITB [0][0][0] | WR2[0] =ITC [0][0][0] | WR3[0] = x | 0 | 0 |
| 1 | 1 | 0 | 3 | 0 | WR0[1] =ITA [0][0][1] | WR1[1] =ITB [0][0][1] | WR2[1] =ITC [0][0][1] | WR3[1] = X | 0 | 0 |
| 2 | 2 | 0 | 3 | 0 | WR0[2] =ITA [0][0][2] | WR1 [2] =ITB [0][0][2] | WR2[2] =ITC [0][0][2] | WR3[2] = X | 0 | 0 |
| 3 | 3 | 0 | 3 | 0 | WR0[3] =ITA [0][0][3] | WR1 [3] =ITB [0][0][3] | WR2[3] =ITC [0][0][3] | WR3[3] = X | 0 | 0 |
| 4 | 4 | 0 | 3 | 0 | WR0[4] =ITA [0][0][4] | WR1 [4] =ITB [0][0][4] | WR2[4] =ITC [0][0][4] | WR3[4] = X | 0 | 0 |
| 5 | 5 | 0 | 3 | 0 | WR0[5] =ITA [0][0][5] | WR1 [5] =ITB [0][0][5] | WR2[5] =ITC [0][0][5] | WR3[5] = X | 0 | 0 |
| 6 | 6 | 0 | 3 | 0 | WR0[6] =ITA [0][0][6] | WR1 [6] =ITB [0][0][6] | WR2[6] =ITC [0][0][6] | WR3[6] = X | 0 | 0 |
| 7 | 7 | 0 | 3 | 0 | WR0[7] =ITA [0][0][7] | WR1 [7] =ITB [0][0][7] | WR2[7] =ITC [0][0][7] | WR3[7] = X | 0 | 1 |
| 8 | 0 | 1 | 1 | 0 | WR0[0] =ITA [0][0][0] | WR1 [0] =ITB [0][0][0] | WR2[0] =ITC [0][0][0] | WR3[0] = IO0[0] | 1 | 0 |
| 9 | 1 | 1 | 1 | 0 | WR0[1] =ITA [0][0][1] | WR1[1] =ITB [0][0][1] | WR2[1] =ITC [0][0][1] | WR3[1] = IO0[1] | 1 | 0 |
| 10 | 2 | 1 | 1 | 0 | WR0[2] =ITA [0][0][2] | WR1[2] =ITB [0][0][2] | WR2[2] =ITC [0][0][2] | WR3[2] = IO0[2] | 1 | 0 |
| 11 | 3 | 1 | 1 | 0 | WR0[3] =ITA [0][0][3] | WR1[3] =ITB [0][0][3] | WR2[3] =ITC [0][0][3] | WR3[3] = IO0[3] | 1 | 0 |
| 12 | 4 | 1 | 1 | 0 | WR0[4] =ITA [0][0][4] | WR1[4] =ITB [0][0][4] | WR2[4] =ITC [0][0][4] | WR3[4] = IO0[4] | 1 | 0 |
| 13 | 5 | 1 | 1 | 0 | WR0[5] =ITA [0][0][5] | WR1[5] =ITB [0][0][5] | WR2[5] =ITC [0][0][5] | WR3[5] = IO0[5] | 1 | 0 |
| 14 | 6 | 1 | 1 | 0 | WR0[6] =ITA [0][0][6] | WR1[6] =ITB [0][0][6] | WR2[6] =ITC [0][0][6] | WR3[6] = IO0[6] | 1 | 0 |
| 15 | 7 | 1 | 1 | 0 | WR0[7] =ITA [0][0][7] | WR1[7] =ITB [0][0][7] | WR2[7] =ITC [0][0][7] | WR3[7] = IO0[7] | 1 | 1 |
| 16 | 0 | 2 | x | 1 | WR0[0] =ITA [0][0][0] | WR1[0] = IO1[0] | WR2[0] =ITC [0][0][0] | WR3[0] = IO0[0] | x | 0 |
| 17 | 1 | 2 | x | 1 | WR0[1] =ITA [0][0][1] | WR1[1] = IO1[1] | WR2[1] =ITC [0][0][1] | WR3[1] = IO0[1] | x | 0 |
| 18 | 2 | 2 | x | 1 | WR0[2] =ITA [0][0][2] | WR1[2] = IO1[2] | WR2[2] =ITC [0][0][2] | WR3[2] = IO0[2] | x | 0 |
| 19 | 3 | 2 | x | 1 | WR0[3] =ITA [0][0][3] | WR1[3] = IO1[3] | WR2[3] =ITC [0][0][3] | WR3[3] = IO0[3] | x | 0 |
| 20 | 4 | 2 | x | 1 | WR0[4] =ITA [0][0][4] | WR1[4] = IO1[4] | WR2[4] =ITC [0][0][4] | WR3[4] = IO0[4] | x | 0 |
| 21 | 5 | 2 | x | 1 | WR0[5] =ITA [0][0][5] | WR1[5] = IO1[5] | WR2[5] =ITC [0][0][5] | WR3[5] = IO0[5] | x | 0 |
| 22 | 6 | 2 | x | 1 | WR0[6] =ITA [0][0][6] | WR1[6] = IO1[6] | WR2[6] =ITC [0][0][6] | WR3[6] = IO0[6] | x | 0 |
| 23 | 7 | 2 | x | 1 | WR0[7] =ITA [0][0][7] | WR1[7] = IO1[7] | WR2[7] =ITC [0][0][7] | WR3[7] = IO0[7] | x | 1 |
| 24 | 8 | 0 | 3 | 0 | WR0[0] =ITA [0][0][8] | WR1[0] =ITB [0][0][8] | WR2[0] =ITC [0][0][8] | WR3[0] = x | 0 | 0 |
| 25 | 9 | 0 | 3 | 0 | WR0[1] =ITA [0][8][0] | WR1[1] =ITB [0][8][0] | WR2[1] =ITC [0][8][0] | WR3[1] = x | 0 | 0 |
| 26 | 10 | 0 | 3 | 0 | WR0[2] =ITA [0][8][1] | WR1[2] =ITB [0][8][1] | WR2[2] =ITC [0][8][1] | WR3[2] = X | 0 | 0 |

It can be seen from Table 14 that the control module controls the output of the tensor storage units and the operation of the ALU module for this second example in the same manner as for the first example described above with respect to Table 13. The only differences are that SUPPORTED_LATENCY=8 in this example whereas SUPPORTED_LATENCY=4 in the first example; and the input tensors have different dimensions to the input tensors in the first example.

Table 15 shows what the control module may cause to be output from each tensor storage unit of a single processing pipeline in each cycle for a third example set of commands where each processing pipeline can only receive J-bits (e.g. 32 bits) but the elements of each input tensor are K-bits (e.g. 64 bits). As described above, this means that for each element the J-LSBs are received in a first cycle and J-MSBs are received in a second cycle. This also means that two positions of each tensor storage unit are used to store one element.

In this third example the set of commands comprise two instructions (instructions 0, 1), there are input tensors A, B and C, the elements of the first intermediate tensor (the results of instruction 0) are stored in the fourth tensor storage unit (tensor storage unit 3); the input tensors have a size of H=10, W=16, C=3; CALC_BLOCKS=8 (meaning that there are 8 processing pipelines that operate in parallel); and SUPPORTED_LATENCY=2 (meaning that the input elements are processed in blocks of 2 (i.e., Y=2, but this means cycling through 4 positions of the tensor storage units since each element uses two positions)). In the table below WR*i*[*j*] indicates the jth position of tensor storage unit *i;* IT*i*[*a*][*b*][*c*] means the element at H=*a*, W=*b* and C=*c* of input tensor *i* (e.g. ITA[0][0][0] means the element at (0,0,0) of input tensor A); IO*i*[*a*] means the 0^{th} output for instruction *i* (e.g. IO0[0] means the 0^{th} output for instruction 0); and "x" means do not care or undefined.

**Table 15**

| Cycle | Active Position No. | Instr. No. | Tensor Storage Unit for Result | Final Output? | Tensor Storage Unit 0 Output | Tensor Storage Unit 1 Output | Tensor Storage Unit 2 Output | Tensor Storage Unit 3 Output | ALU Out. Port | End of Set |
|---|---|---|---|---|---|---|---|---|---|---|
| 0 | 0 | 0 | 3 | 0 | WR0[0] =ITA [0][0][0] LSBs | WR1 [0] =ITB [0][0][0] LSBs | WR2[0] =ITC [0][0][0] LSBs | WR3[0] = X | 0 | 0 |
| 1 | 0 | 0 | 3 | 0 | WR0[1] =ITA [0][0][0] MSBs | WR1[1] =ITB [0][0][0] MSBs | WR2[1] =ITC [0][0][0] MSBs | WR3[1] = X | 0 | 0 |
| 2 | 1 | 0 | 3 | 0 | WR0[2] =ITA [0][0][1] LSBs | WR1[2] =ITB [0][0][1] LSBs | WR2[2] =ITC [0][0][1] LSBs | WR3[2] = X | 0 | 0 |
| 3 | 1 | 0 | 3 | 0 | WR0[3] =ITA [0][0][1] MSBs | WR1 [3] =ITB [0][0][1] MSBs | WR2[3] =ITC [0][0][1] MSBs | WR3[3] = X | 0 | 1 |
| 4 | 0 | 1 | x | 1 | WR0[0] =ITA [0][0][0] LSBs | WR1[0] =ITB [0][0][0] LSBs | WR2[0] =ITC [0][0][0] LSBs | WR3[0] IO0[0] LSBs | x | 0 |
| 5 | 0 | 1 | x | 1 | WR0[1] =ITA [0][0][0] MSBs | WR1[1] =ITB [0][0][0] MSBs | WR2[1] =ITC [0][0][0] MSBs | WR3[1] IO0[0] MSBs | x | 0 |
| 6 | 1 | 1 | x | 1 | WR0[2] =ITA [0][0][1] LSBs | WR1[2] =ITB [0][0][1] LSBs | WR2[2] =ITC [0][0][1] LSBs | WR3[2] IO0[1] LSBs | x | 0 |
| 7 | 1 | 1 | x | 1 | WR0[3] =ITA [0][0][1] MSBs | WR1[3] =ITB [0][0][1] MSBs | WR2[3] =ITC [0][0][1] MSBs | WR3[3] IO0[1] MSBs | x | 1 |
| 8 | 2 | 0 | 3 | 0 | WR0[0] =ITA [0][0][2] LSBs | WR1[0] =ITB [0][0][2] LSBs | WR2[0] =ITC [0][0][2] LSBs | WR3[0] = X | 0 | 0 |
| 9 | 2 | 0 | 3 | 0 | WR0[1] =ITA [0][0][2] MSBs | WR1[1] =ITB [0][0][2] MSBs | WR2[1] =ITC [0][0][2] MSBs | WR3[1] = X | 0 | 0 |
| 10 | 3 | 0 | 3 | 0 | WR0[2] =ITA [0][8][0] LSBs | WR1[2] =ITB [0][8][0] LSBs | WR2[2] =ITC [0][8][0] LSBs | WR3[2] = X | 0 | 0 |

In some cases, the storage unit 1402 may be sized to store two command streams of the maximum size so that the control module can receive the command stream for the next hardware pass of the elementwise operations accelerator while it is using another command stream for the current hardware pass of the elementwise operations accelerator.

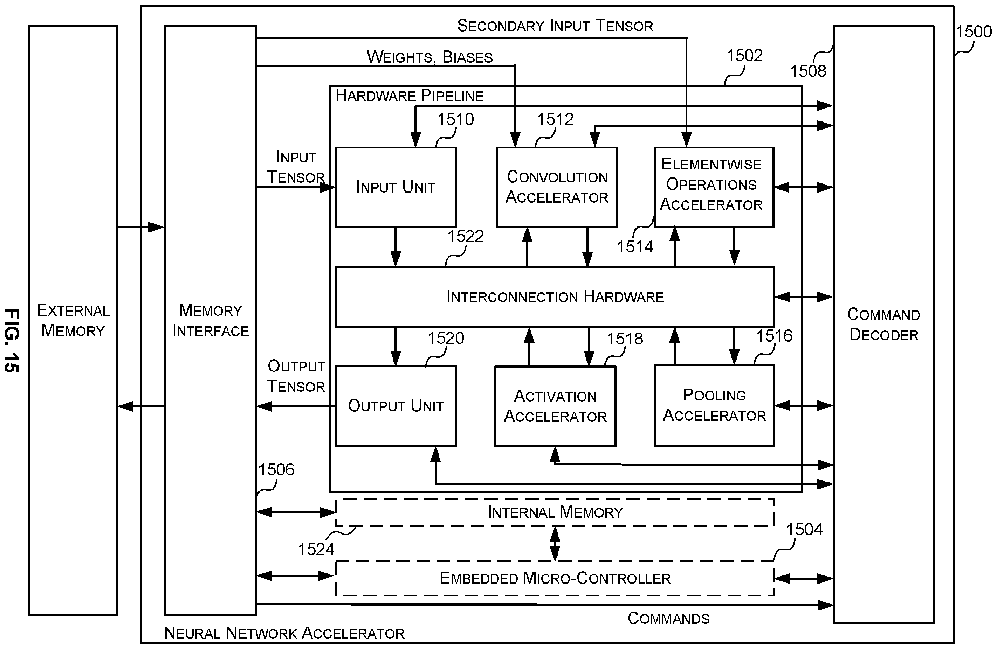

Reference is now made to FIG. 15 which illustrates an example neural network accelerator 1500 in which the elementwise operations accelerators described herein may be implemented.

The neural network accelerator 1500 comprises a hardware pipeline 1502, a memory interface 1506 and a command decoder 1508.

The hardware pipeline 1502 comprises an input unit 1510, a plurality of hardware accelerators 1512, 1514, 1516, 1518, an output unit 1520 and interconnection hardware 1522. The hardware pipeline 1502 is configured to receive input data (an input tensor), process the input data (input tensor) using one or more of the hardware accelerators 1512, 1514, 1516, 1518 to generate output data (an output tensor), and output the output data (output tensor). The input data (input tensor) may represent all or a portion of the input data to a layer of a neural network. The receiving of input data at the hardware pipeline 1502 and processing it using one or more hardware accelerators is referred to as a hardware pass of the hardware pipeline. It may take one or more hardware passes of the hardware pipeline to implement a neural network. For example, in a first hardware pass input data may be input to the hardware pipeline 1502 for processing in accordance with a convolution layer by the convolution accelerator 1512, and then the output of the first hardware pass may be input to the hardware pipeline 1502 in a second hardware pass and processed in accordance with a pooling layer by the pooling accelerator 1516. A neural network may be mapped to hardware passes of the hardware pipeline 1502 in any suitable manner.

The input unit 1510 is hardware configured to receive and store the input data to the hardware pipeline 1502. The input data may be received from external memory (i.e., memory external to the NNA 1500) via the memory interface 1506. In some examples, the input unit 1510 may comprise one or more buffers to store the received input data. Although the example hardware pipeline 1502 of FIG. 15 comprises a single input unit 1510, other example hardware pipelines may comprise multiple input units. The term "input data to the hardware pipeline" is used herein to mean the input data to be processed by one or more hardware accelerators (which may or may not be equivalent to the input data to a layer of a neural network) and may be distinguished from other parameters used in a neural network such as weights, biases, etc. In some cases, the other input parameters may be input to the hardware pipeline in another manner (e.g. loaded into an internal or external storage unit associated with a specific accelerator). For example, the weights and biases for a convolution layer may be loaded into a buffer linked to, or forming part of, the convolution accelerator 1512.

Each accelerator 1512, 1514, 1516, 1518, is designed to accelerate one or more neural network operations. Specifically, each accelerator 1512, 1514, 1516, 1518 is configured to receive an input tensor and perform, via hardware logic, one or more operations on the input tensor to generate an output tensor. The hardware pipeline 1502 of FIG. 15 comprises a convolution accelerator 1512, an elementwise operations accelerator 1514, a pooling accelerator 1516 and an activation accelerator 1518. However, this is just an example set of accelerators and that other hardware pipelines may have additional accelerators, fewer accelerators and/or different accelerators depending, for example, on the type of neural networks they are intended to process. In some cases, one or more of the accelerators of FIG. 15 may be combined.

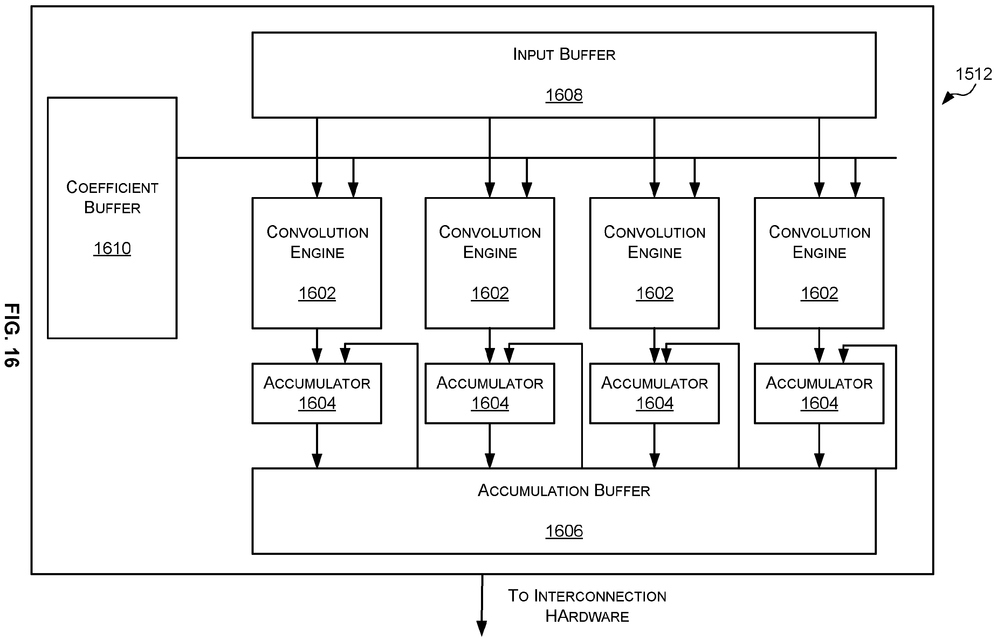

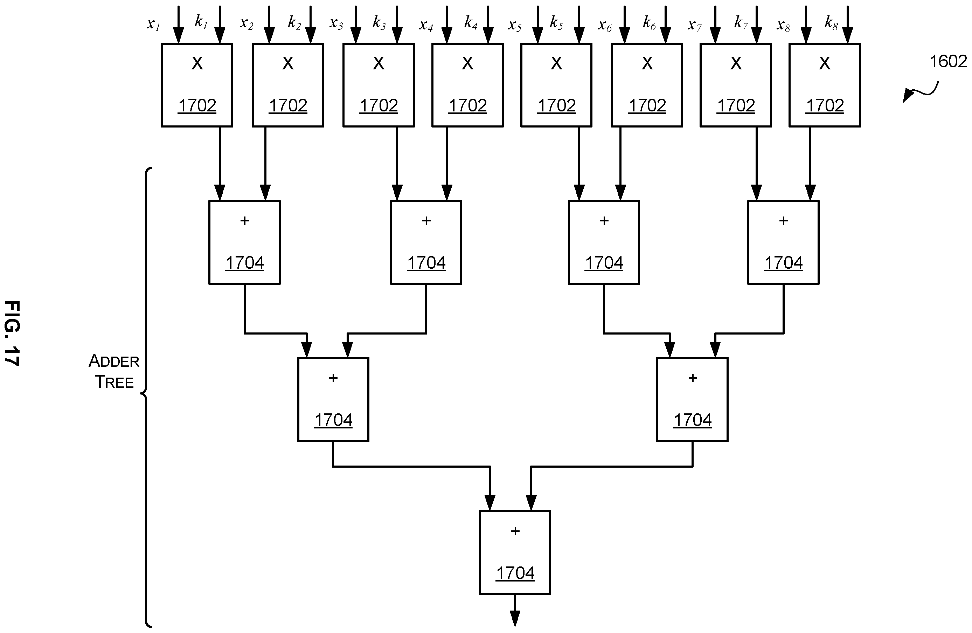

The convolution accelerator 1512 is hardware configured to accelerate convolution operations. An example implementation of a convolution accelerator 1512 is described with respect to FIGS. 16 and 17.

The elementwise operations accelerator 1514 may take the form of any of the elementwise operations accelerators described herein (e.g. elementwise operations accelerators 300, 1000 of FIGS. 3, 10 or any combination thereof).

The pooling accelerator 1516 is hardware configured to accelerate pooling operations such as, but not limited to, max, min and average.

The activation accelerator 1518 is hardware configured to accelerate non-linear operations such as, but not limited to, ReLU and LReLU.

The output unit 1520 is hardware configured to receive the output tensor generated by processing the input data via one or more accelerators 1512, 1514, 1516, 1518. In some cases, the output unit 1520 may have a buffer or other storage for temporarily storing all or a portion the output tensor prior to outputting the output tensor from the hardware pipeline. In some cases, the output unit 1520 may be configured to save the output tensor in external memory (i.e., memory that is external to the neural network accelerator) via the memory interface 1506.

The interconnection hardware 1522 statically or dynamically connects the input unit 1510, one or more accelerators 1512, 1514, 1516, 1518 and the output unit 1520 to allow input data to the neural network accelerator to flow through (e.g. be processed by) one or more accelerators 1512, 1514, 1516, 1518 and then be output from the hardware pipeline 1502. In some cases, the interconnection hardware 1522 may comprise fixed hardware connections between the input unit 1510, the accelerators 1512, 1514, 1516, 1518 and the output unit 1520 that allow data to flow through the input unit 1510, the accelerators 1512, 1514, 1516, 1518 and the output unit 1520 in a limited number of ways. However, in other cases, the interconnection hardware 1522 may comprises hardware that can dynamically connect the input unit 1510, the accelerators 1512, 1514, 1516, 1518 and the output unit 1520 in a plurality of different ways in response to one or more control signals. For example, the interconnection hardware 1522 may comprise a crossbar and the input unit 1510, the accelerators 1512, 1514, 1516, 1518 and the output unit 1520 may be connected to the crossbar in such a manner that the crossbar can dynamically connect the input unit 1510, the accelerators 1512, 1514, 1516, 1518 and the output unit 1520 in a plurality of different ways in response to one or more control signals.

For example, in one hardware pass of the hardware pipeline 1502 the crossbar may connect the output of the input unit 1510 to the input of the convolution accelerator 1512, connect the output of the convolution accelerator 1512 to the input of the elementwise operations accelerator 1514, and then connect the output of the elementwise operations accelerator 1514 to the input of the output unit 1520 so that the input data for the hardware pass is processed by the convolution accelerator 1512 then the elementwise operations accelerator 1514. In another hardware pass, the crossbar may connect the output of the input unit 1510 to the input of the convolution accelerator 1512, and the output of the convolution accelerator 1512 to the input of the output unit 1520 so that the input data for the hardware pass is processed only by the convolution accelerator 1512. Accordingly, in these cases the connections between the input unit 1510, the accelerators 1512, 1514, 1516, 1518 and the output unit 1520 (and thus the way data may flow through the input unit 1510, the accelerators 1512, 1514, 1516, 1518 and the output unit 1520) are not fixed or static.

In some cases, the NNA may also include an embedded micro-controller. The embedded micro-controller 1504 can execute instructions of a program to perform operations on data input to the embedded micro-controller 1504. The embedded micro-controller 1504 may be able to receive data from external memory via the memory interface 1506 or from internal memory 1524 that the embedded micro-controller has access to. The output unit 1520 may be able to send data to the embedded micro-controller 1504 via the internal memory 1524.

The command decoder 1508 controls the operation of the other components of the NNA 1500. Specifically the command decoder receives a set of commands indicating which data is to be input to the NNA and which components are to process the NNA and how, and then sends command or control information to the appropriate components so that the input data will be processed using the desired components in the desired manner. For example, the command decoder 1508 may, for each hardware pass of the hardware pipeline 1502, (i) send command or control information to the interconnection hardware 1522 indicating which accelerators are to be active or used in the hardware pass which causes the interconnection hardware 1522 to connect the input unit 1510, the accelerators 1512, 1514, 1516, 1518 and the output unit 1520 in the desired manner, and (ii) send information to each active accelerator indicating that it is to be active in the hardware pass and how it should be configured in that hardware pass which causes the accelerator to perform a desired operation on the data input to that accelerator. The command or control information may also indicate other information such as the formats of the input and data of the active accelerators. Where the embedded micro-controller 1504 is to be used to process data the command decoder 1508 may be configured to cause the micro-controller to execute a program of a plurality of programs.

Reference is now made to FIG. 16 which illustrates an example implementation of the convolution accelerator 1512 of FIG. 15. In this example, the convolution accelerator 1512 comprises a plurality of convolution engines 1602, a plurality of accumulators 1604 and an accumulation buffer 1606.

Each convolution engine 1602 comprises hardware logic configured to receive a set of weights {k₁, k₂ ..., ks} that represent all or a portion of a filter, and a set of input data values {x₁, x₂, ..., xa} that represent all or a portion of a window of the input data, and perform a multiply-accumulate calculation on the received weights and input data values. In some examples, as shown in FIG. 17, each convolution engine 1602 may comprise a plurality of multipliers 1702, each of which is configured to multiply a weight (kᵢ) and a corresponding input data value (xᵢ) to produce a multiplication output value. The multipliers 1702 are followed by a plurality of adders 1704. The adders may form an adder tree to calculate the sum of the multiplication outputs. In the example of FIG. 17 the convolution engine 1602 comprises eight multipliers 1702, but in other examples there may be more or fewer multipliers. For example, in some cases there may be 128 multipliers. Generally, if there are Z multipliers, the adder tree comprises Z-1 adders. The example convolution accelerator 1512 of FIG. 16 comprises four convolution engines 1602, however, it will be evident to a person of skill in the art that this is an example only and there may be only one convolution engine, there may be two convolution engines, or there may be more than two convolution engines.

Since it may take more than one hardware pass of the convolution engines 1602 to generate a complete filter result (e.g. because a convolution engine may only receive and process a portion of the weights of a filter and/or a portion of the input data values of a window in a cycle), the convolution accelerator 1512 may comprise a plurality of accumulators 1604. A pass of the convolution engines comprises receiving a set of weights and a set of input data values and performing a multiply-accumulate operation thereon. Each accumulator 1604 receives the output of one convolution engine 1602 and adds the output to previous convolution engine outputs that relate to the same filter. Since a convolution engine 1602 may not generate or produce outputs that relate to the same filter in consecutive cycles the partial results of one or more filters may be stored in an accumulation buffer 1606 and then the appropriate partial results may be provided to the accumulators 1604 each cycle by the accumulation buffer 1606.

In some cases, the convolution accelerator 1512 may comprise or have access to an input buffer 1608 for storing the elements of the input tensor and a coefficient buffer 1610 for storing the weights of the convolution. In some cases the input buffer 1608 may be implemented as a plurality of banks of memory. In these cases, there may be a multiplexer (not shown) for each convolution engine 1602 that is coupled to each bank of the input buffer 1608 to allow the data stored in any of the banks to be selectively directed to any of the convolution engines 1602.

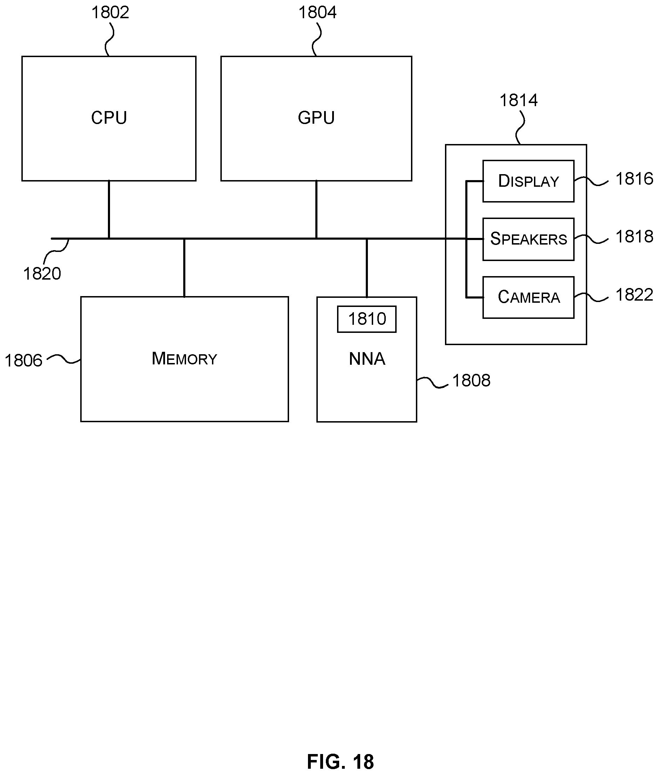

FIG. 18 shows a computer system in which the elementwise operations hardware accelerators and neural network accelerators described herein may be implemented. The computer system comprises a CPU 1802, a GPU 1804, a memory 1806, a neural network accelerator (NNA) 1808 and other devices 1814, such as a display 1816, speakers 1818 and a camera 1822. An elementwise operations accelerator 1810 (which may be implemented as any of the elementwise operations accelerators described herein) is implemented on the NNA 1808. In other examples, one or more of the depicted components may be omitted from the system. In other examples the elementwise operations accelerator 1810 may be implemented within the GPU 1804 such that the GPU 1804 is an NNA. The components of the computer system can communicate with each other via a communications bus 1820.

The elementwise operations accelerators 300, 1000, neural network accelerators 1500, convolution accelerators 1512 and convolution engines 1602 of FIG. 3, 10, 15, 16 and 17 are shown as comprising a number of functional blocks. This is schematic only and is not intended to define a strict division between different logic elements of such entities. Each functional block may be provided in any suitable manner. It is to be understood that intermediate values described herein as being formed by an elementwise operations hardware accelerator, neural network accelerator, convolution accelerator or convolution engine need not be physically generated by the elementwise operations hardware accelerator, neural network accelerator, convolution accelerator or convolution engine at any point and may merely represent logical values which conveniently describe the processing performed by the elementwise operations hardware accelerator, neural network accelerator, convolution accelerator or convolution engine between its input and output.

The elementwise operations hardware accelerators, neural network accelerators, convolution accelerators and convolution engines described herein may be embodied in hardware on an integrated circuit. The elementwise operations hardware accelerators, neural network accelerators, convolution accelerators and convolution engines described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a device configured to perform any of the methods described herein, or to manufacture a device comprising any apparatus described herein. An integrated circuit definition dataset may be, for example, an integrated circuit description.

Therefore, there may be provided a method of manufacturing, at an integrated circuit manufacturing system, an elementwise operations hardware accelerator, neural network accelerator, convolution accelerator or convolution engine as described herein. Furthermore, there may be provided an integrated circuit definition dataset that, when processed in an integrated circuit manufacturing system, causes the method of manufacturing an elementwise operations hardware accelerator, neural network accelerator, convolution accelerator or convolution engine to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

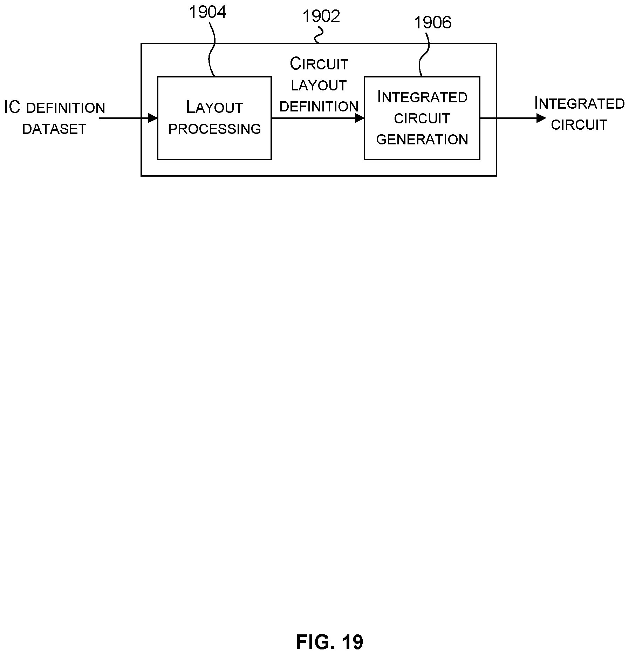

An example of processing an integrated circuit definition dataset at an integrated circuit manufacturing system so as to configure the system to manufacture an elementwise operations hardware accelerator, neural network accelerator, convolution accelerator or convolution engine will now be described with respect to FIG. 19.

FIG. 19 shows an example of an integrated circuit (IC) manufacturing system 1902 which is configured to manufacture an elementwise operations hardware accelerator, neural network accelerator, convolution accelerator or convolution engine as described in any of the examples herein. In particular, the IC manufacturing system 1902 comprises a layout processing system 1904 and an integrated circuit generation system 1906. The IC manufacturing system 1902 is configured to receive an IC definition dataset (e.g. defining an elementwise operations hardware accelerator, neural network accelerator, convolution accelerator or convolution engine as described in any of the examples herein), process the IC definition dataset, and generate an IC according to the IC definition dataset (e.g. which embodies an elementwise operations hardware accelerator, neural network accelerator, convolution accelerator or convolution engine as described in any of the examples herein). The processing of the IC definition dataset configures the IC manufacturing system 1902 to manufacture an integrated circuit embodying an elementwise operations hardware accelerator, neural network accelerator, convolution accelerator or convolution engine as described in any of the examples herein.

The layout processing system 1904 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1904 has determined the circuit layout it may output a circuit layout definition to the IC generation system 1906. A circuit layout definition may be, for example, a circuit layout description.

The IC generation system 1906 generates an IC according to the circuit layout definition, as is known in the art. For example, the IC generation system 1906 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1906 may be in the form of computer-readable code which the IC generation system 1906 can use to form a suitable mask for use in generating an IC.

The different processes performed by the IC manufacturing system 1902 may be implemented all in one location, e.g. by one party. Alternatively, the IC manufacturing system 1902 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture an elementwise operations hardware accelerator, neural network accelerator, convolution accelerator or convolution engine without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to FIG. 19 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in FIG. 19, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

Further examples are now provided by way of clauses.

Clause 1. An elementwise operations hardware accelerator 1000 for use in a neural network accelerator, the elementwise operations hardware accelerator 1000 comprising: one or more processing pipelines 1002, each processing pipeline 1002 comprising: an arithmetic logic unit module 1008 comprising one or more arithmetic logic unit blocks 1014, 1016, each arithmetic logic unit block 1014, 1016 of the one or more arithmetic logic unit blocks 1014, 1016 configured to receive one or more inputs, perform one or more elementwise operations on the one or more inputs, and output a result of the one or more elementwise operations, the result forming an element of one of an intermediate tensor and a final tensor; an interconnection module 1010 comprising a plurality of tensor storage units 1202, 1204, 1206, 1208 and interconnection logic 1218, 1220, 1222, 1224, 1226, the interconnection logic 1218, 1220, 1222, 1224, 1226 configured to receive elements of one or more tensors and store the elements of each of the one or more tensors in a tensor storage unit of the plurality of tensor store units and provide each stored element to a selectable arithmetic logic unit block of the one or more arithmetic logic unit blocks as an input, the one or more tensors comprising one or more input tensors and each intermediate tensor; a control module 1004 configured to receive a set of commands comprising one or more instructions that identify a set of one or more elementwise operations, and cause the one or more processing pipelines 1002 to sequentially perform each identified set of one or more elementwise operations on a main input tensor of the one or more input tensors.

Cause 2. The elementwise operations hardware accelerator 1000 of clause 1, wherein each tensor storage unit 1202, 1204, 1206, 1208 is sized to store Y elements at a same time, wherein Y is an integer greater than one, and when the set of commands comprise a plurality of instructions, the control module 1004 is configured to cause each of the one or more processing pipelines 1002 to perform each identified set of one or more elementwise operations on a set of Y elements of the main input tensor prior to performing each set of one or more elementwise operations on a next set of Y elements of the main input tensor.

Clause 3. The elementwise operations hardware accelerator 1000 of clause 2, wherein the control module 1004 is configured to cause each of the one or more processing pipelines 1002 to perform each identified set of one or more elementwise operations on a set of Y elements of the main input tensor by causing each of the one or more processing pipelines 1002 to perform a first identified set of one or more elementwise operations on each element in the set of Y elements of the main input tensor to generate a set of Y elements of an intermediate tensor prior to causing each of the one or more processing pipelines 1002 to perform a next identified set of one or more elementwise operations on each element in the set of Y elements of the intermediate tensor.

Clause 4. The elementwise operations hardware accelerator 1000 of clause 2 or clause 3, wherein each tensor storage unit 1202, 1204, 1206, 1208 is sub-divided into a plurality of portions for storing Y elements and the control module 1004 is configured to cause the interconnection module 1010 to store the received elements of a tensor in the plurality of portions of one tensor storage unit in a round-robin manner.

Clause 5. The elementwise operations hardware accelerator 1000 of clause 4, wherein each portion is configured to store J-bits of an element of a tensor and when each element is J-bits one element in stored in each tensor, and when each element is K-bits one element is stored across two portions, wherein J and K are integers and K=2*J.

Clause 6. The elementwise operations hardware accelerator 1000 of clause 3, wherein the control module 1004 is configured to only cause each of the one or more processing pipelines to perform the next identified set of one or more elementwise operation on a first element of the intermediate tensor if the first element of the intermediate tensor has been generated by the arithmetic logic unit module 1008.

Clause 7. The elementwise operations hardware accelerator 1000 of any of clauses 2 to 5, wherein the control module 1004 is configured to decode each instruction for each set of Y elements of the main input tensor.

Clause 8. The elementwise operations hardware accelerator 1000 of any of clauses 1 to 7, wherein each of the one or more tensors is associated with one of the plurality of tensor storage units and the control module 1004 is configured to cause the interconnection module 1010 to store the elements of a tensor in the associated tensor storage unit.

Clause 9. The elementwise operations hardware accelerator 1000 of clause 8, wherein the storage unit associated with each intermediate tensor is identified in the set of commands.

Clause 10. The elementwise operations hardware accelerator 1000 of any of clauses 1 to 9, wherein each processing pipeline 1002 comprises at least one feedback path between the arithmetic logic unit module 1008 and the interconnection module 1010 and the elements of an intermediate tensor generated by the arithmetic logic unit module 1008 are provided to the interconnection module 1010 via one of the at least one feedback path.

Clause 11. The elementwise operations hardware accelerator 1000 of any of clauses 1 to 10, wherein each processing pipeline 1002 comprises a first feedback path and a second feedback path between the arithmetic logic unit module 1008, and the control module 1004 is configured to cause the arithmetic logic unit module 1008 to provide the elements of consecutive intermediate tensors via different feedback paths.

Clause 12. The elementwise operations hardware accelerator 1000 of any of clauses 1 to 11, wherein each processing pipeline 1002 further comprises an input module 1006, 400 that includes an input pipeline 402 for each of one or more input tensors, and each input pipeline 402 is configured to selectively perform one or more pre-processing operations on the elements of the corresponding input tensor prior to providing the elements of the input tensor to the interconnection module 1010.

Clause 13. The elementwise operations hardware accelerator 1000 of any of clauses 1 to 12, wherein the control module 1004 is configured to cause the element of the final tensor to be output from the elementwise operations hardware accelerator 1000.

Clause 14. The elementwise operations hardware accelerator 1000 of any of clauses 1 to 13, wherein each processing pipeline further comprises an output module 1012, 600 that includes an output pipeline 602 configured to selectively perform one or more post-processing operations on the elements of the final tensor prior to outputting the elements of the final tensor from the elementwise operations hardware accelerator 1000.

Clause 15. The elementwise operations hardware accelerator 1000 of any of clauses 1 to 14, wherein the elementwise operations hardware accelerator 1000 comprises a plurality of processing pipelines 1002.

Clause 16. The elementwise operations hardware accelerator 1000 of any of clauses 1 to 15, wherein the interconnection module 1010, 1200 comprises X+1 tensor storage units, where X is a number of input tensors.

Clause 17. The elementwise operations hardware accelerator 1000 of any of clauses 1 to 16, wherein the elementwise operations hardware accelerator 1000 is embodied in hardware on an integrated circuit.

Clause 18. A neural network accelerator 1500 comprising the elementwise operations hardware accelerator 1000 of any of clauses 1 to 17.

Clause 19. A method of manufacturing, using an integrated circuit manufacturing system, the elementwise operations hardware accelerator 1000 of any of clauses 1 to 17 or the neural network accelerator 1500 of clause 18.

Clause 20. An integrated circuit definition dataset that, when processed in an integrated circuit manufacturing system, configures the integrated circuit manufacturing system to manufacture the elementwise operations hardware accelerator 1000 of any of clauses 1 to 17 or the neural network accelerator 1500 of clause 18.

Clause 21. A computer readable storage medium having stored thereon a computer readable description of the elementwise operations hardware accelerator of any of clauses 1 to 17 or the neural network accelerator of clause 18 that, when processed in an integrated circuit manufacturing system, causes the integrated circuit manufacturing system to manufacture an integrated circuit embodying the elementwise operations hardware accelerator 1000 or the neural network accelerator 1500.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. An elementwise operations hardware accelerator (300) for use in a neural network accelerator, the elementwise operations hardware accelerator (300) comprising:
one or more processing pipelines (302), each processing pipeline (302) comprising:
an arithmetic logic unit module (308, 500) comprising a plurality of different arithmetic logic unit blocks (314, 316), each arithmetic logic unit block (314, 316) of the plurality of arithmetic logic unit blocks (314, 316) configured to receive one or more inputs, selectively perform one or more elementwise operations on the one or more inputs, and output a result of the one or more elementwise operations; and
an interconnection module (310, 700) configured to receive elements of one or more input tensors and selectively provide the elements of at least one of the one or more input tensors to an arithmetic logic unit block (314, 316) of the plurality of arithmetic logic unit blocks (314, 316) as an input;
a control module (304) configured to receive a set of commands identifying an arithmetic logic unit block (314, 316) of the plurality of arithmetic logic unit blocks (314, 316) and one or more elementwise operations to be performed by the identified arithmetic logic unit block and control the operation of the one or more processing pipelines (302) to cause the identified arithmetic logic unit block (314, 316) to perform the identified one or more elementwise operations.

2. The elementwise operations hardware accelerator (300) of claim 1, wherein the plurality of arithmetic logic unit blocks comprises a bitwise arithmetic logic unit block (502) configured to receive a first input and a second input and selectively perform a bitwise operation of one or more bitwise operations on one of (i) the first input, and (ii) the first input and the second input.

3. The elementwise operations hardware accelerator (300) of claim 2, wherein the one or more bitwise operations comprise one or more of: OR, NOT, AND, and XOR.

4. The elementwise operations hardware accelerator (300) of any preceding claim, wherein the plurality of arithmetic logic unit blocks comprises a format conversion arithmetic logic unit block (506) that is configured to receive an input in a first number format and convert that input to a second number format.

5. The elementwise operations hardware accelerator (300) of claim 4, wherein the first number format is one of a fixed point number format and a floating point number format and the second number format is the other of the fixed point number format and the floating point number format.

6. The elementwise operations hardware accelerator (300) of any preceding claim, wherein the plurality of arithmetic logic unit blocks comprises a division, square root, modulo arithmetic logic unit block (508) that is configured to receive a first input and a second input and selectively determine a result of one of: the first input divided by the second input, a square root of the first input, and the first input modulo the second input.

7. The elementwise operations hardware accelerator (300) of any preceding claim, wherein the plurality of arithmetic logic unit blocks comprises a floating point multiply arithmetic logic unit block (512) that is configured to receive a first floating point input and a second floating point input and generate a product of the first floating point input and the second floating point input.

8. The elementwise operations hardware accelerator (300) of any preceding claim, wherein the plurality of arithmetic logic unit blocks comprises a select-compare arithmetic logic unit block (514) that is configured to receive a first input, a second input, a third input, and a fourth input and compare the first input and second input using one of one or more comparison operators, and output one of the third input and the fourth input based on the comparison, wherein the one or more comparison operators comprise one or more of: equal to, greater than, greater than or equal to, less than, and less than or equal to, and wherein the one or more comparison operators comprise equal to and the select-compare arithmetic logic unit block (514) is configured to receive a fifth input and, prior to comparing the first input and the second input using the equal to comparison operator, perform (i) an AND operation between the first input and the fifth input and (ii) an AND operation between the second input and the fifth input.

9. The elementwise operations hardware accelerator (300) of any preceding claim, wherein the plurality of arithmetic logic unit blocks comprises a floating point add arithmetic logic unit block (510) that is configured to receive a first floating point input and a second floating point input and generate a sum of the first floating point input and the second floating point input.

10. The elementwise operations hardware accelerator (300) of any preceding claim, wherein the plurality of arithmetic logic unit blocks comprises a fixed point multiply-add arithmetic logic unit block (504) that is configured to receive a first input, a second input, and a third input and generate a sum of (i) a product of the first input and the second input, and (ii) the third input.

11. The elementwise operations hardware accelerator (300) of any preceding claim, wherein the interconnection module (310, 700) is configured to dynamically connect an input source of a plurality of input sources to each input of a desired arithmetic logic unit block, the plurality of input sources comprising the one or more input tensors, one or more scalars, and one or more default values, wherein the one or more scalars are identified in the set of commands.

12. The elementwise operations hardware accelerator (300) of any preceding claim, wherein the one or more input tensors comprises at least three input tensors.

13. The elementwise operations hardware accelerator (300) of any preceding claim, wherein each processing pipeline further comprises an input module (306, 400) that includes an input pipeline (402) for each of the one or more input tensors, and each input pipeline is configured to selectively perform one or more pre-processing operations on the elements of the corresponding input tensor prior to providing the elements of the input tensor to the interconnection module (310, 700), wherein the one or more pre-processing operations comprise one or more of: conversion from a first fixed point number format to a second fixed point number format; negation; addition of a configurable offset; and broadcasting elements of the input tensor in one or more dimensions.

14. The elementwise operations hardware accelerator (300) of any preceding claim, wherein each processing pipeline further comprises an output module (312, 600) that includes an output pipeline (602) configured to selectively perform one or more post-processing operations on the results output by the arithmetic logic unit module (308, 500), wherein the one or more post-processing operations comprises one or more of: conversion from a first fixed point number format to a second fixed point number format, negation, and clamping to a configurable bit depth.

15. An integrated circuit definition dataset that, when processed in an integrated circuit manufacturing system, configures the integrated circuit manufacturing system to manufacture the elementwise operations hardware accelerator (300) of any of claims 1 to 14.
